# EUROPEAN PATENT APPLICATION

(11) **EP 3 739 899 A1**
(43) Date of publication of application: **18.11.2020**
(21) Application number: 18899532.8
(22) Date of filing: 28.12.2018
(51) Int. Cl.: H04N 21/845, H04N 21/235, H04N 21/266, H04N 21/218, H04N 21/2343, H04N 21/262, H04N 21/462, H04N 21/4728, H04N 21/61, H04N 21/81

(54) **INFORMATION PROCESSING DEVICE AND METHOD**

(30) Priority: 12.01.2018 JP 2018003727
(71) Applicant: Sony Corporation, 108-0075 Tokyo (JP)
(72) Inventor: TAKAHASHI, Ryohei, Tokyo 108-0075 (JP); HIRABAYASHI, Mitsuhiro, Tokyo 108-0075 (JP); IZUMI, Nobuaki, Tokyo 108-0075 (JP)
(74) Representative: D Young & Co LLP
(86) International application number: PCT/JP2018/048422
(87) International publication number: WO 2019/138927

(57) **Abstract**

The present disclosure relates to an information processing apparatus and a method capable of more easily providing a higher-quality image while reducing a drop of encoding efficiency.

Generated is a file which includes information associated with projection extension as an extension method of a projection system for mapping, on a single plane, a three-dimensional structure image as an image projected on a three-dimensional structure. For example, the present disclosure is applicable to an information processing apparatus, an image processing apparatus, an image encoding apparatus, a file generation apparatus, a file transmission apparatus, a distribution apparatus, a file reception apparatus, an image decoding apparatus, a reproduction apparatus, or the like.

## Description

### [Technical Field]

The present disclosure relates to an information processing apparatus and a method, and particularly to an information processing apparatus and a method capable of more easily providing a higher-quality image while reducing a drop of encoding efficiency.

### [Background Art]

Conventionally, there has been MPEG-DASH (Moving Picture Experts Group - Dynamic Adaptive Streaming over HTTP (Hypertext Transfer Protocol)) as a standardized specification of an adaptive content distribution technology according to the HTTP protocol (for example, see NPL 1).

In addition, as a file format of such MPEG-DASH, there has been ISOBMFF (International Organization for Standardization Base Media File Format) which is a file container specification of an international standard technology for moving image compression "MPEG-4 (Moving Picture Experts Group - 4)" (for example, see NPL 2).

Meanwhile, there has been an omnidirectional image (also referred to as a projection planar image), such as what is called an omnidirectional video, produced by mapping, on a planar image, a three-dimensional structure image which is an image 360-degree-surround in the horizontal direction and 180-degree-surround in the vertical direction and is projected on a three-dimensional structure. In recent years, the use of MPEG-DASH for distribution of the three-dimensional structure image has been considered. For example, MPEG-DASH is applicable to the three-dimensional structure image by mapping the three-dimensional structure image on a single plane, and distributing the three-dimensional structure image as a projection planar image produced by mapping the three-dimensional structure image on the plane (for example, see NPL 3).

There are two methods adopted as such projection system (also referred to as a projection format), i.e., ERP (Equirectangular projection) and CMP (Cubemap projection), in MPEG-I Part 2 Omnidirectional Media Format (ISO/IEC 23090-2) FDIS (Final Draft International Standards) (hereinafter also referred to as OMAF) described in NPL 3.

### [Citation List]

### [Non Patent Literature]

[NPL 1] "Information technology. Dynamic adaptive streaming over HTTP (DASH). Part 1: Media presentation description and segment formats, AMENDMENT 4: Segment Independent SAP Signalling (SISSI), MPD chaining, MPD reset and other extensions," ISO/IEC 23009-1:2014/PDAM 4, ISO/IEC JTC 1/SC 29/WG 11, 2015-10-23
[NPL 2] "Information technology - Coding of audio-visual objects - Part 12: ISO base media file format," ISO/IEC 14496-12, 2005-10-01
[NPL 3] "Information technology - Coded representation of immersive media (MPEG-I) - Part 2: Omnidirectional media format," ISO/IEC FDIS 23090-12:201x(E), ISO/IEC JTC 1/SC 29/WG 11, 2017-12-11

### [Summary]

### [Technical Problem]

However, each of the foregoing projection systems does not particularly have a mechanism for improving image quality, and therefore is not considered as an excellent projection format in view of image quality. For example, an image quality increase in a particular direction (also referred to as a viewport dependent image quality increase) in an omnidirectional video has been considered in recent omnidirectional video distribution to optimize a user experience by effective utilization of a bandwidth. However, the foregoing projection formats do not meet the viewport dependent image quality increase.

Accordingly, when an image quality increase is attempted, the image quality of the entire projection planar image needs to be increased. In such a case, a bandwidth may be compressed. Moreover, in a case where an image quality increase with reduction of a drop of encoding efficiency is attempted to optimize a user experience by effective utilization of a bandwidth, a new projection format having a viewport dependent characteristic described above needs to be adopted. However, adoption of such type of projection format may have a considerable effect on an authoring workflow or client implementation. Accordingly, such type of projection format is difficult to introduce into the market, and thus difficult to practically use.

The present disclosure has been developed in consideration of the aforementioned circumstances, and more easily provides a higher-quality image while reducing a drop of encoding efficiency.

### [Solution to Problem]

An information processing apparatus according to an aspect of the present technology is directed to an information processing apparatus including a file generation unit that generates a file that includes information associated with projection extension as an extension method of a projection system for mapping, on a single plane, a three-dimensional structure image as an image projected on a three-dimensional structure.

An information processing method according to an aspect of the present technology is directed to an information processing method generating a file that includes information associated with projection extension as an extension method of a projection system for mapping, on a single plane, a three-dimensional structure image as an image projected on a three-dimensional structure.

An information processing apparatus according to another aspect of the present technology is directed to an information processing apparatus including a file generation unit that generates a file that includes information associated with image quality of a projection planar image produced by mapping, on a single plane, a three-dimensional structure image using a projection system to which projection extension is applied, the projection extension corresponding to projection extension as an extension method of a projection system for mapping, on the plane, the three-dimensional structure image as an image projected on a three-dimensional structure.

An information processing method according to another aspect of the present technology is directed to an information processing method generating a file that includes information associated with image quality of a projection planar image produced by mapping, on a single plane, a three-dimensional structure image using a projection system to which projection extension is applied, the projection extension corresponding to projection extension as an extension method of a projection system for mapping, on the plane, the three-dimensional structure image as an image projected on a three-dimensional structure.

An information processing apparatus according to a further aspect of the present technology is directed to an information processing apparatus including a file generation unit that generates a file that includes information associated with an offset of projection of an image to a three-dimensional structure in correspondence with projection extension as an extension method of a projection system for mapping, on a single plane, a three-dimensional structure image as an image projected on the three-dimensional structure.

An information processing method according to a further aspect of the present technology is directed to an information processing method generating a file that includes information associated with an offset of projection of an image to a three-dimensional structure in correspondence with projection extension as an extension method of a projection system for mapping, on a single plane, a three-dimensional structure image as an image projected on the three-dimensional structure.

An information processing apparatus according to a still further aspect of the present technology is directed to an information processing apparatus including a file generation unit that generates a control file that includes information associated with projection extension as an extension method of a projection system for mapping, on a single plane, a three-dimensional structure image as an image projected on a three-dimensional structure, the control file being used for distribution control of image encoded data indicating an encoded projection planar image produced by mapping, on the plane, the three-dimensional structure image by the projection system to which the projection extension is applied.

An information processing method according to a still further aspect of the present technology is directed to an information processing method generating a control file that includes information associated with projection extension as an extension method of a projection system for mapping, on a single plane, a three-dimensional structure image as an image projected on a three-dimensional structure, the control file being used for distribution control of image encoded data indicating an encoded projection planar image produced by mapping, on the plane, the three-dimensional structure image by a projection system to which the projection extension is applied.

An information processing apparatus according to a still further aspect of the present technology is directed to an information processing apparatus including a file generation unit that generates a control file that includes information associated with image quality of a projection planar image produced by mapping, on a single plane, a three-dimensional structure image using a projection system to which projection extension is applied, the projection extension corresponding to projection extension as an extension method of a projection system for mapping, on the plane, the three-dimensional structure image as an image projected on a three-dimensional structure, the control file being used for distribution control of image encoded data indicating the encoded projection planar image.

An information processing method according to a still further aspect of the present technology is directed to an information processing method generating a control file that includes information associated with image quality of a projection planar image produced by mapping, on a single plane, a three-dimensional structure image using a projection system to which projection extension is applied, the projection extension corresponding to projection extension as an extension method of a projection system for mapping, on the plane, the three-dimensional structure image as an image projected on a three-dimensional structure, the control file being used for distribution control of image encoded data indicating the encoded projection planar image.

The information processing apparatus and method of an aspect of the present technology generate a file that includes information associated with projection extension as an extension method of a projection system for mapping, on a single plane, a three-dimensional structure image as an image projected on a three-dimensional structure.

The information processing apparatus and method of another aspect of the present technology generate a file that includes information associated with image quality of a projection planar image produced by mapping, on a single plane, a three-dimensional structure image using a projection system to which projection extension is applied, the projection extension corresponding to projection extension as an extension method of a projection system for mapping, on the plane, the three-dimensional structure image as an image projected on a three-dimensional structure.

The information processing apparatus and method of a further aspect of the present technology generate a file that includes information associated with an offset of projection of an image to a three-dimensional structure in correspondence with projection extension as an extension method of a projection system for mapping, on a single plane, a three-dimensional structure image as an image projected on the three-dimensional structure.

The information processing apparatus and method of a still further aspect of the present technology generate a control file that includes information associated with projection extension as an extension method of a projection system for mapping, on a single plane, a three-dimensional structure image as an image projected on a three-dimensional structure, the control file being used for distribution control of image encoded data indicating an encoded projection planar image produced by mapping, on the plane, the three-dimensional structure image by a projection system to which the projection extension is applied.

The information processing apparatus and method of a still further aspect of the present technology generate a control file that includes information associated with image quality of a projection planar image produced by mapping, on a single plane, a three-dimensional structure image using a projection system to which projection extension is applied, the projection extension corresponding to projection extension as an extension method of a projection system for mapping, on the plane, the three-dimensional structure image as an image projected on a three-dimensional structure, the control file being used for distribution control of image encoded data indicating the encoded projection planar image.

### [Advantageous Effect of Invention]

According to the present disclosure, information processing is achievable. Particularly, a higher-quality image can be more easily provided while reducing a drop of encoding efficiency.

### [Brief Description of Drawings]

[FIG. 1]

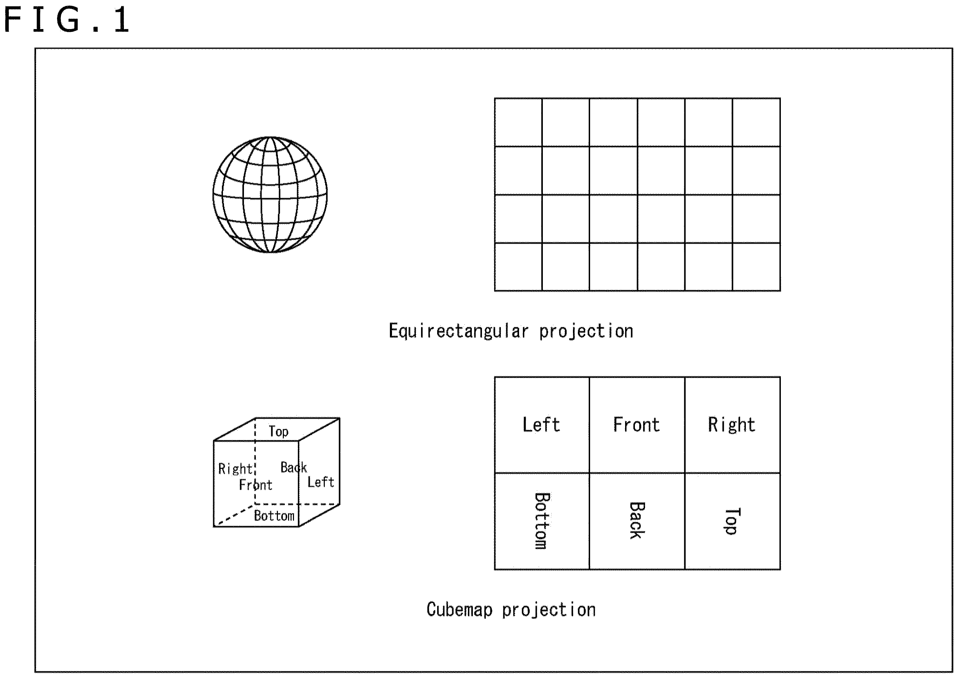

   FIG. 1 is a diagram depicting examples of a projection format.
[FIG. 2]

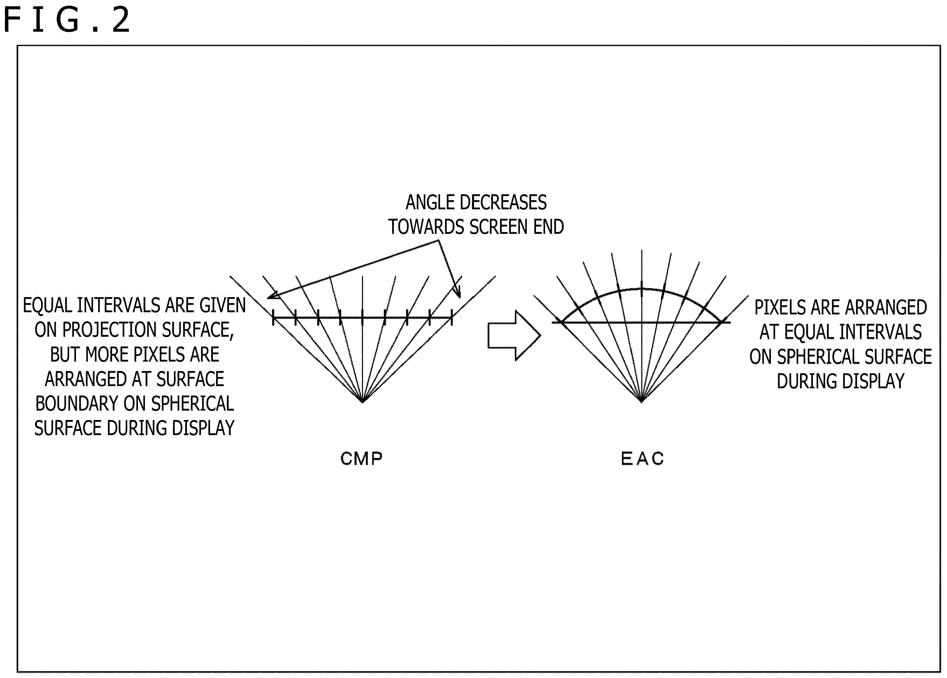

   FIG. 2 is a diagram depicting an example of projection extension.
[FIG. 3]

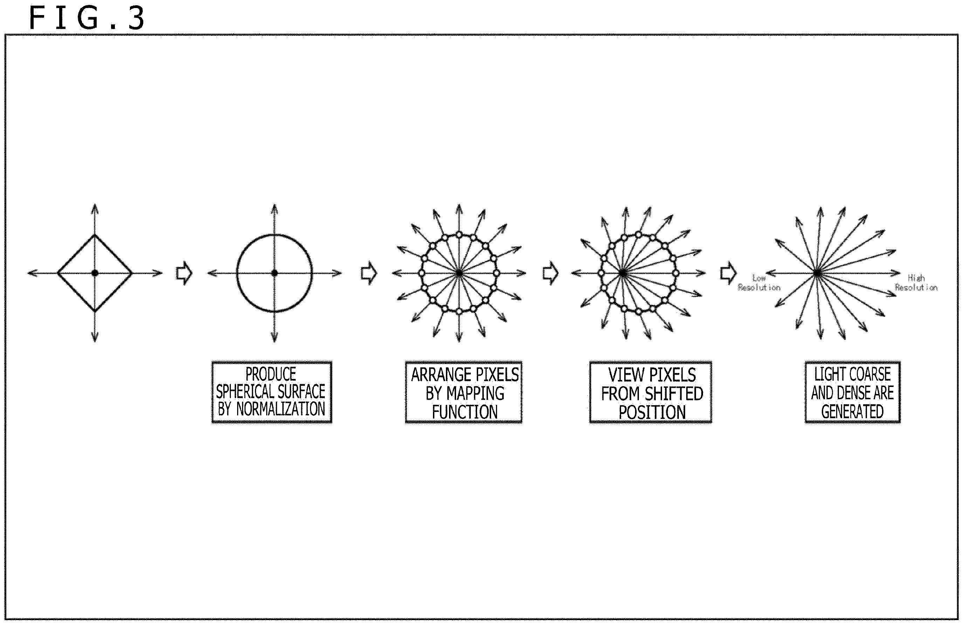

   FIG. 3 is a diagram depicting an example of a state of eccentric spherical mapping.
[FIG. 4]

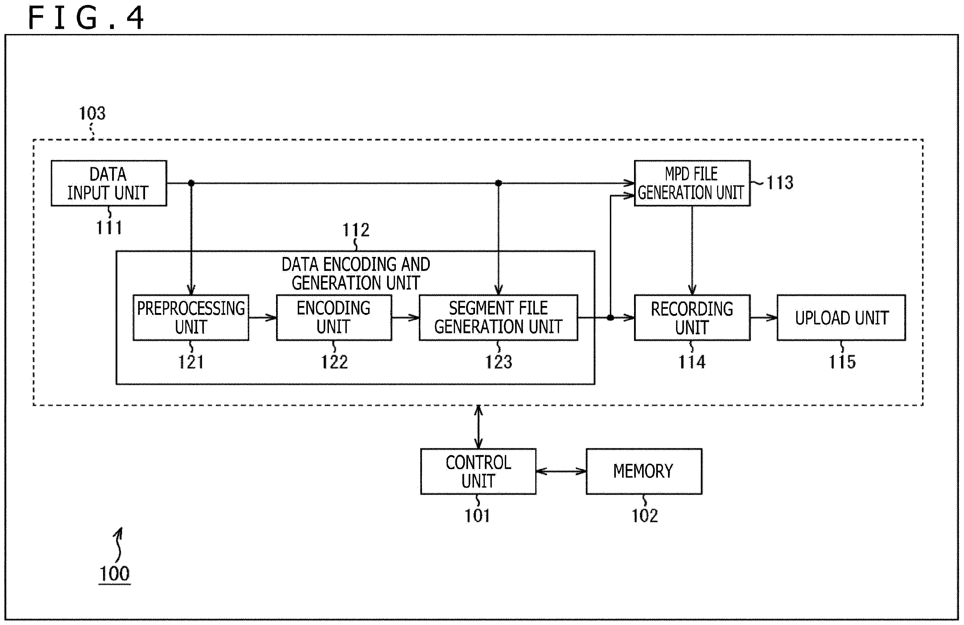

   FIG. 4 is a block diagram depicting a main configuration example of a file generation apparatus.
[FIG. 5]

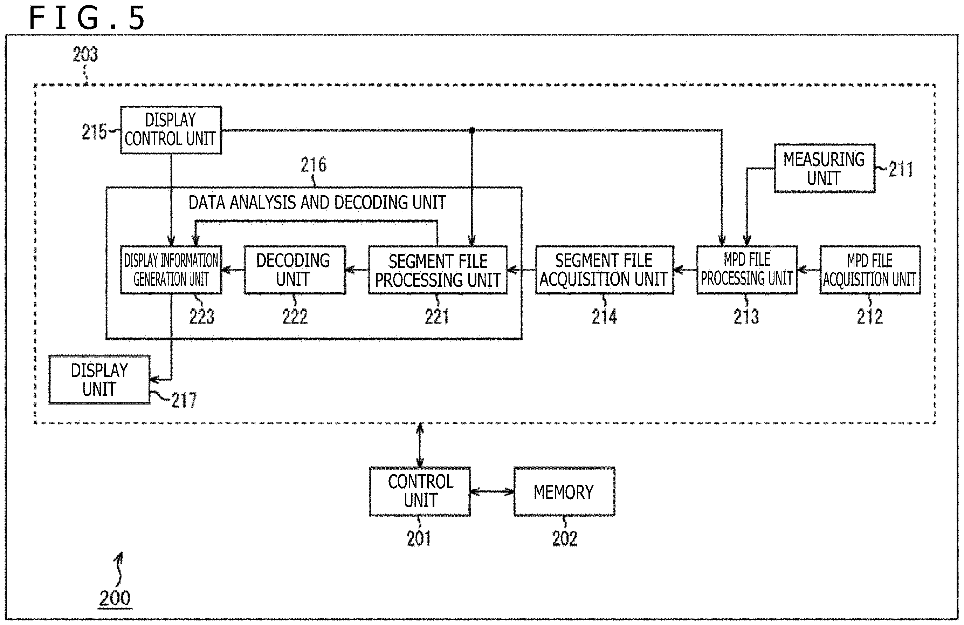

   FIG. 5 is a block diagram depicting a main configuration example of a client apparatus.
[FIG. 6]

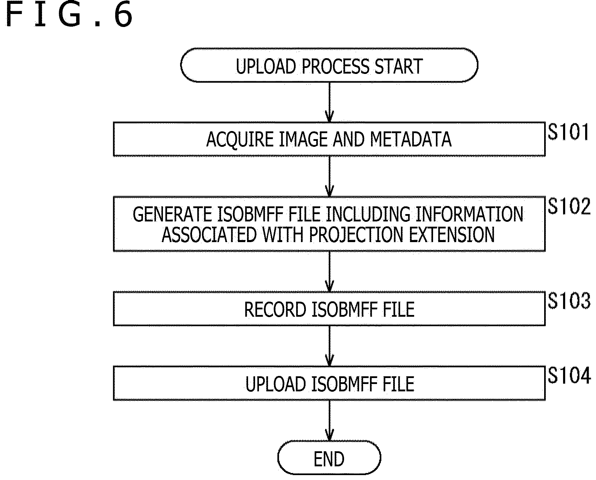

   FIG. 6 is a flowchart explaining an example of a flow of an uploading process.
[FIG. 7]

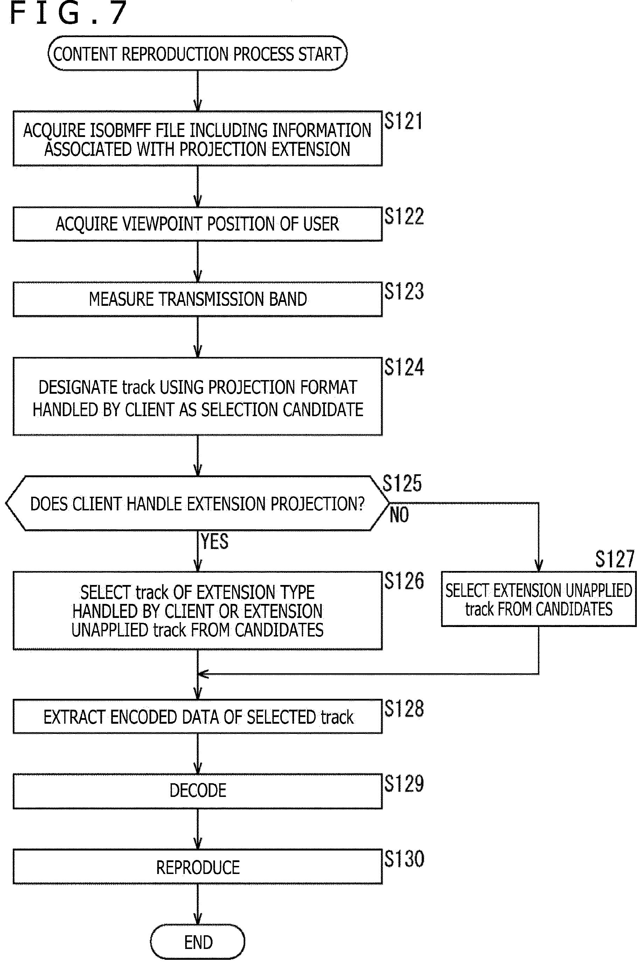

   FIG. 7 is a flowchart explaining an example of a flow of a content reproduction process.
[FIG. 8]

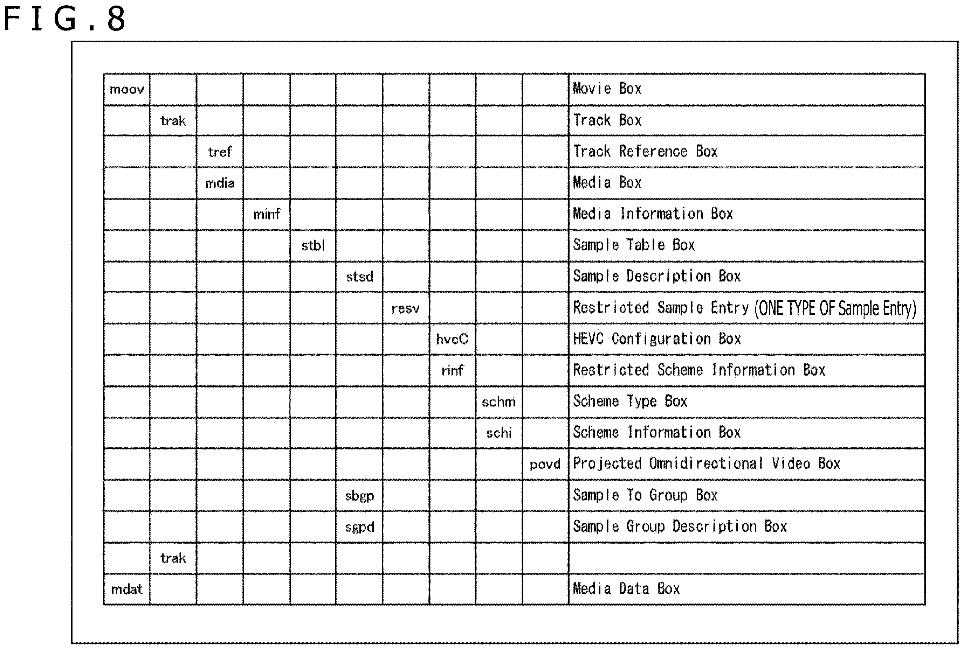

   FIG. 8 is a diagram depicting an example of a box layered structure of ISOBMFF.
[FIG. 9]

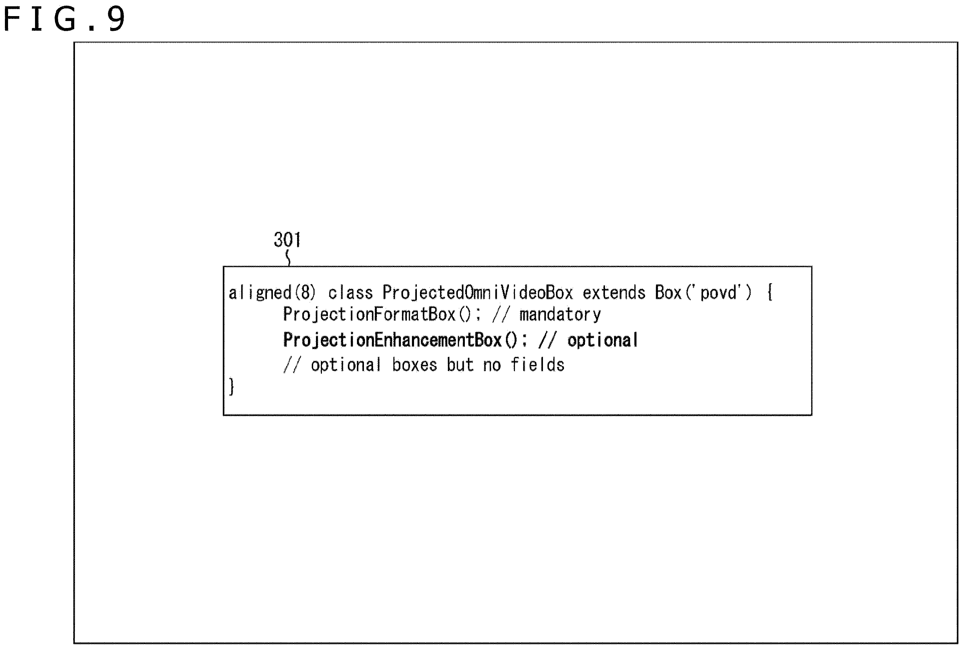

   FIG. 9 is a diagram depicting an example of a syntax of Projected Omnidirectional Video Box.
[FIG. 10]

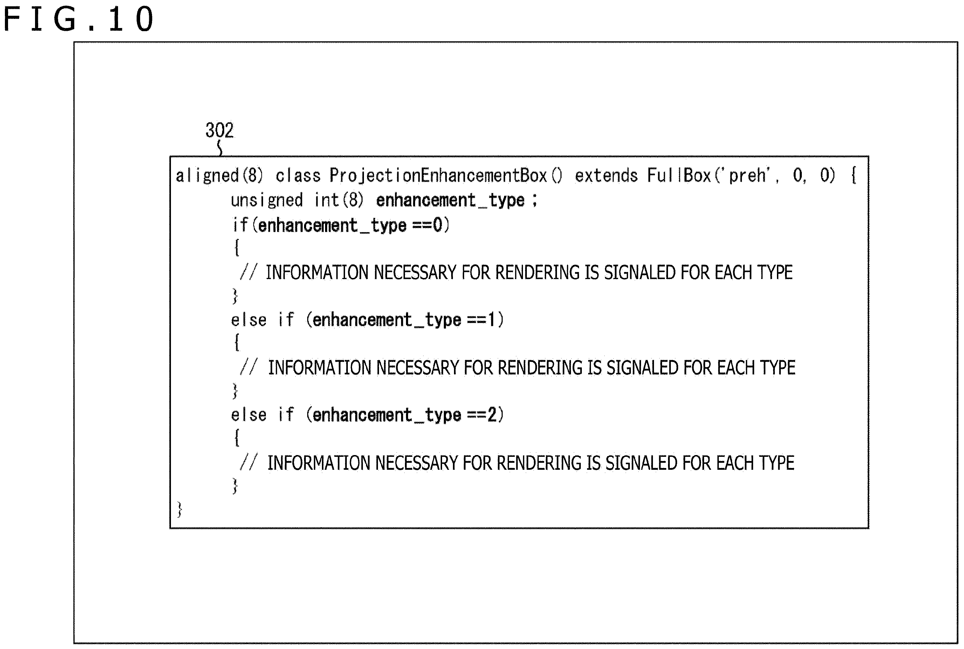

   FIG. 10 is a diagram depicting an example of a syntax of Projection Enhancement Box.
[FIG. 11]

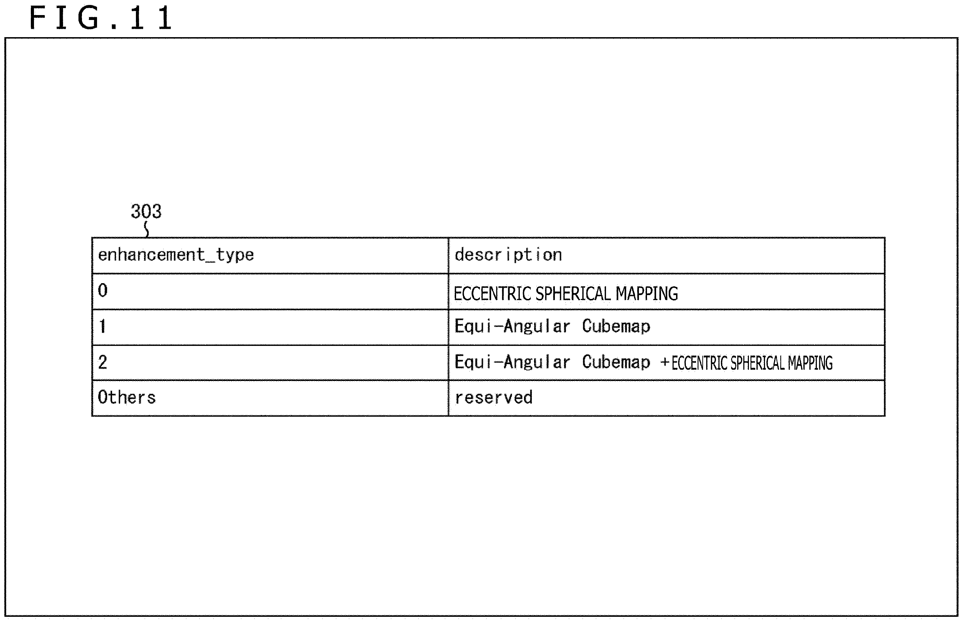

   FIG. 11 is a diagram depicting an example of semantics of enhancement_type.
[FIG. 12]

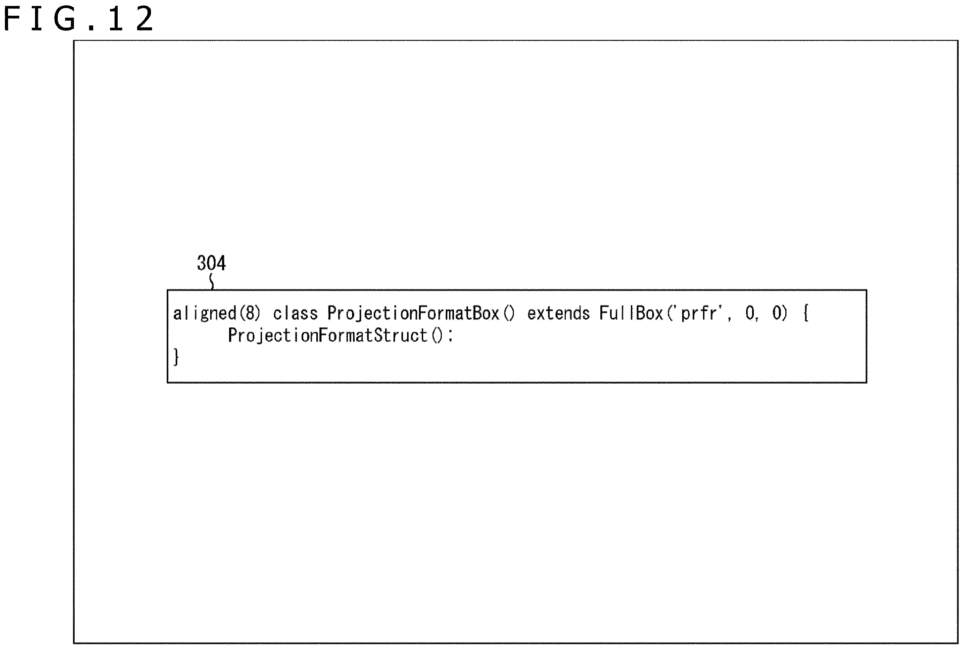

   FIG. 12 is a diagram depicting an example of a syntax of Projection Format Box.
[FIG. 13]

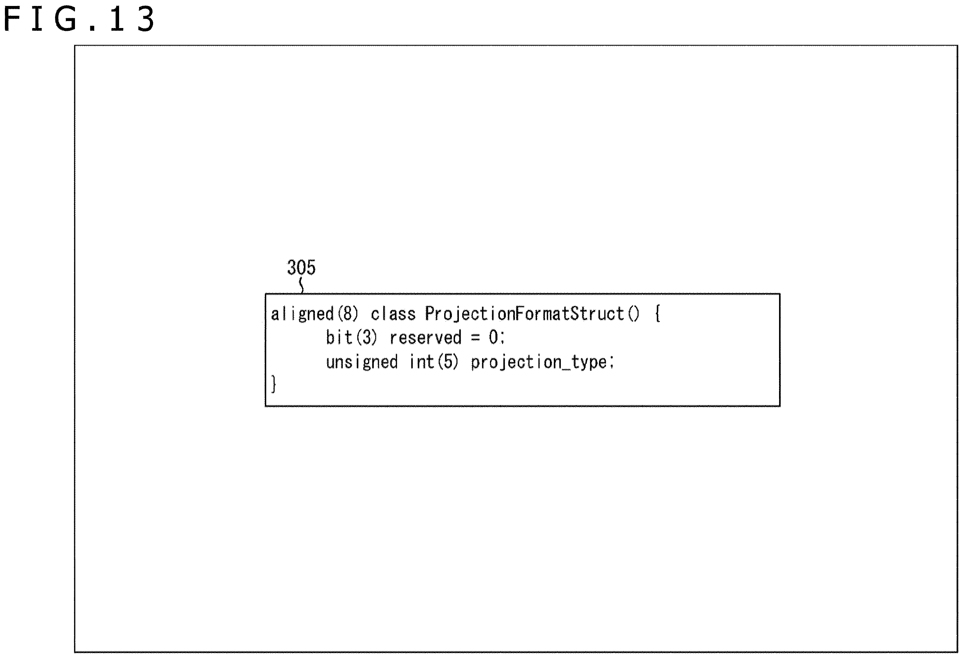

   FIG. 13 is a diagram depicting an example of a syntax of Projection Format Struct.
[FIG. 14]

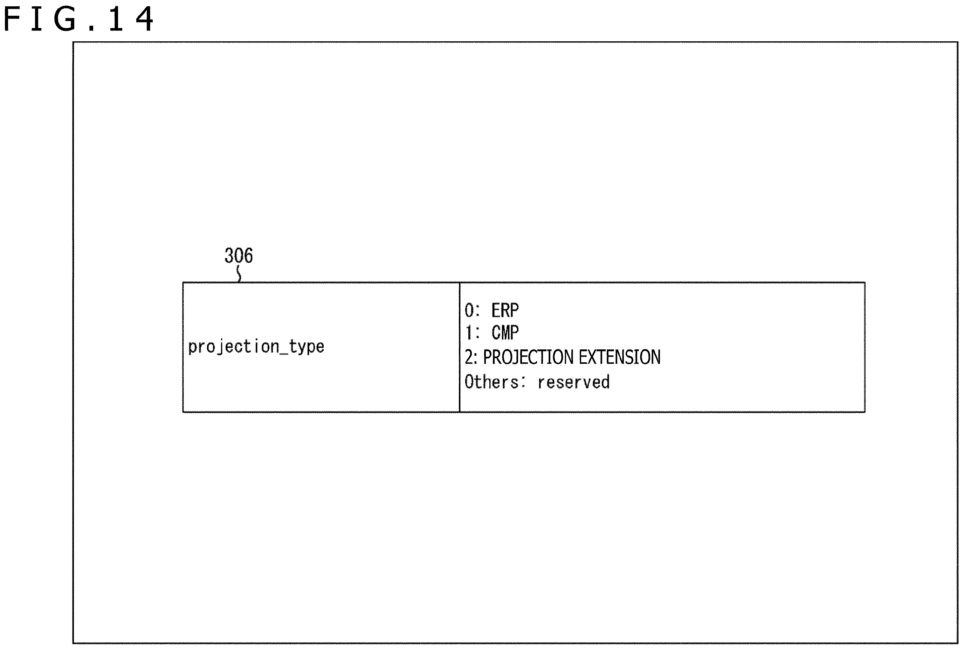

   FIG. 14 is a diagram depicting an example of semantics of projection_type.
[FIG. 15]

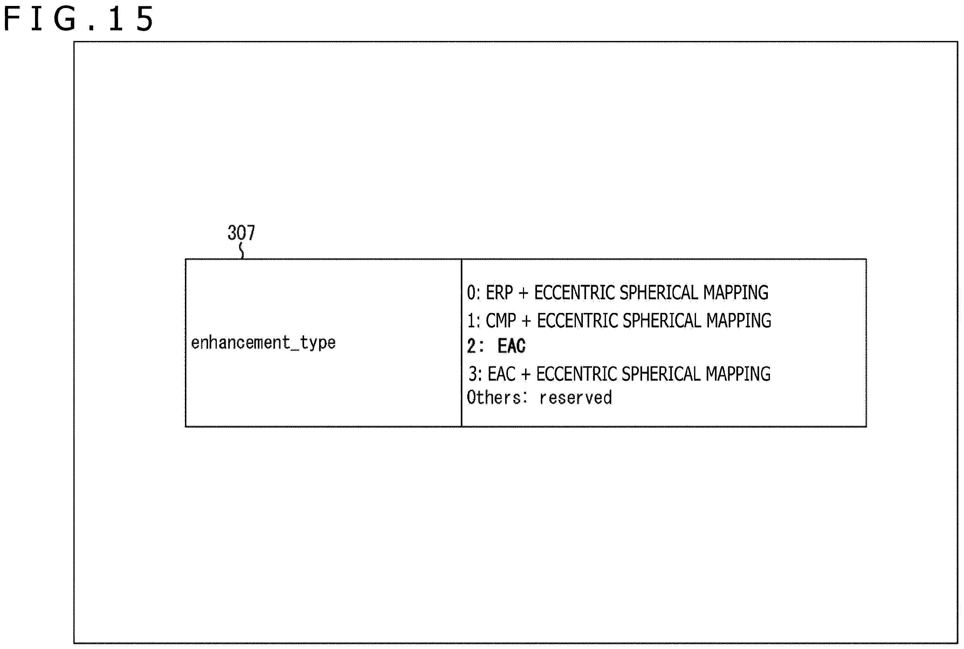

   FIG. 15 is a diagram depicting an example of semantics of enhancement_type.
[FIG. 16]

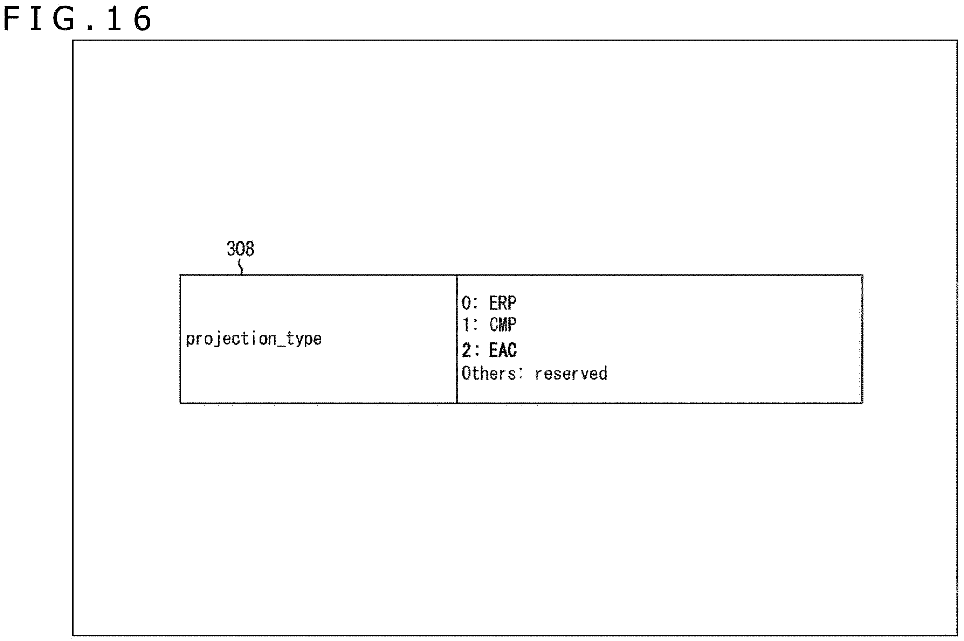

   FIG. 16 is a diagram depicting an example of semantics of projection_type.
[FIG. 17]

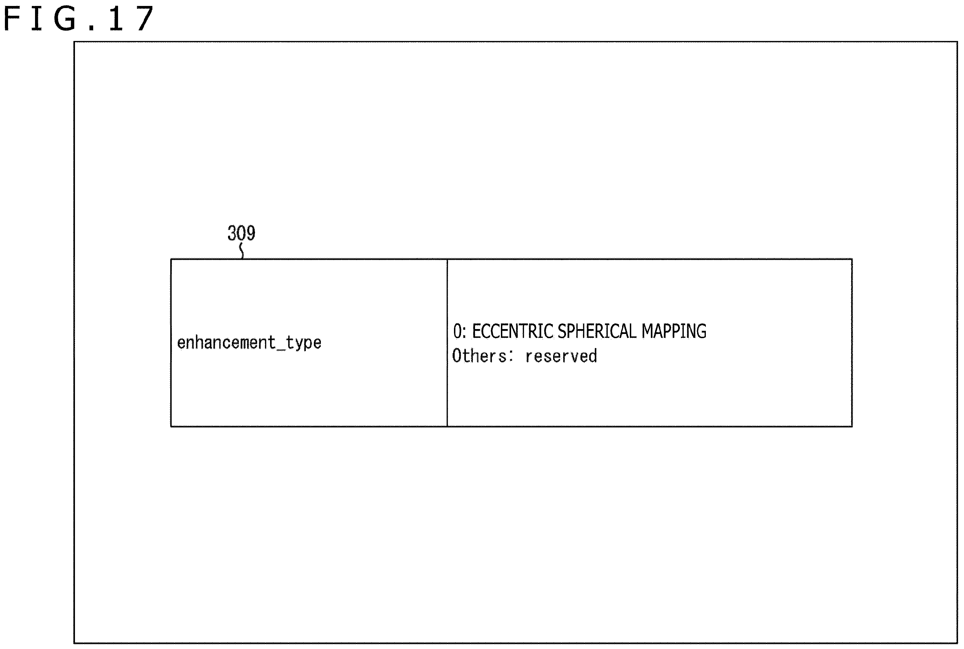

   FIG. 17 is a diagram depicting an example of semantics of enhancement_type.
[FIG. 18]

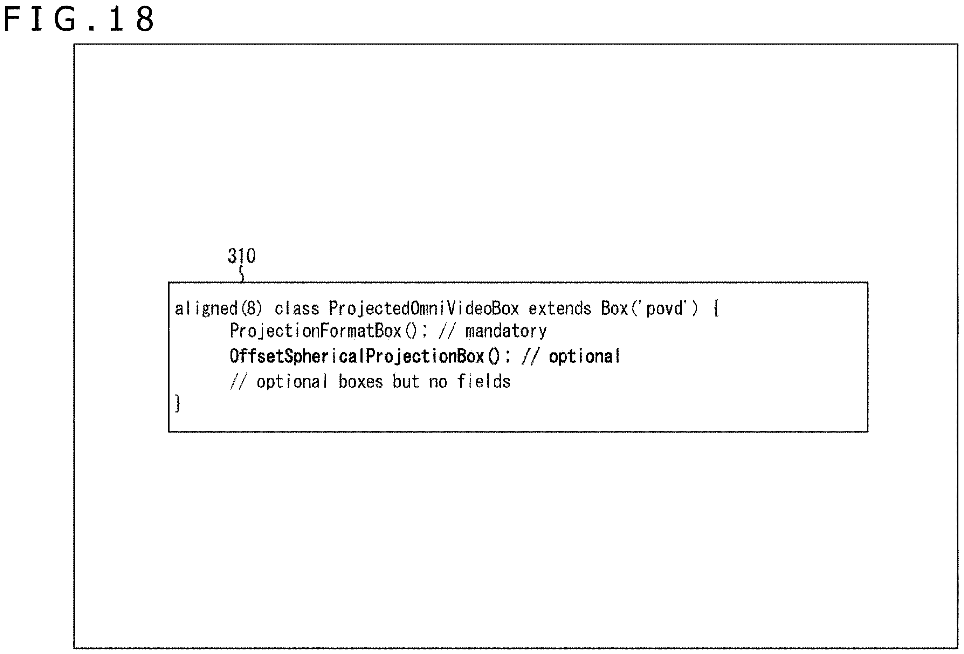

   FIG. 18 is a diagram depicting an example of a syntax of Projected Omnidirectional Video Box.
[FIG. 19]

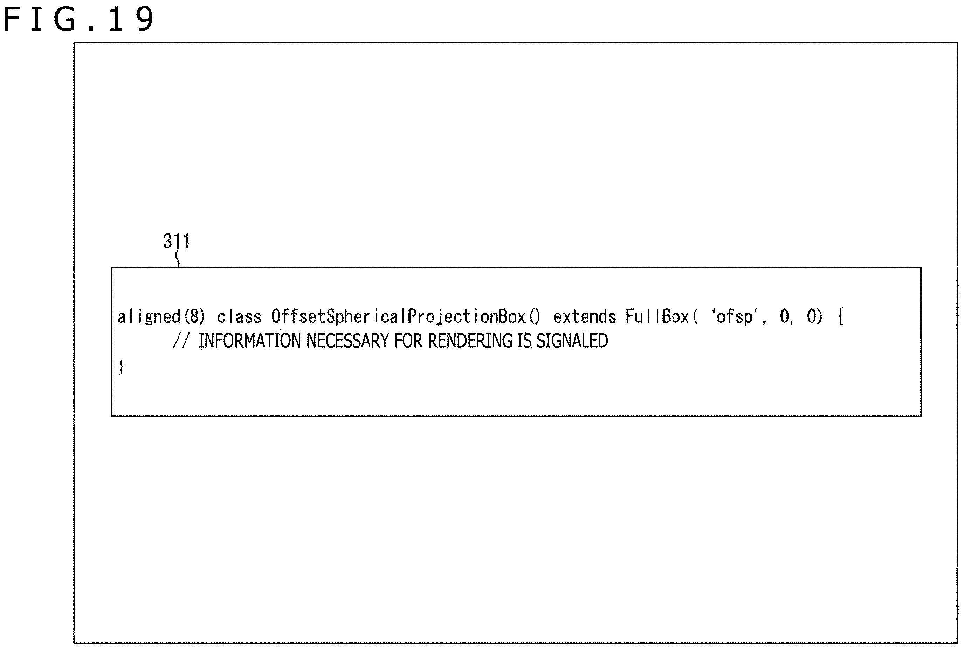

   FIG. 19 is a diagram depicting an example of a syntax of Offset Spherical Projection Box.
[FIG. 20]

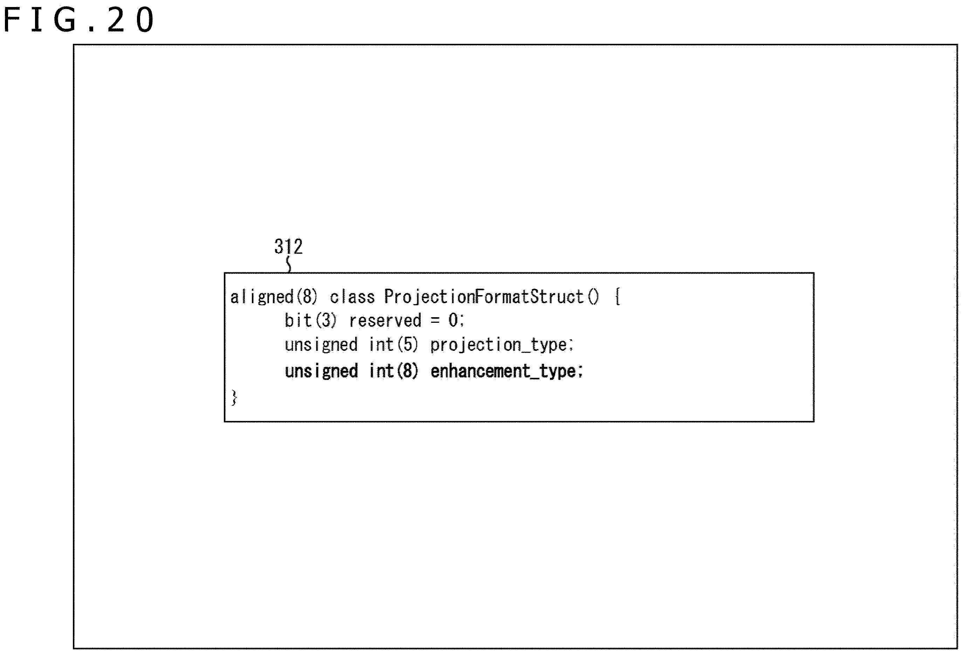

   FIG. 20 is a diagram depicting an example of a syntax of Projection Format Struct.
[FIG. 21]

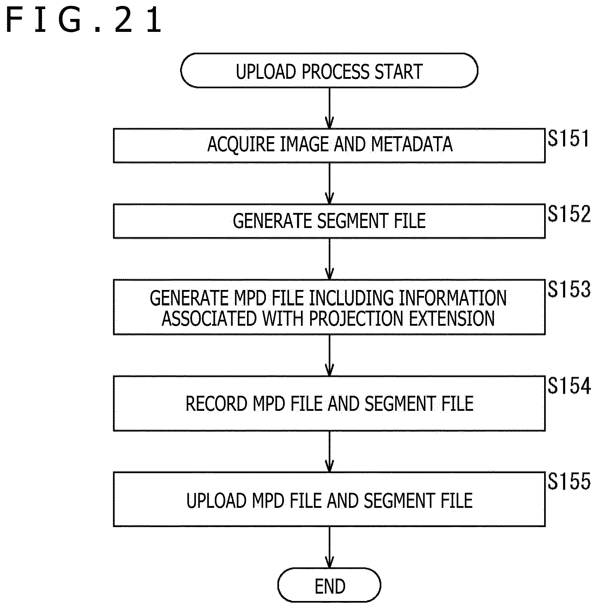

   FIG. 21 is a flowchart explaining an example of a flow of an uploading process.
[FIG. 22]

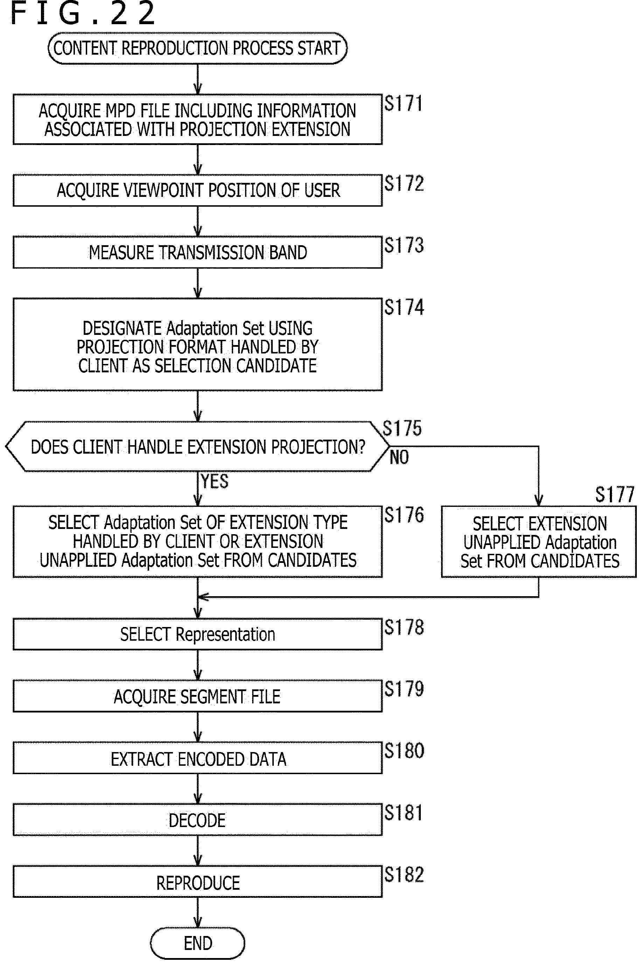

   FIG. 22 is a flowchart explaining an example of a flow of a content reproduction process.
[FIG. 23]

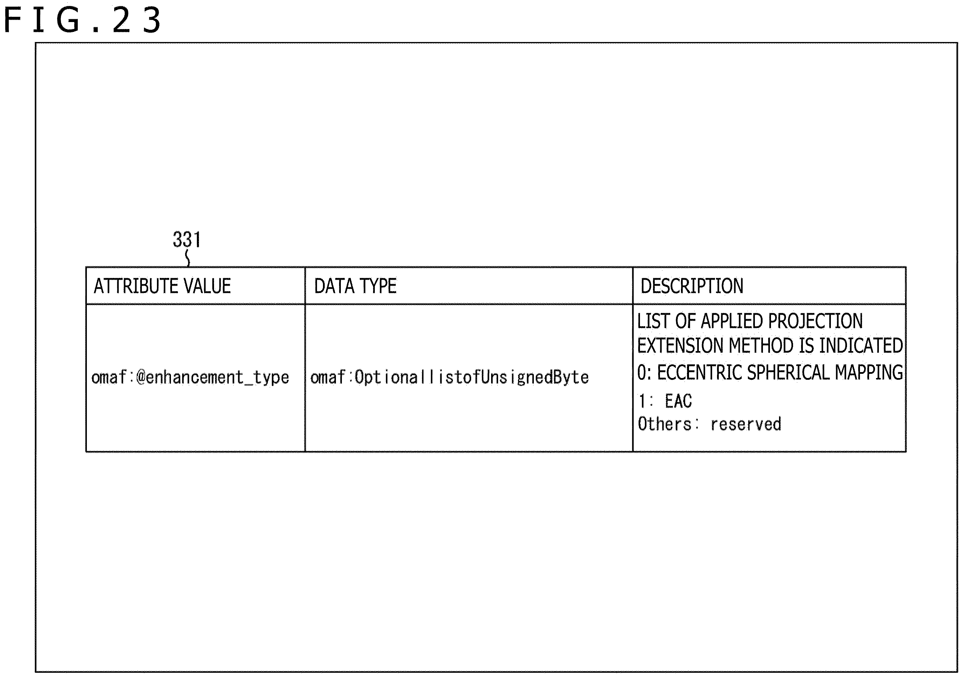

   FIG. 23 is a diagram depicting an example of attribute values of a projection enhancement descriptor.
[FIG. 24]

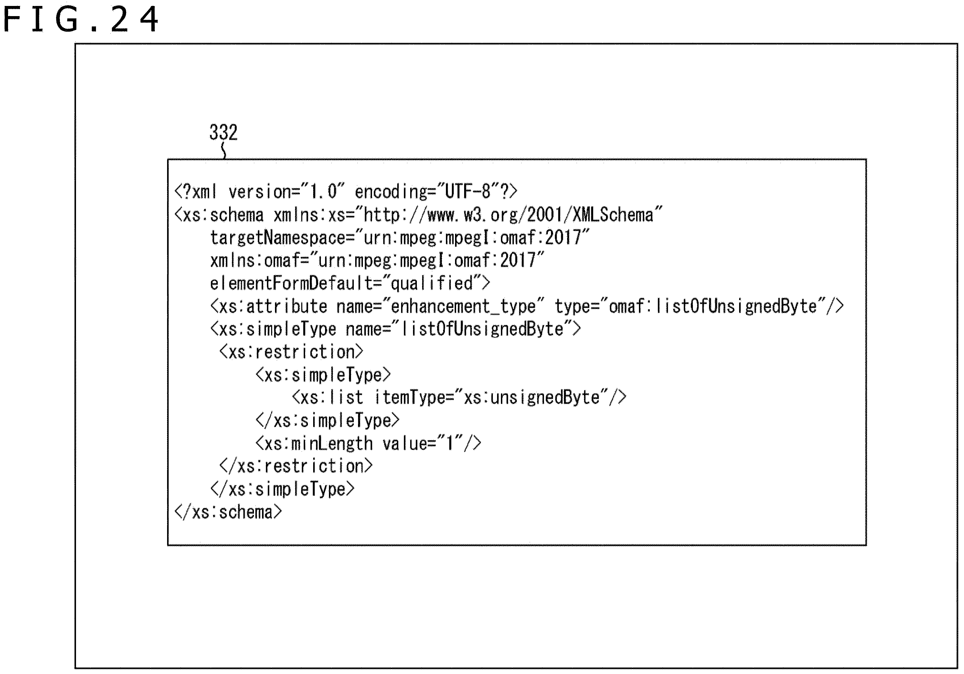

   FIG. 24 is a diagram depicting an example of a datatype.
[FIG. 25]

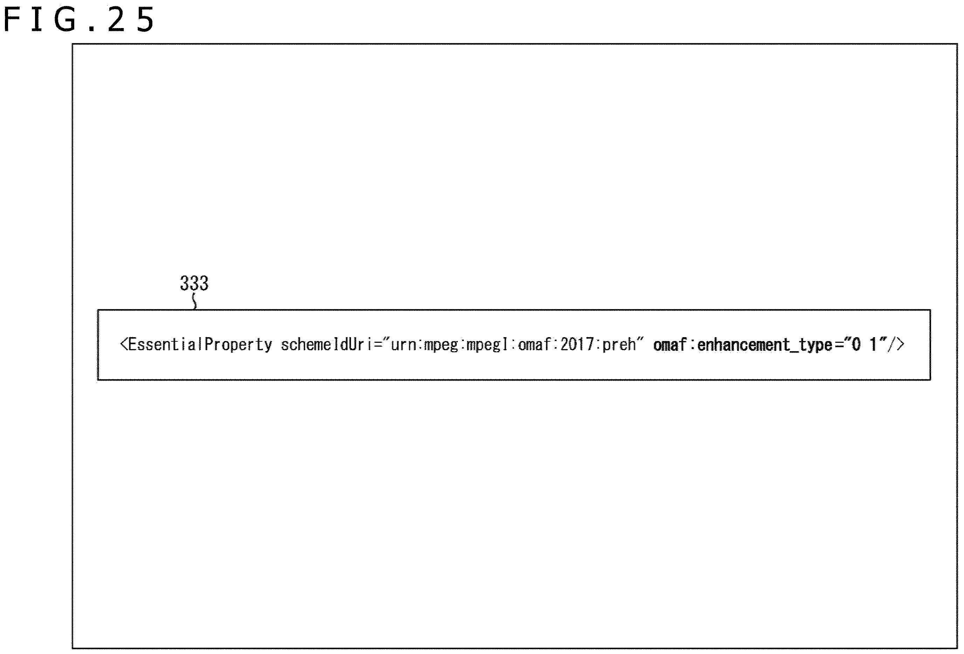

   FIG. 25 is a diagram depicting an example of Essential Property.
[FIG. 26]

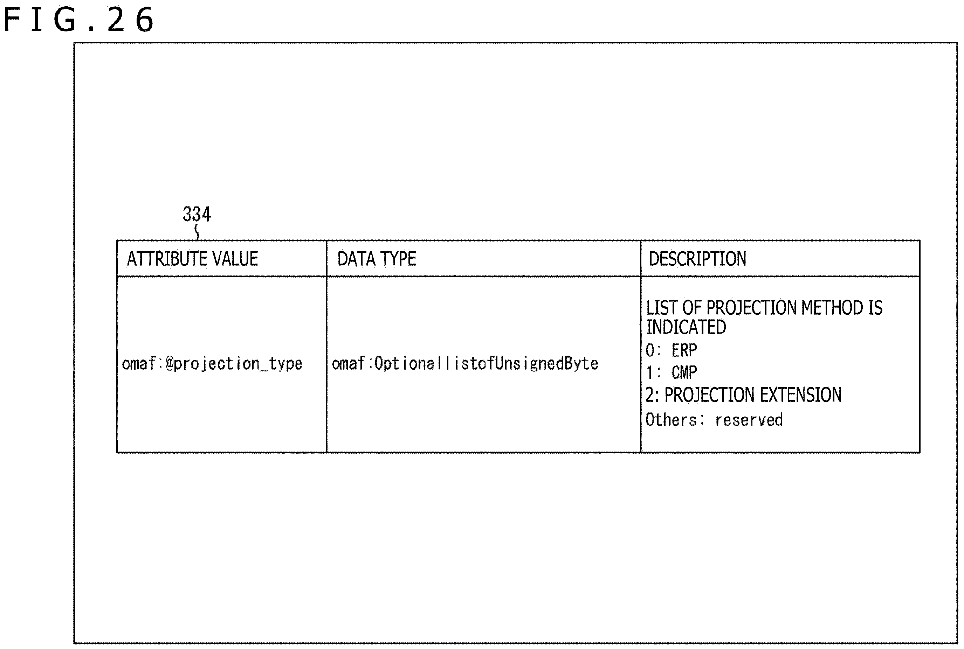

   FIG. 26 is a diagram depicting an example of attribute values of a projection format descriptor.
[FIG. 27]

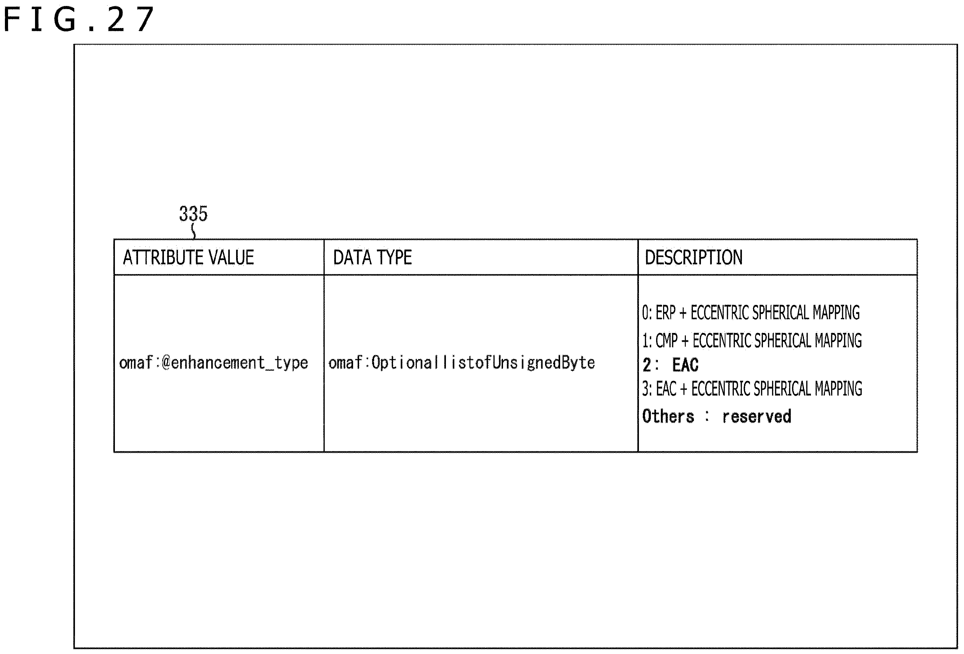

   FIG. 27 is a diagram depicting an example of attribute values of a projection enhancement descriptor.
[FIG. 28]

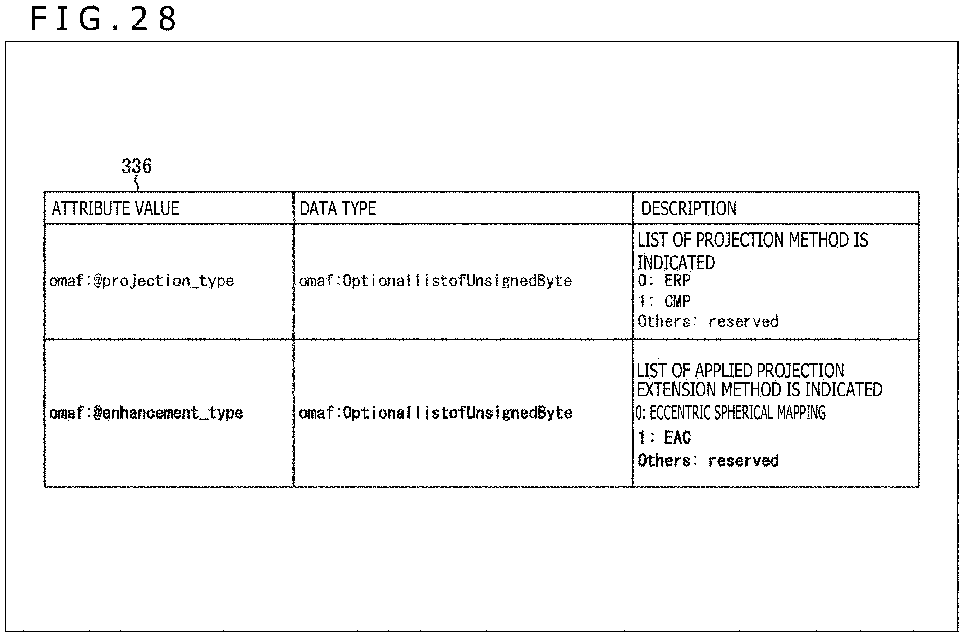

   FIG. 28 is a diagram depicting an example of attribute values of a projection format descriptor.
[FIG. 29]

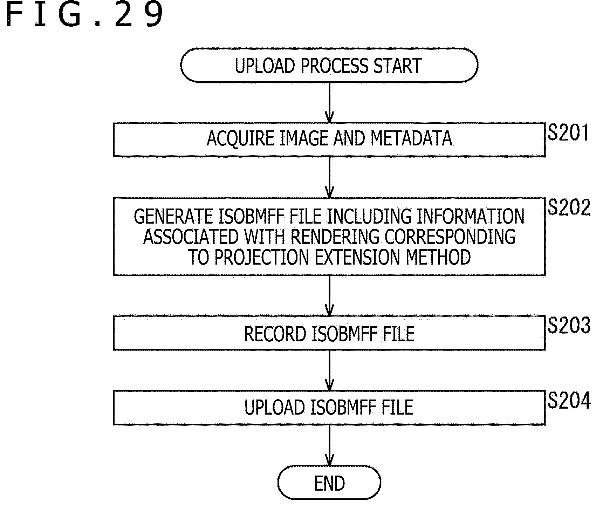

   FIG. 29 is a flowchart explaining an example of a flow of an uploading process.
[FIG. 30]

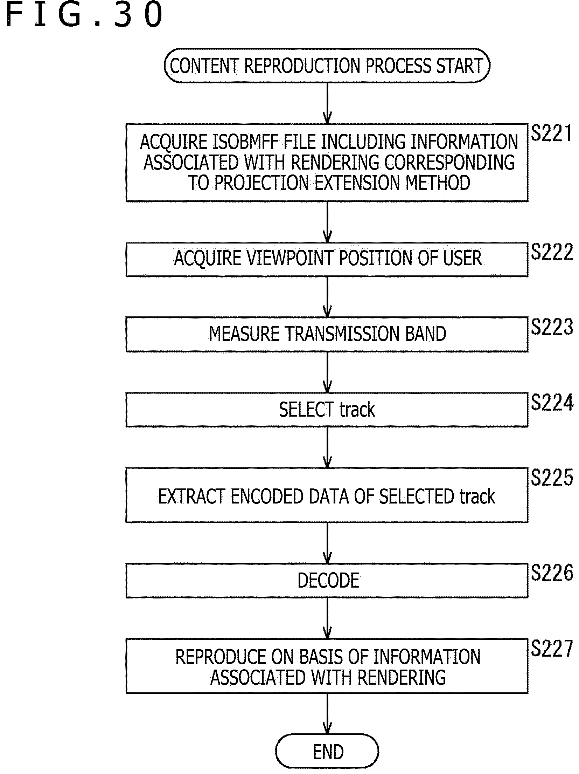

   FIG. 30 is a flowchart explaining an example of a flow of a content reproduction process.
[FIG. 31]

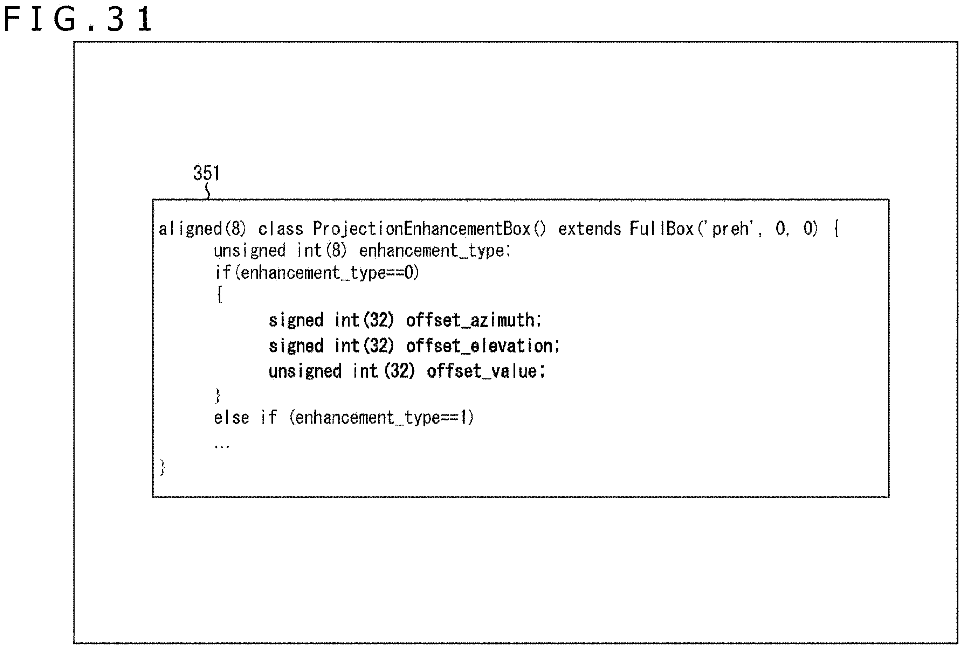

   FIG. 31 is a diagram depicting an example of a syntax of Projection_Enhancement_Box.
[FIG. 32]

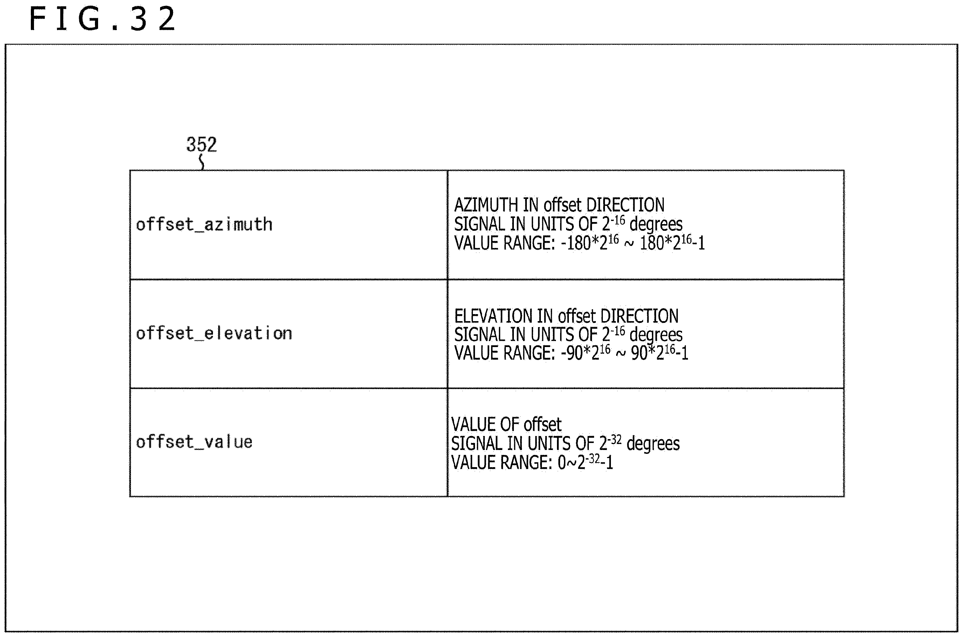

   FIG. 32 is a diagram depicting an example of semantics of an added field.
[FIG. 33]

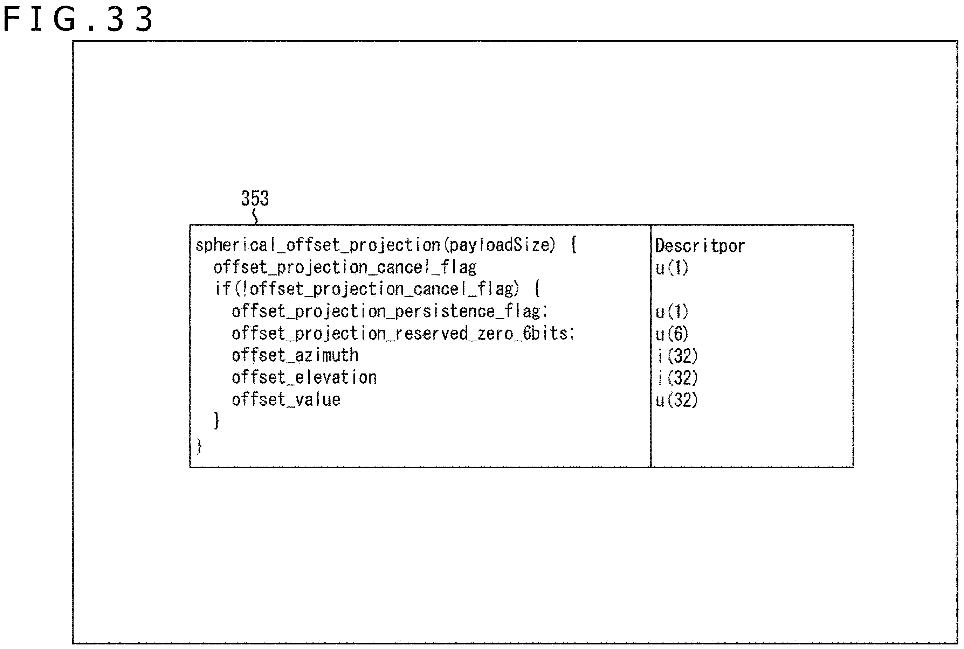

   FIG. 33 is a diagram depicting an example of a syntax of a spherical offset projection SEI message.
[FIG. 34]

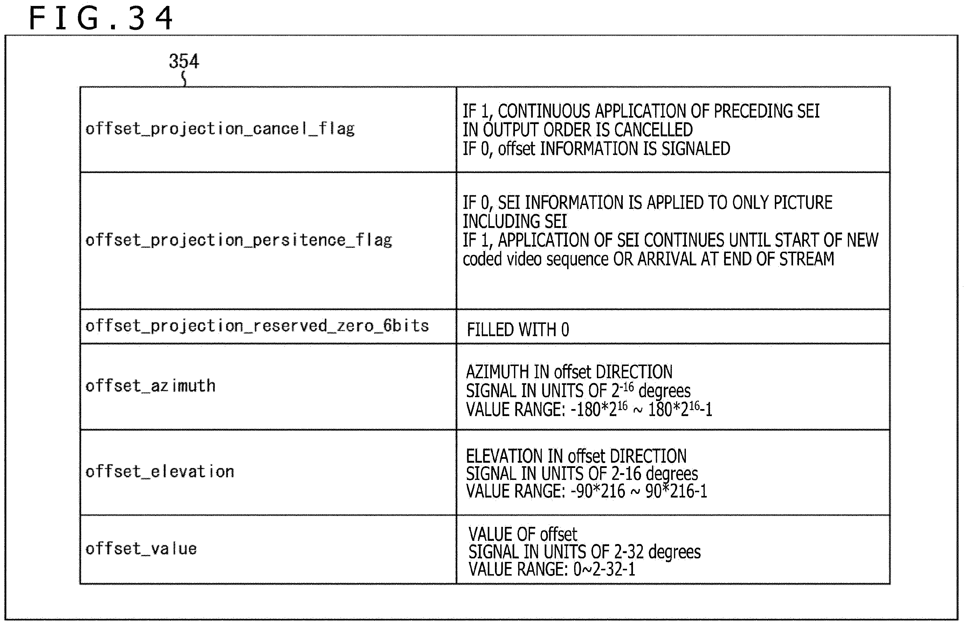

   FIG. 34 is a diagram depicting an example of semantics of a field of a spherical offset projection SEI message.
[FIG. 35]

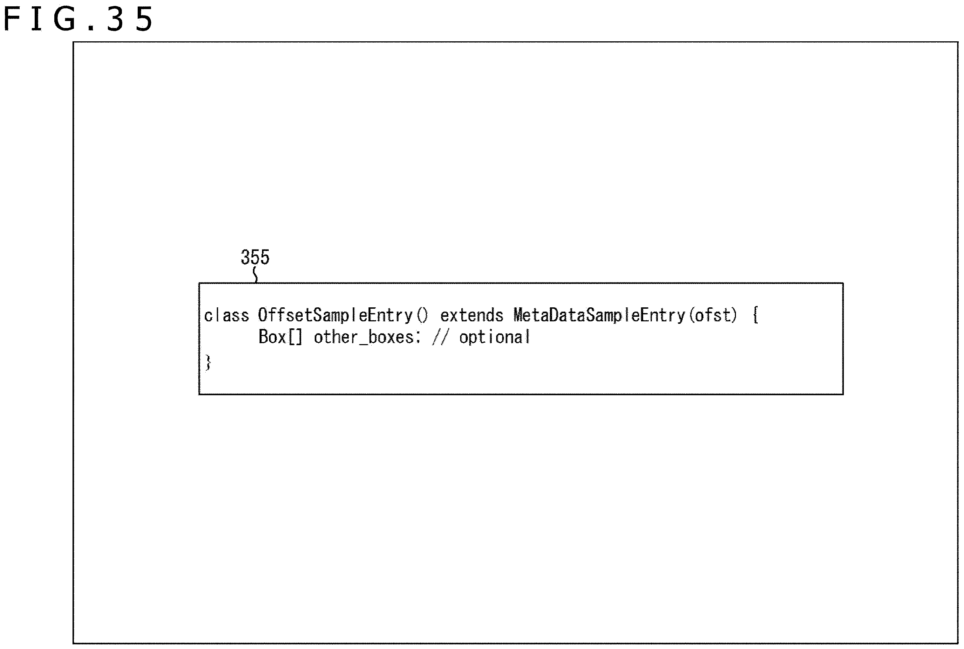

   FIG. 35 is a diagram depicting an example of a syntax of Offset Sample Entry.
[FIG. 36]

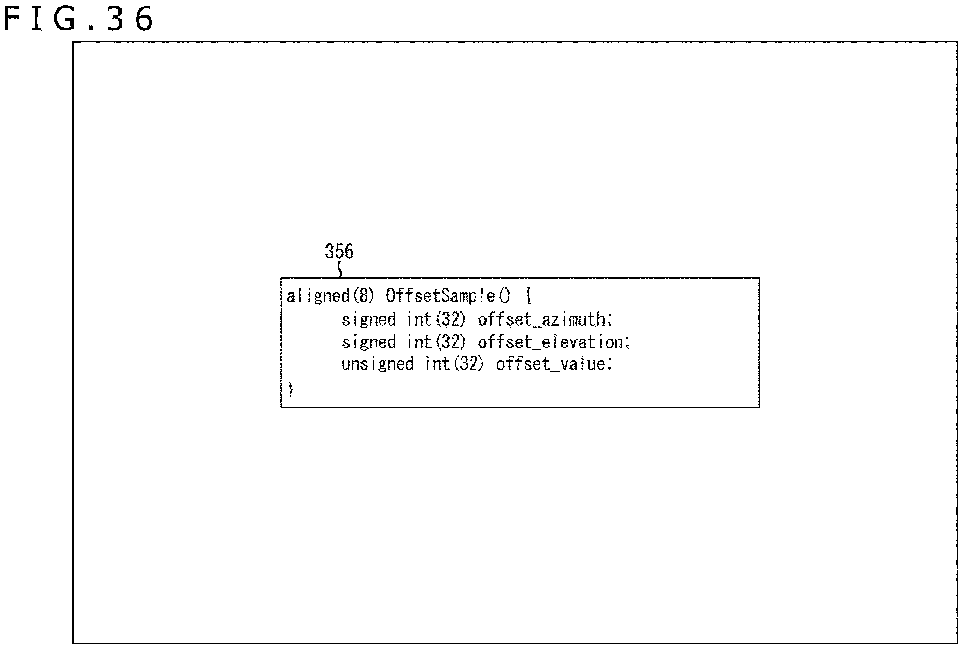

   FIG. 36 is a diagram depicting an example of a syntax of Offset Sample.
[FIG. 37]

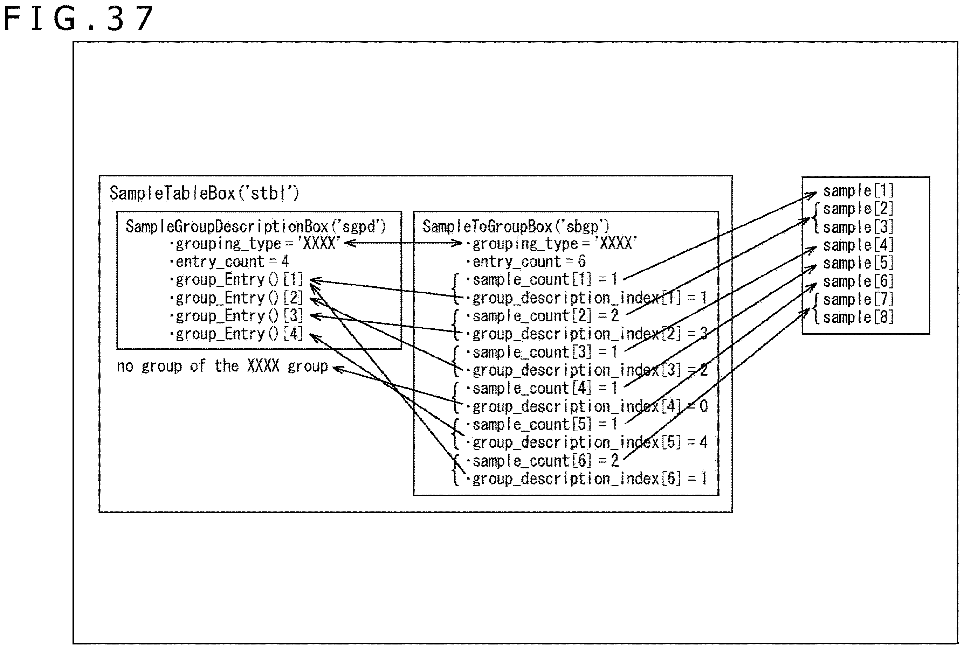

   FIG. 37 is a diagram depicting an example of Sample Table Box.
[FIG. 38]

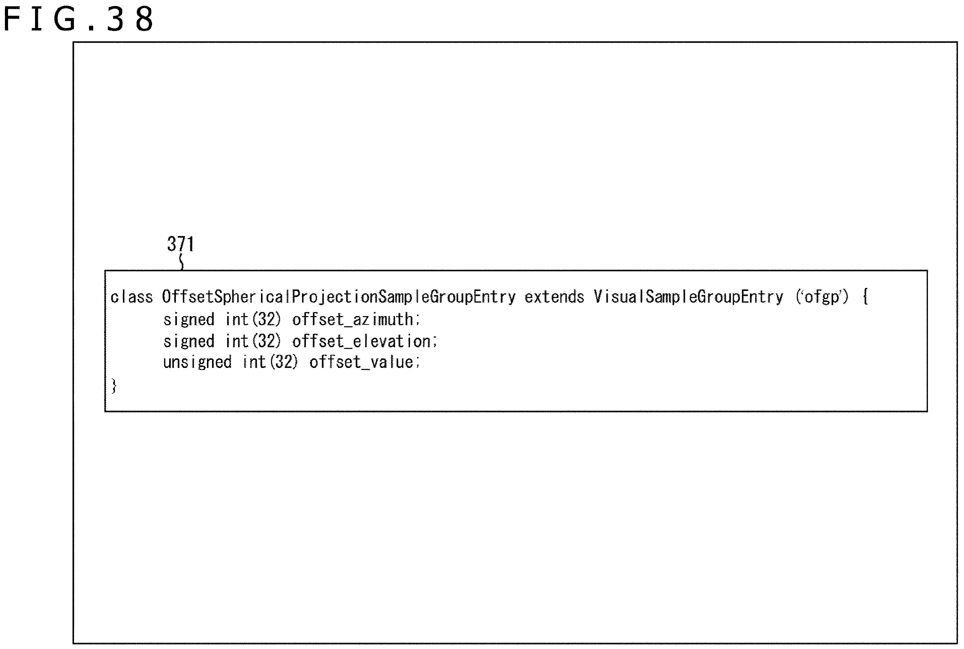

   FIG. 38 is a diagram depicting an example of a syntax of Offset Spherical Projection Sample Group Entry.
[FIG. 39]

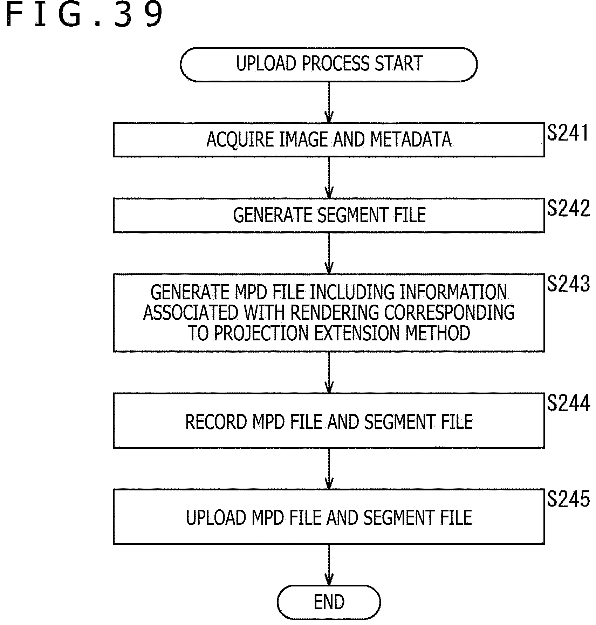

   FIG. 39 is a flowchart explaining an example of a flow of an uploading process.
[FIG. 40]

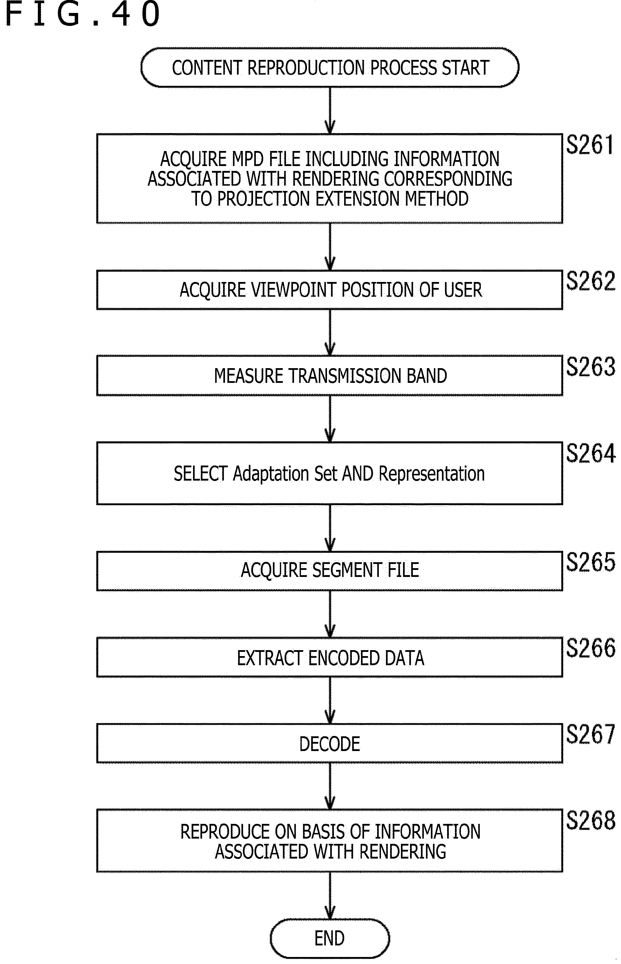

   FIG. 40 is a flowchart explaining an example of a flow of a content reproduction process.
[FIG. 41]

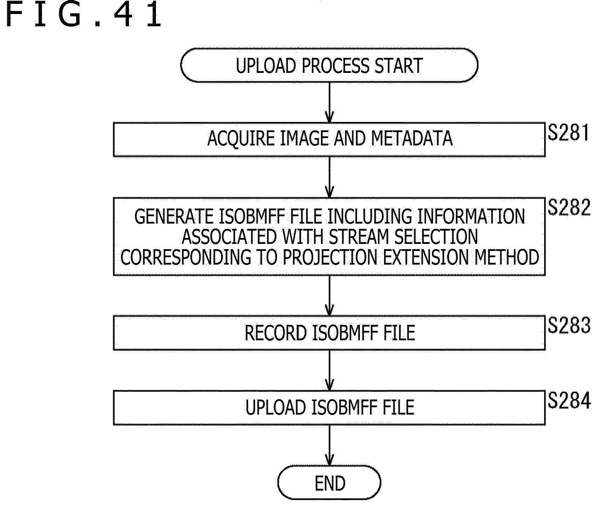

   FIG. 41 is a flowchart explaining an example of a flow of an uploading process.
[FIG. 42]

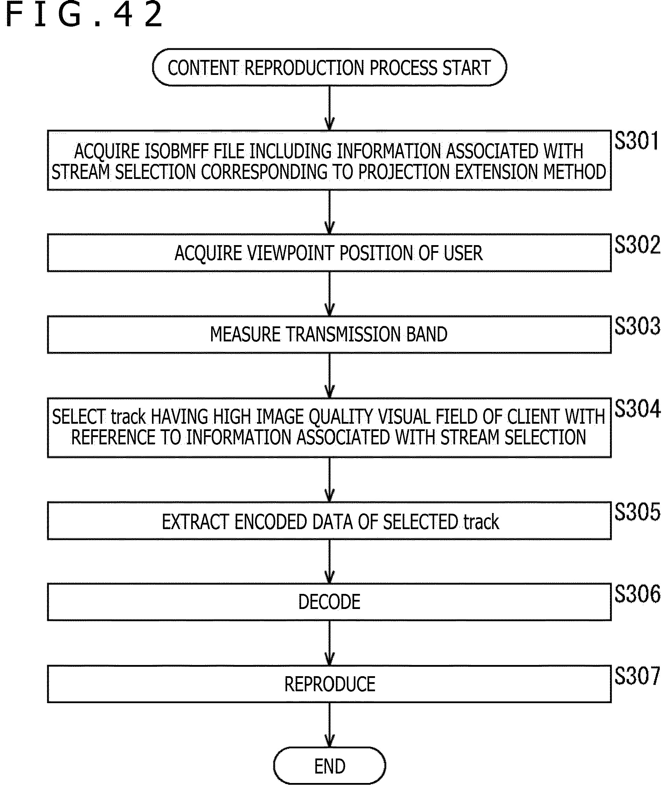

   FIG. 42 is a flowchart explaining an example of a flow of a content reproduction process.
[FIG. 43]

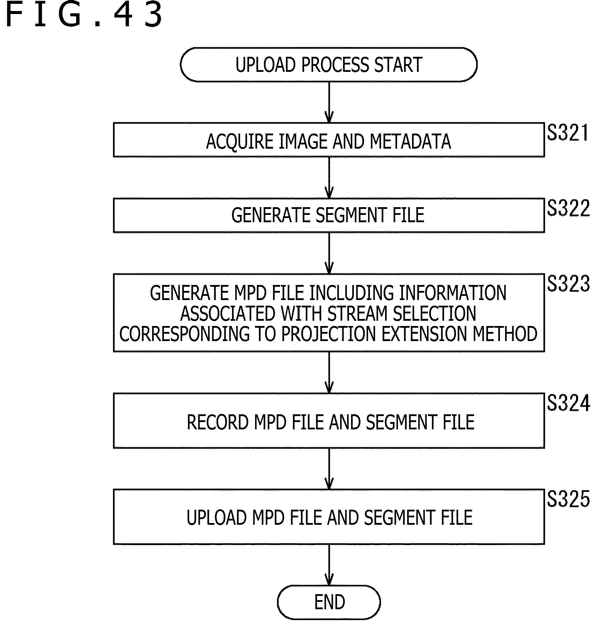

   FIG. 43 is a flowchart explaining an example of a flow of an uploading process.
[FIG. 44]

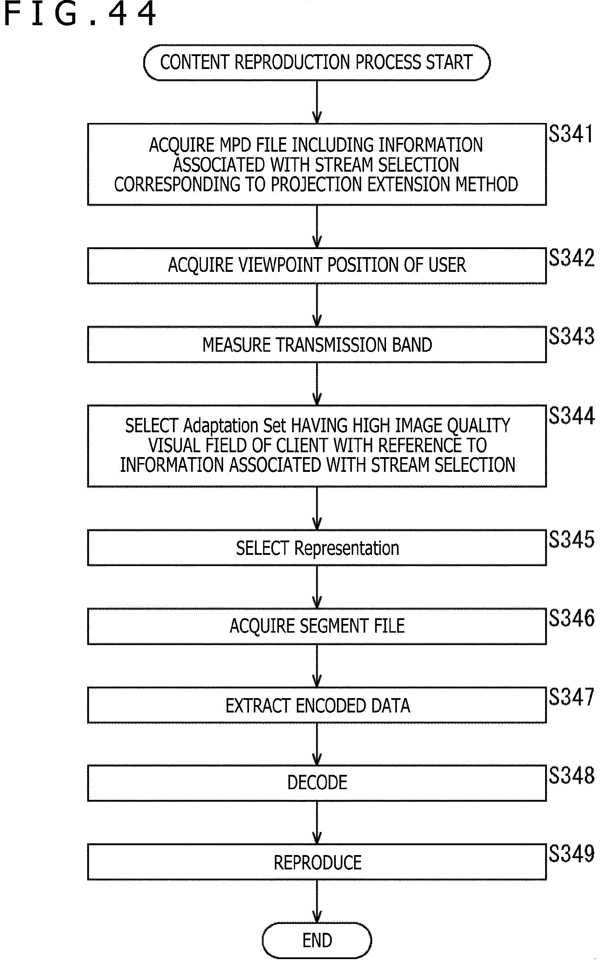

   FIG. 44 is a flowchart explaining an example of a flow of a content reproduction process.
[FIG. 45]

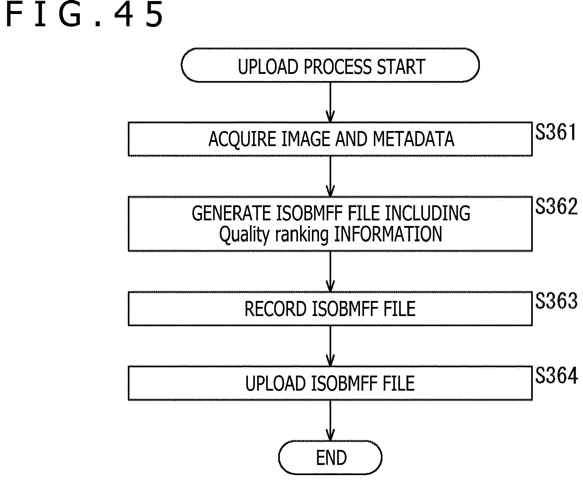

   FIG. 45 is a flowchart explaining an example of a flow of an uploading process.
[FIG. 46]

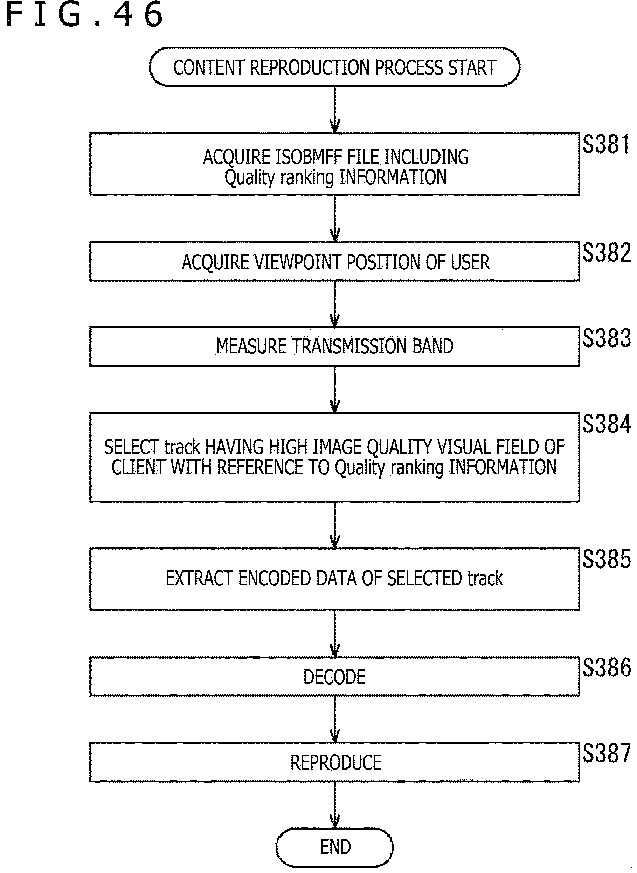

   FIG. 46 is a flowchart explaining an example of a flow of a content reproduction process.
[FIG. 47]

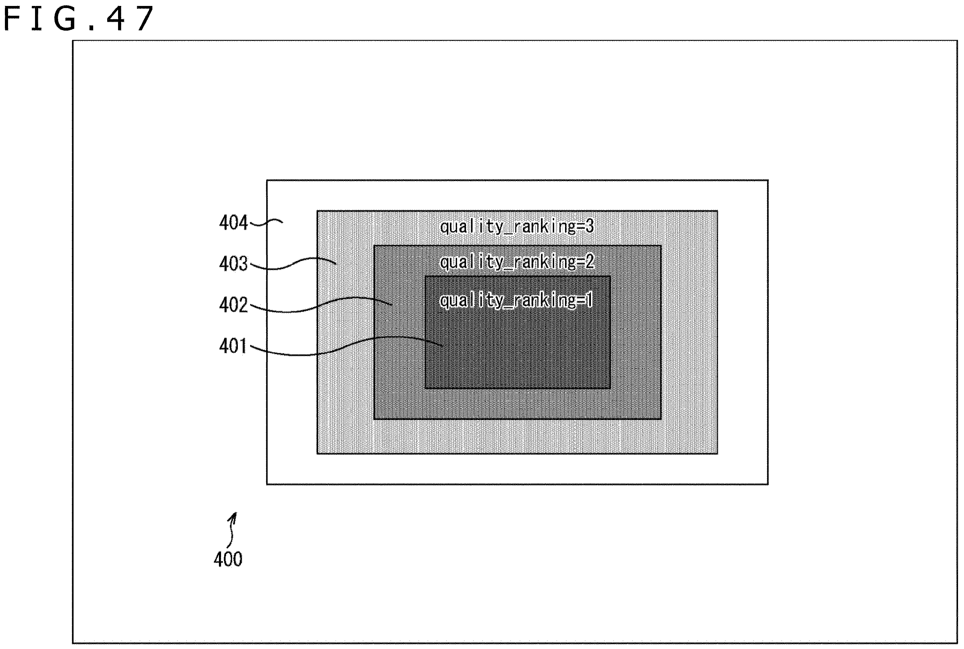

   FIG. 47 is a diagram depicting an example of quality ranking regions.
[FIG. 48]

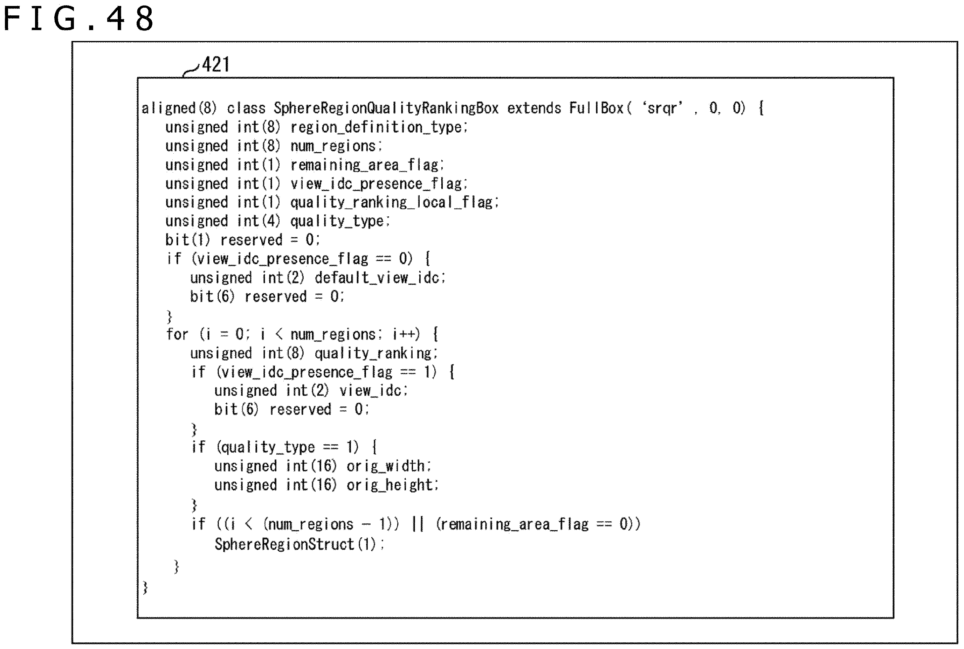

   FIG. 48 is a diagram depicting an example of a syntax of Sphere Region Quality Ranking Box.
[FIG. 49]

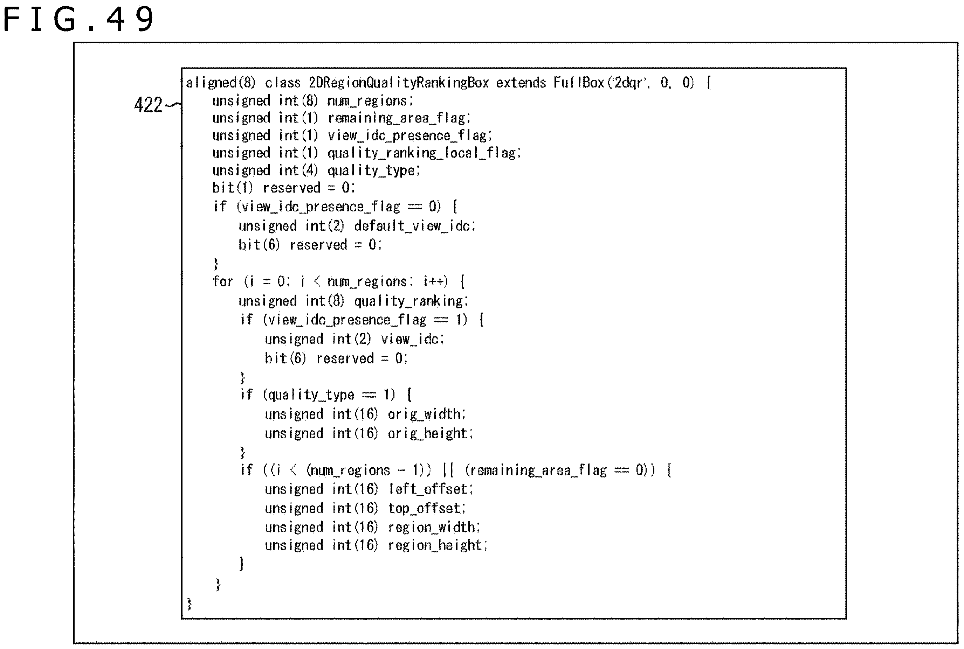

   FIG. 49 is a diagram depicting an example of a syntax of 2D Region Quality Ranking Box.
[FIG. 50]

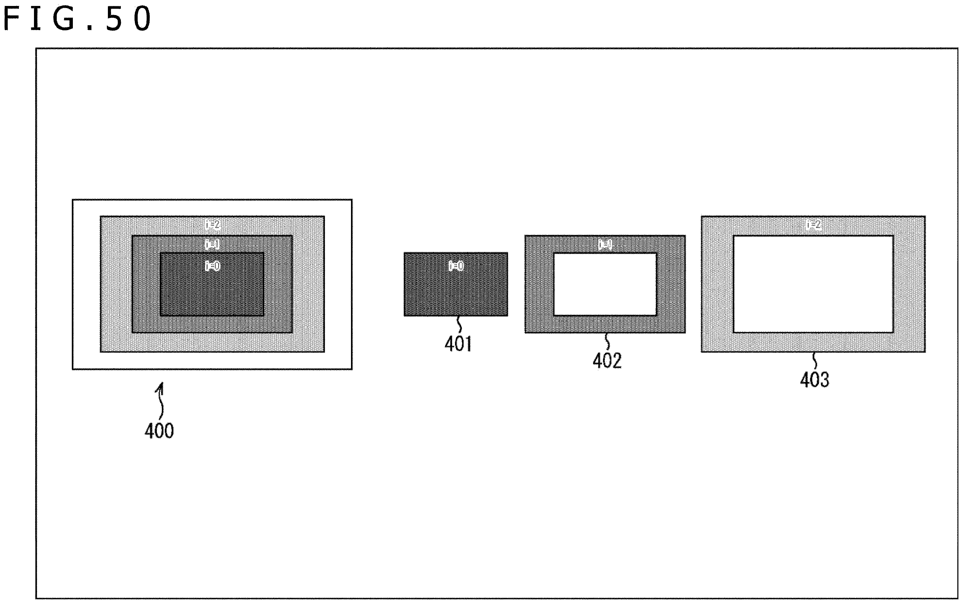

   FIG. 50 is a diagram depicting an example of quality ranking regions.
[FIG. 51]

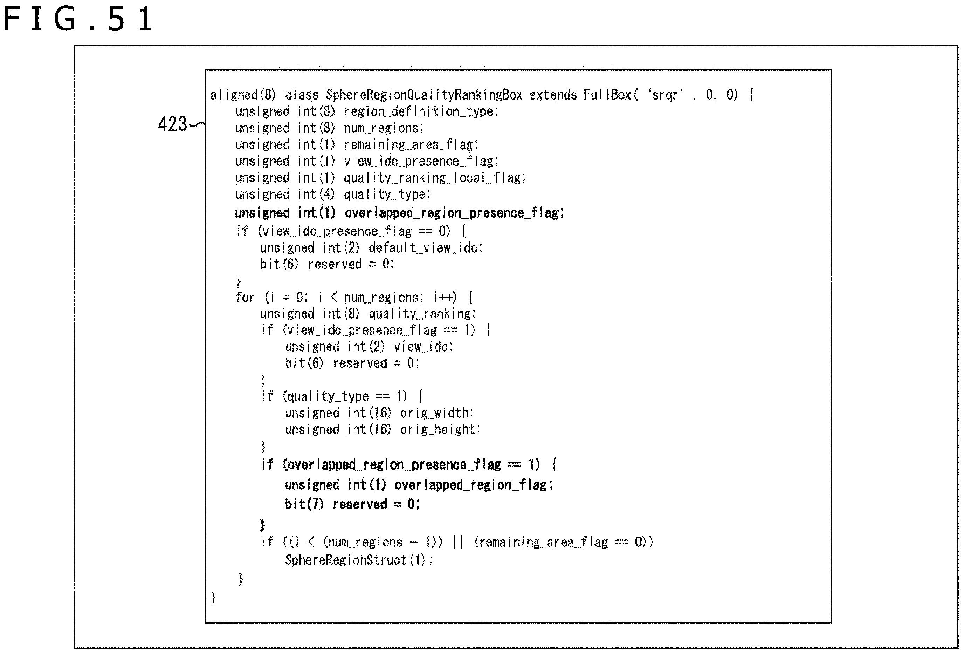

   FIG. 51 is a diagram depicting an example of a syntax of Sphere Region Quality Ranking Box.
[FIG. 52]

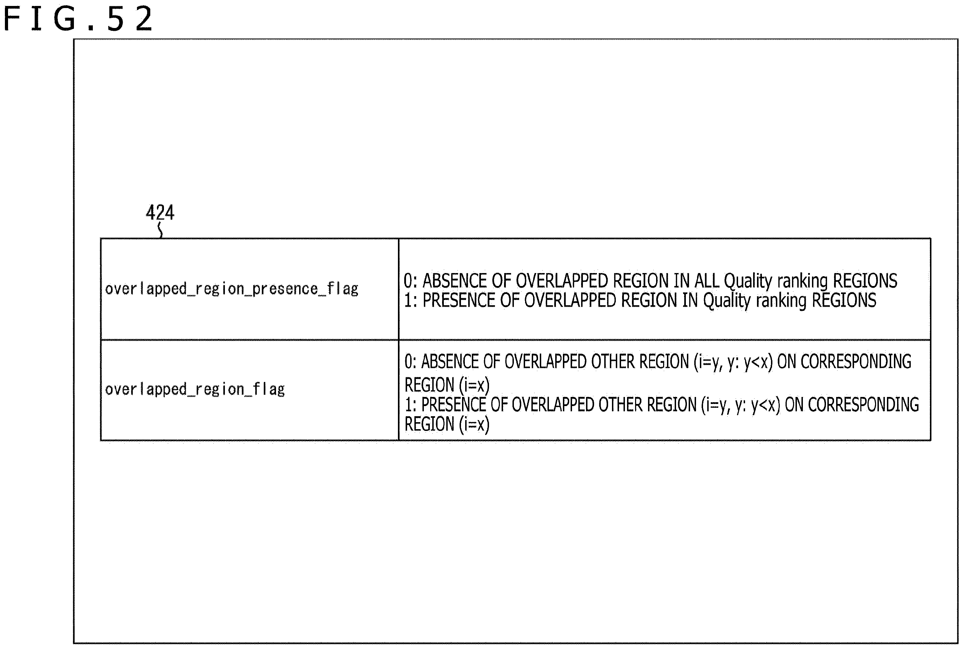

   FIG. 52 is a diagram depicting an example of semantics of an added field.
[FIG. 53]

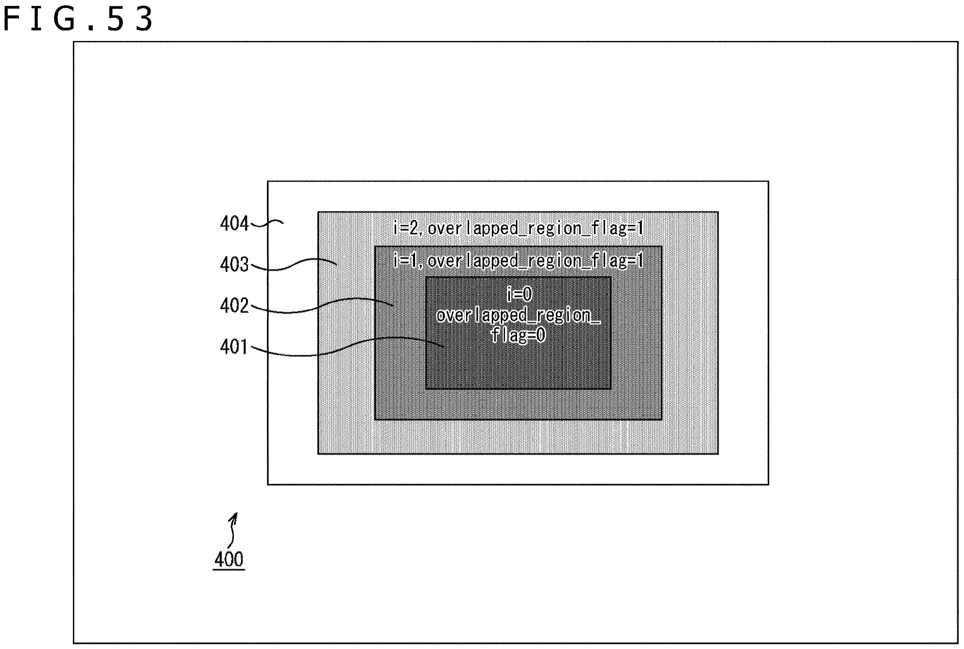

   FIG. 53 is a diagram depicting an example of quality ranking regions.
[FIG. 54]

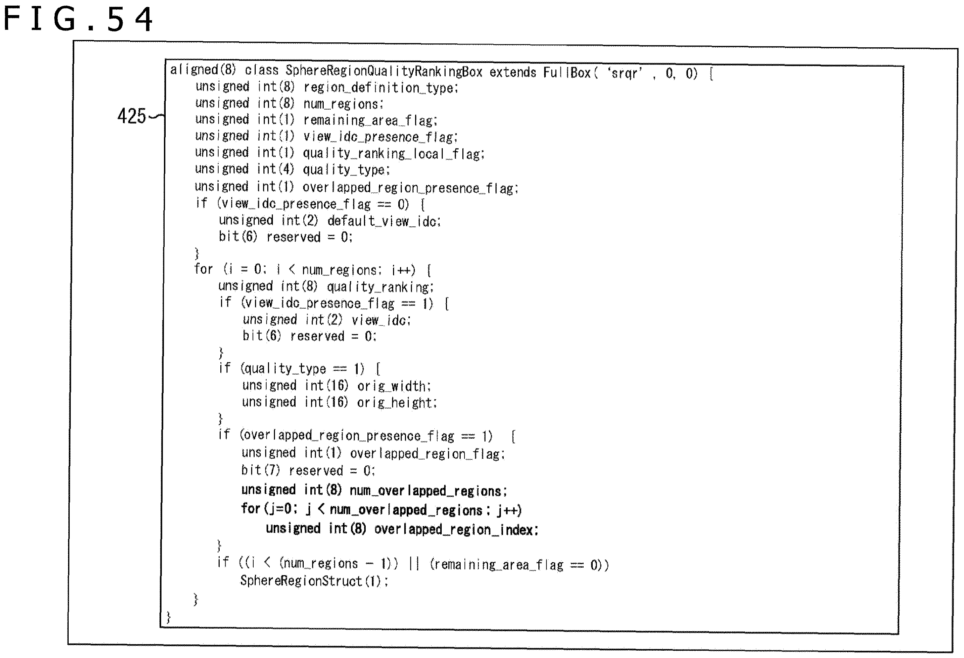

   FIG. 54 is a diagram depicting an example of a syntax of Sphere Region Quality Ranking Box.
[FIG. 55]

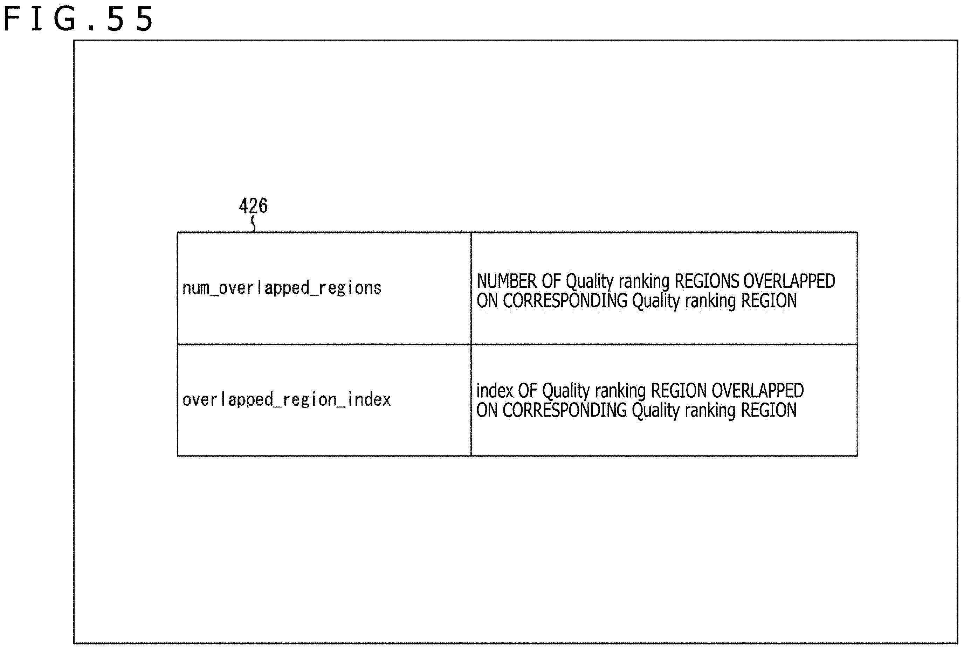

   FIG. 55 is a diagram depicting an example of semantics of an added field.
[FIG. 56]

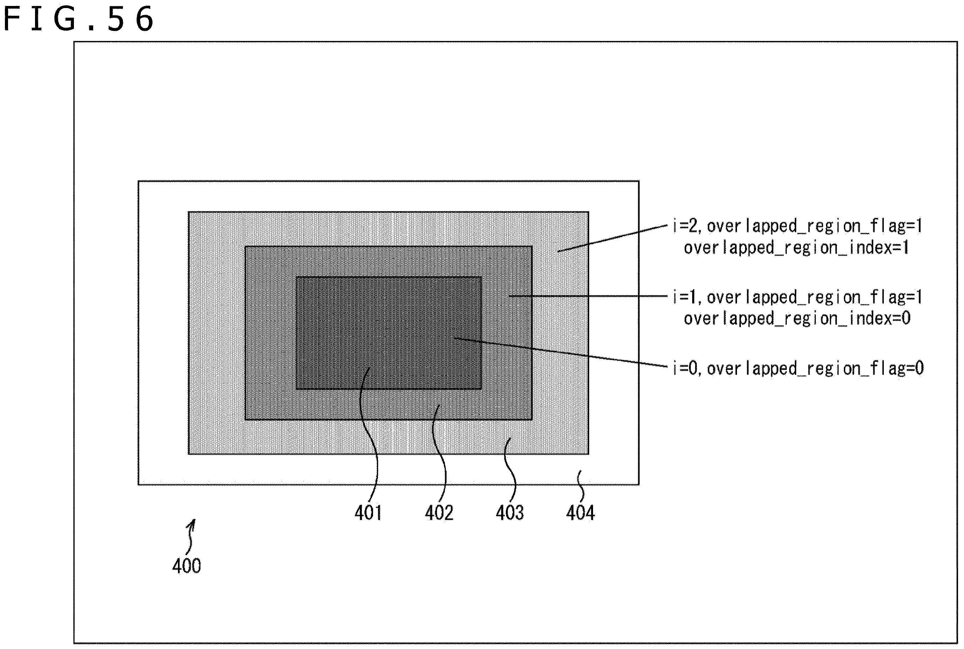

   FIG. 56 is a diagram depicting an example of quality ranking regions.
[FIG. 57]

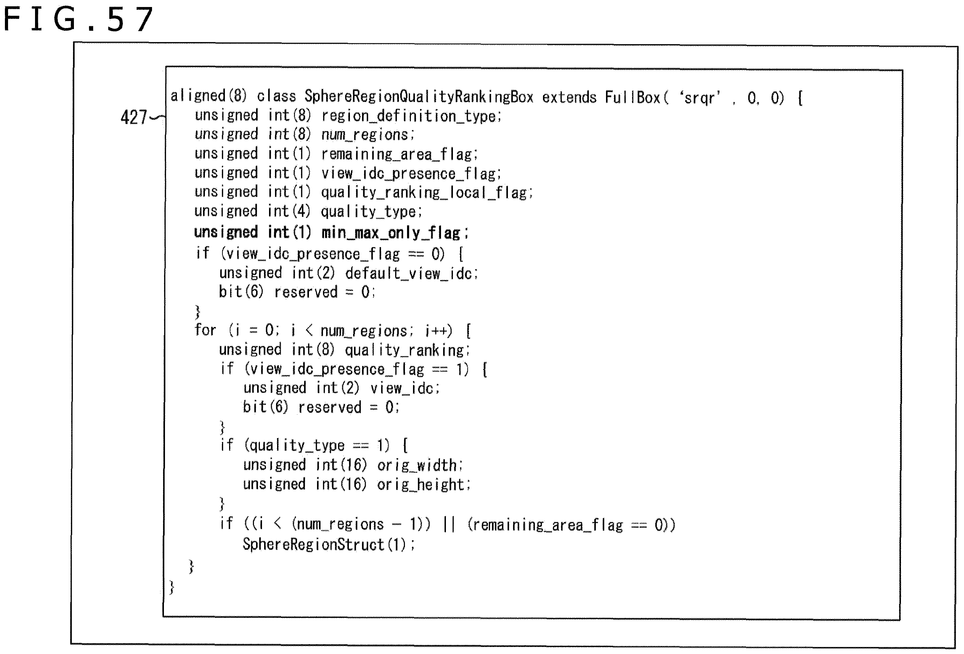

   FIG. 57 is a diagram depicting an example of a syntax of Sphere Region Quality Ranking Box.
[FIG. 58]

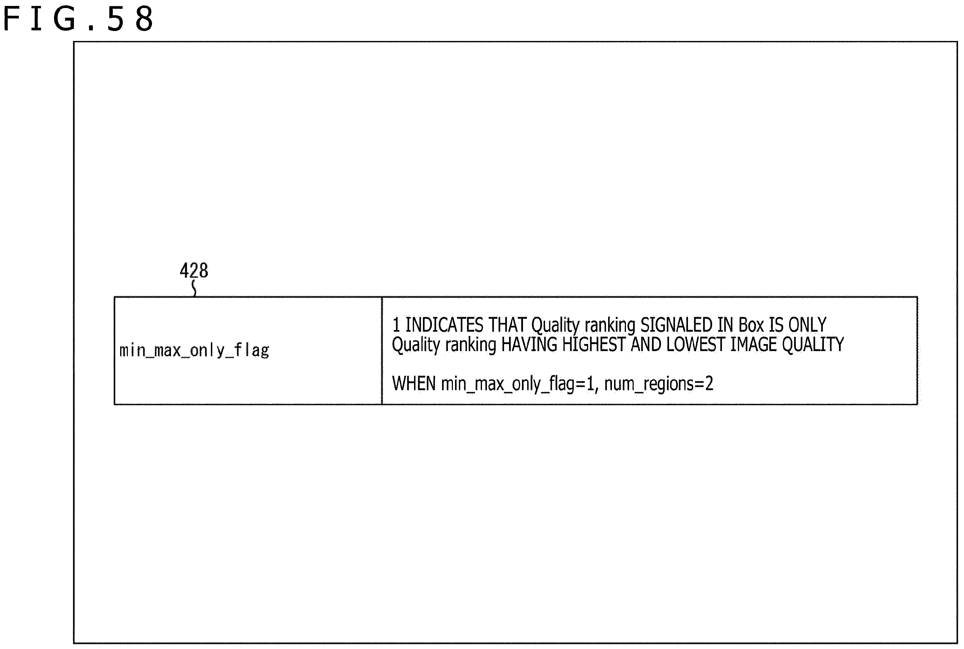

   FIG. 58 is a diagram depicting an example of semantics of an added field.
[FIG. 59]

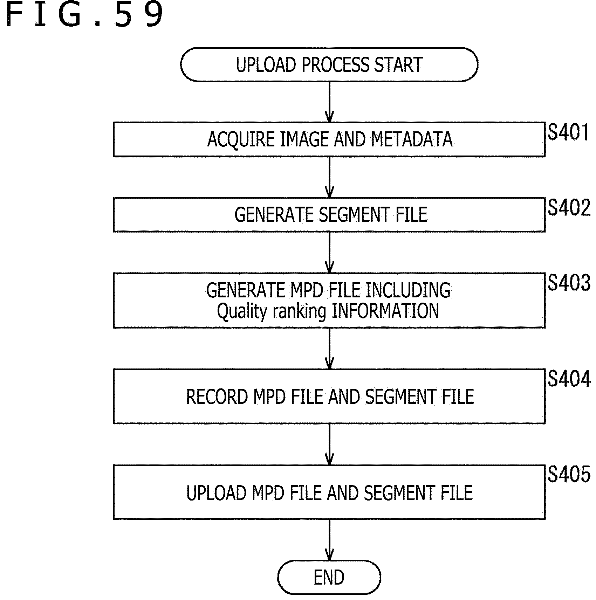

   FIG. 59 is a flowchart explaining an example of a flow of an uploading process.
[FIG. 60]

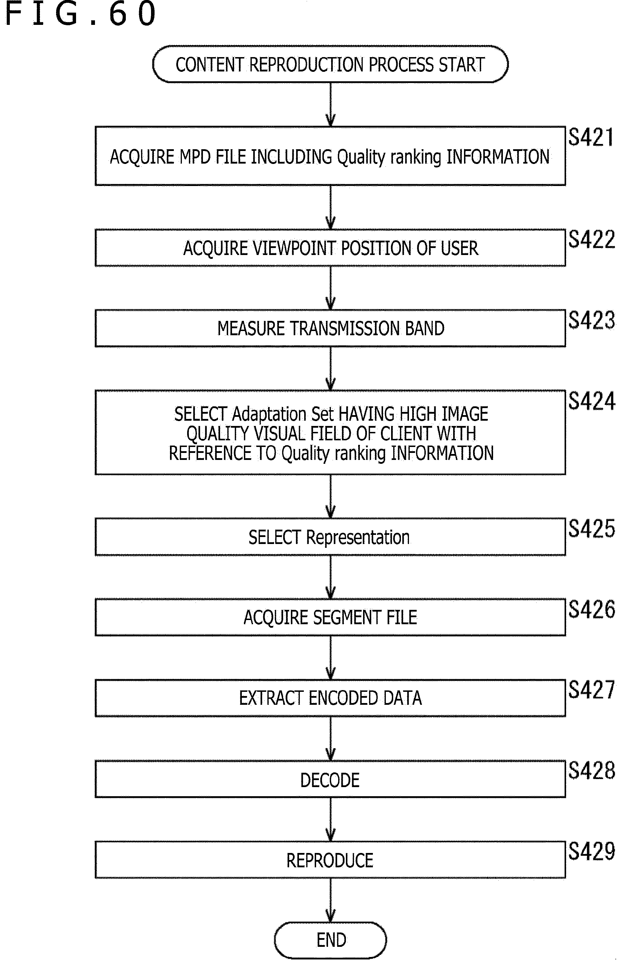

   FIG. 60 is a flowchart explaining an example of a flow of a content reproduction process.
[FIG. 61]

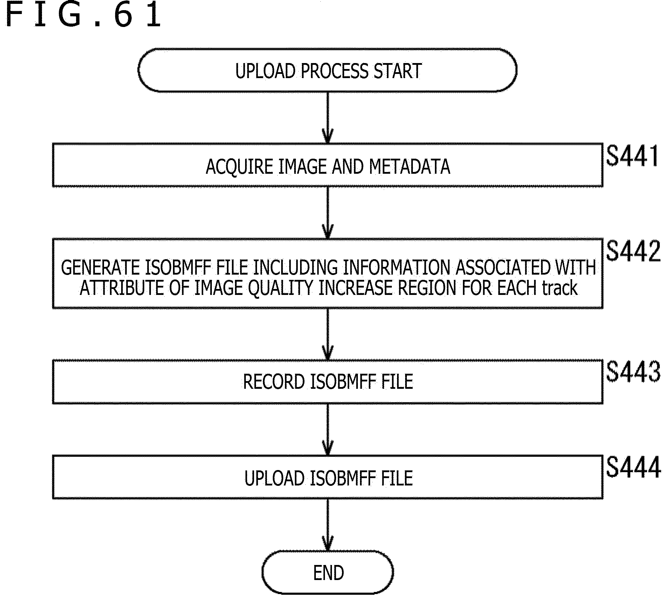

   FIG. 61 is a flowchart explaining an example of a flow of an uploading process.
[FIG. 62]

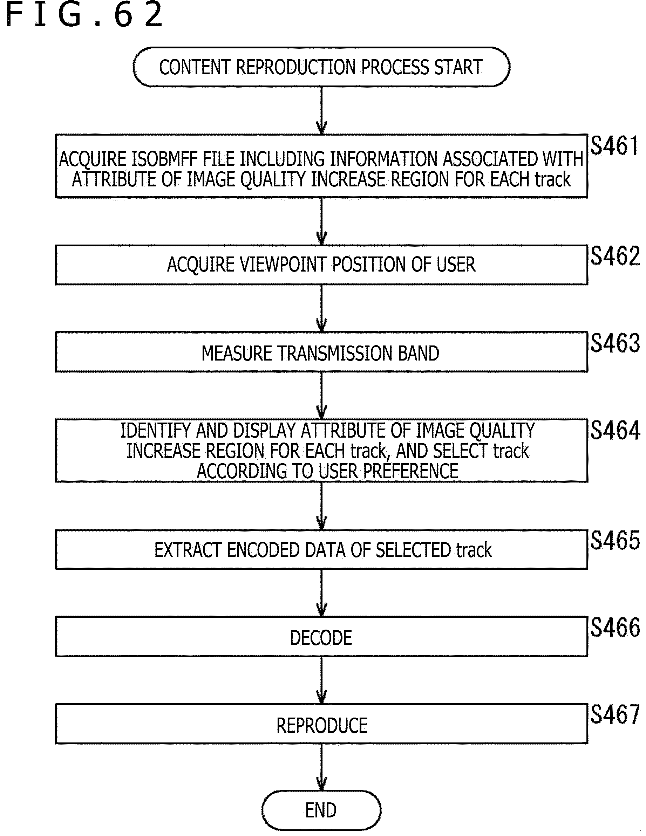

   FIG. 62 is a flowchart explaining an example of a flow of a content reproduction process.
[FIG. 63]

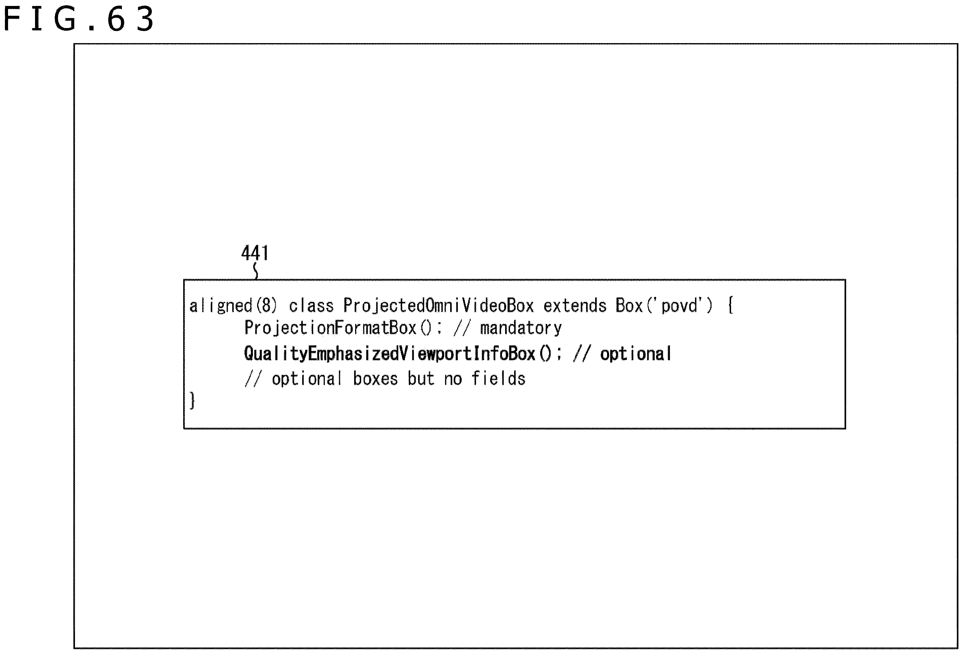

   FIG. 63 is a diagram depicting an example of a syntax of Projected Omnidirectional Video Box.
[FIG. 64]

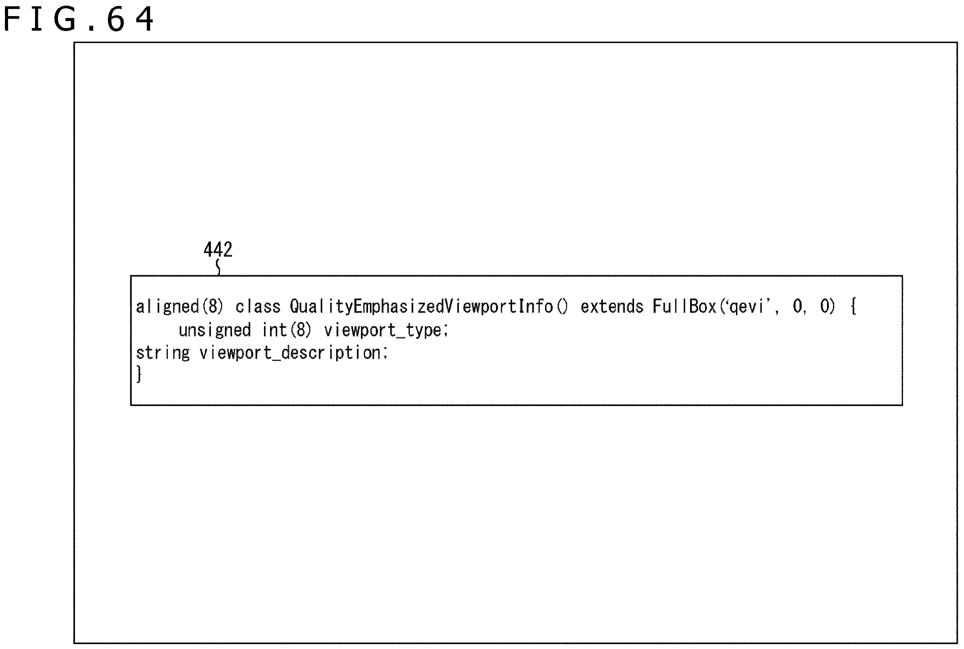

   FIG. 64 is a diagram depicting an example of a syntax of Quality Emphasized Viewport Information Box.
[FIG. 65]

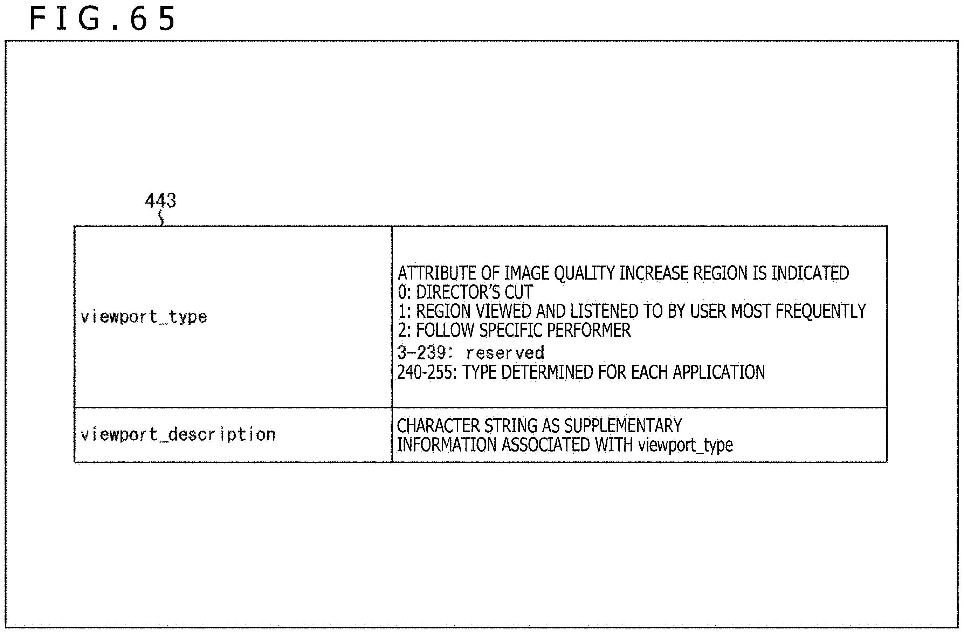

   FIG. 65 is a diagram depicting an example of semantics of an added field.
[FIG. 66]

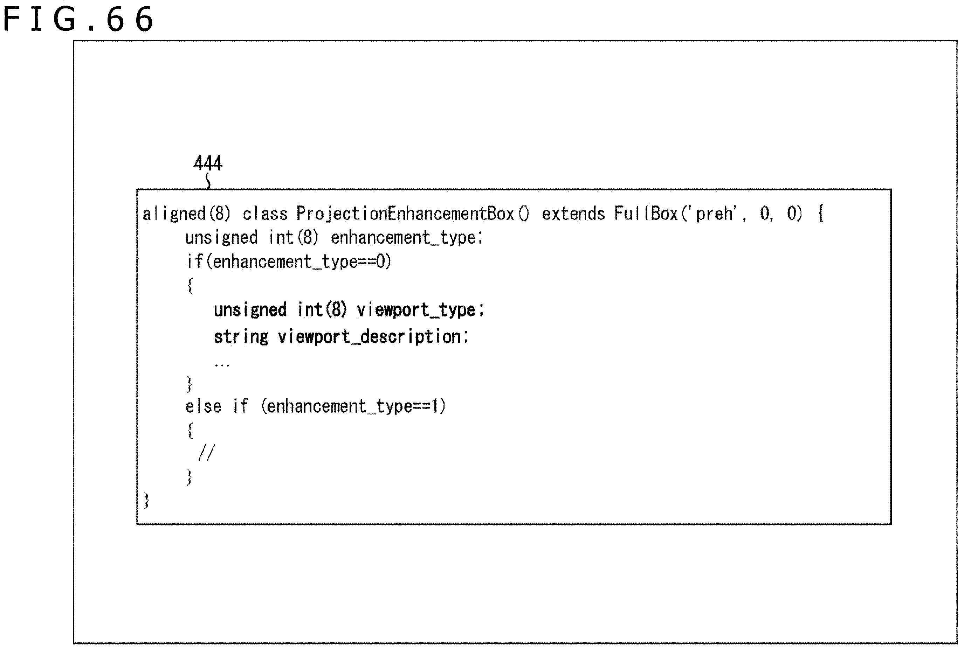

   FIG. 66 is a flowchart explaining an example of a flow of an uploading process.
[FIG. 67]

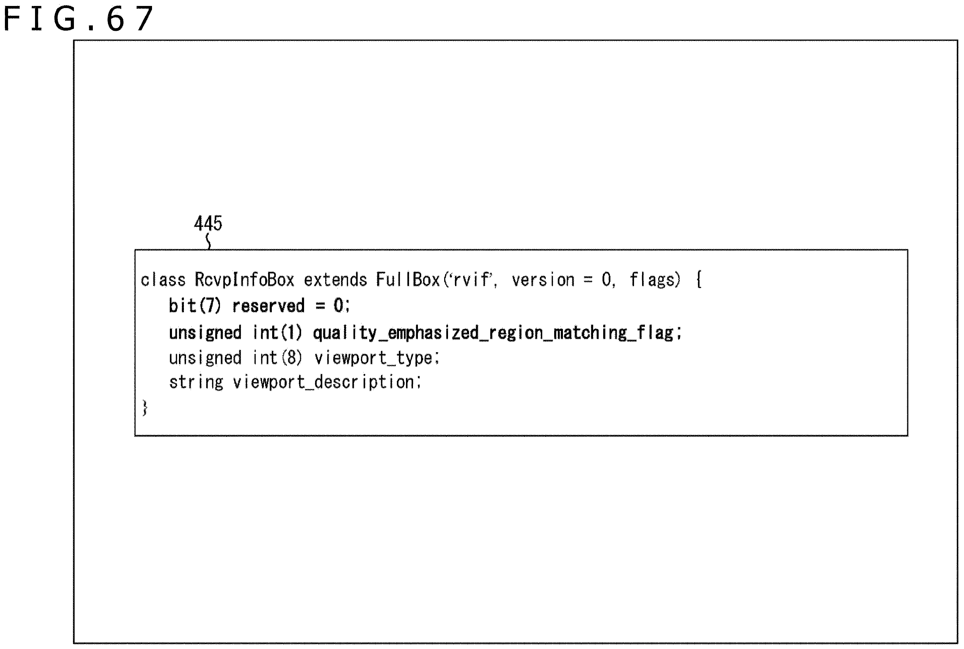

   FIG. 67 is a flowchart explaining an example of a flow of a content reproduction process.
[FIG. 68]

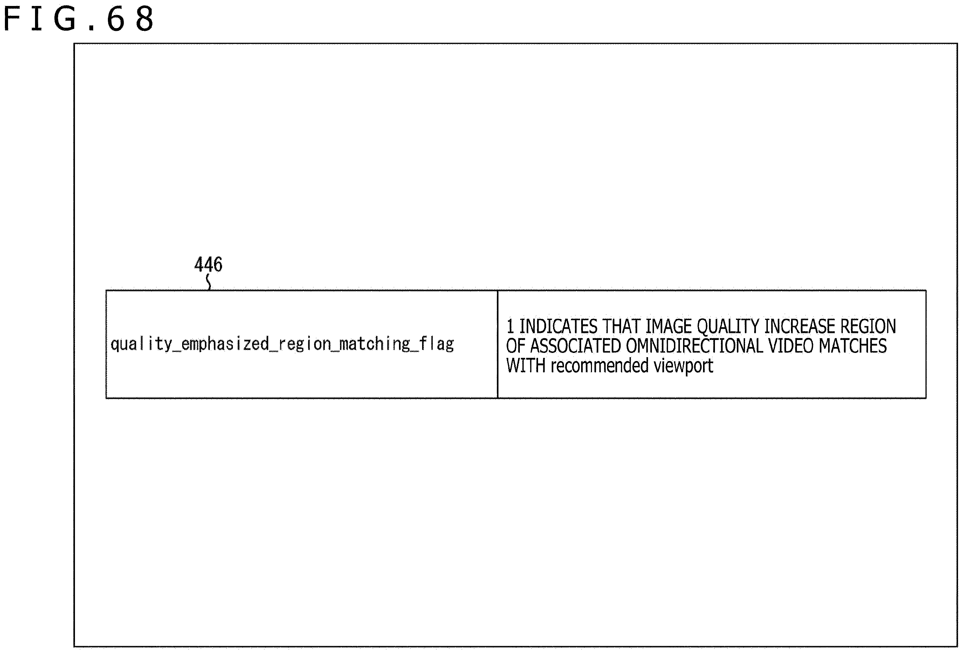

   FIG. 68 is a diagram depicting an example of an attribute value of a quality emphasized viewport info descriptor.
[FIG. 69]

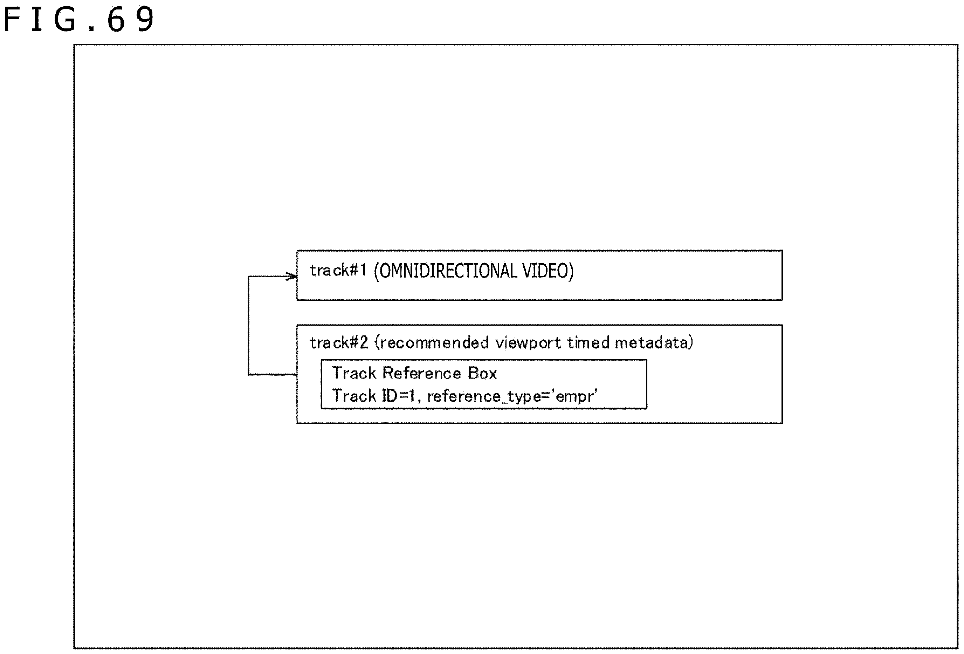

   FIG. 69 is a diagram depicting an example of a datatype.
[FIG. 70]

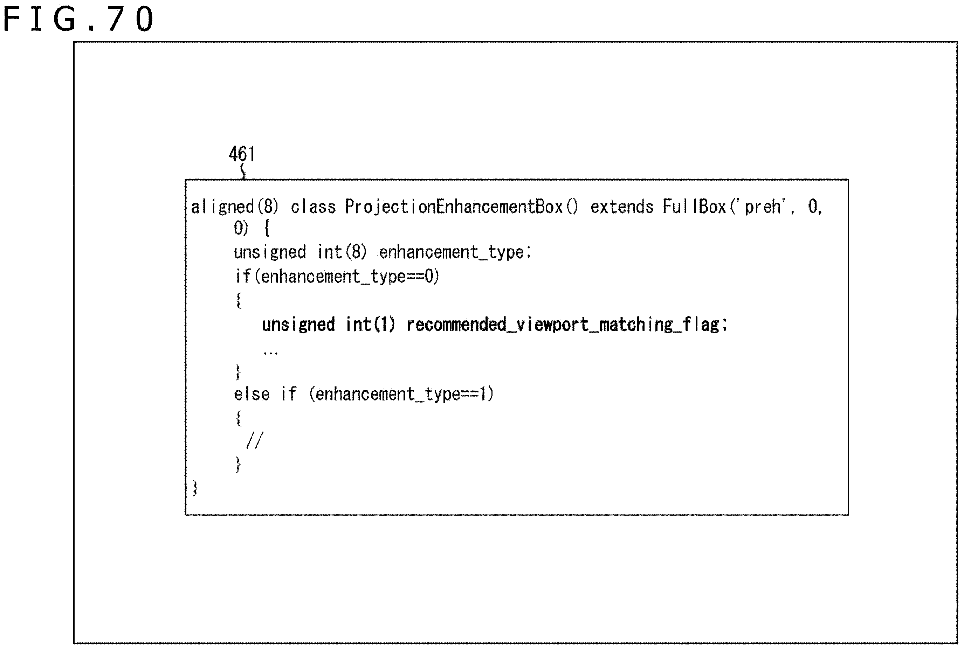

   FIG. 70 is a diagram depicting an example of a syntax of Projection Enhancement Box.
[FIG. 71]

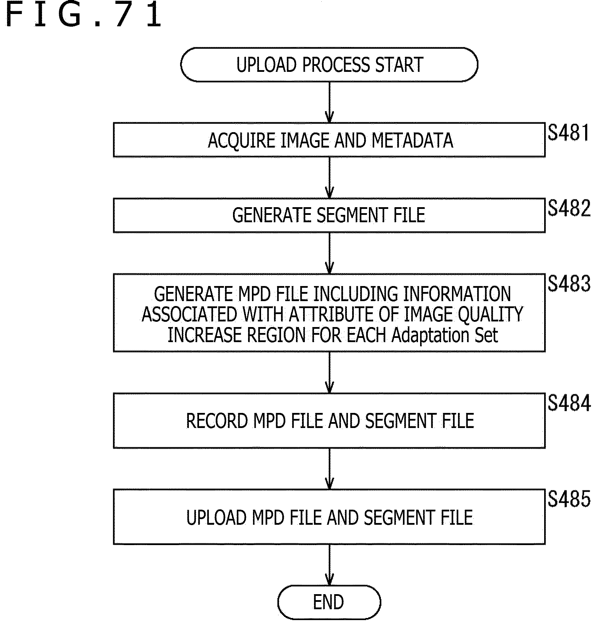

   FIG. 71 is a diagram depicting an example of a syntax of Recommended viewport information Box.
[FIG. 72]

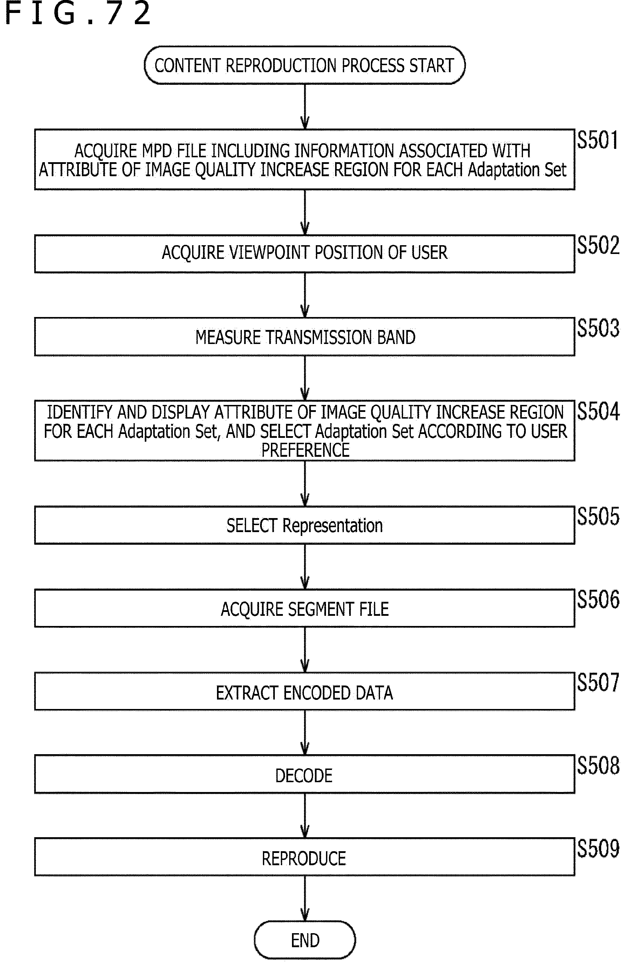

   FIG. 72 is a diagram depicting an example of semantics of an added field.
[FIG. 73]

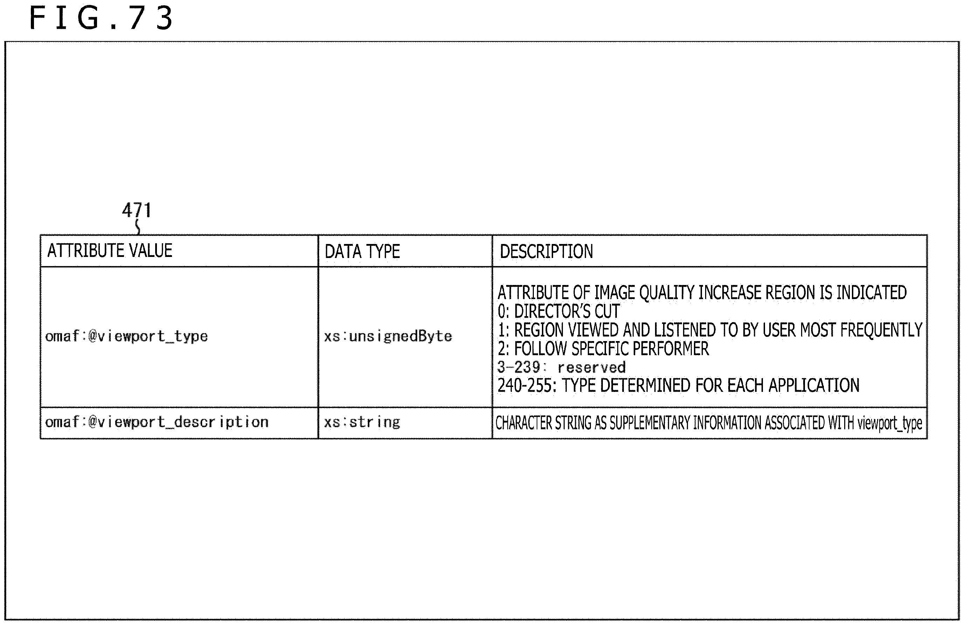

   FIG. 73 is a diagram depicting an example of a state of association between a track of omnidirectional video and a track of recommended viewport timed metadata.
[FIG. 74]

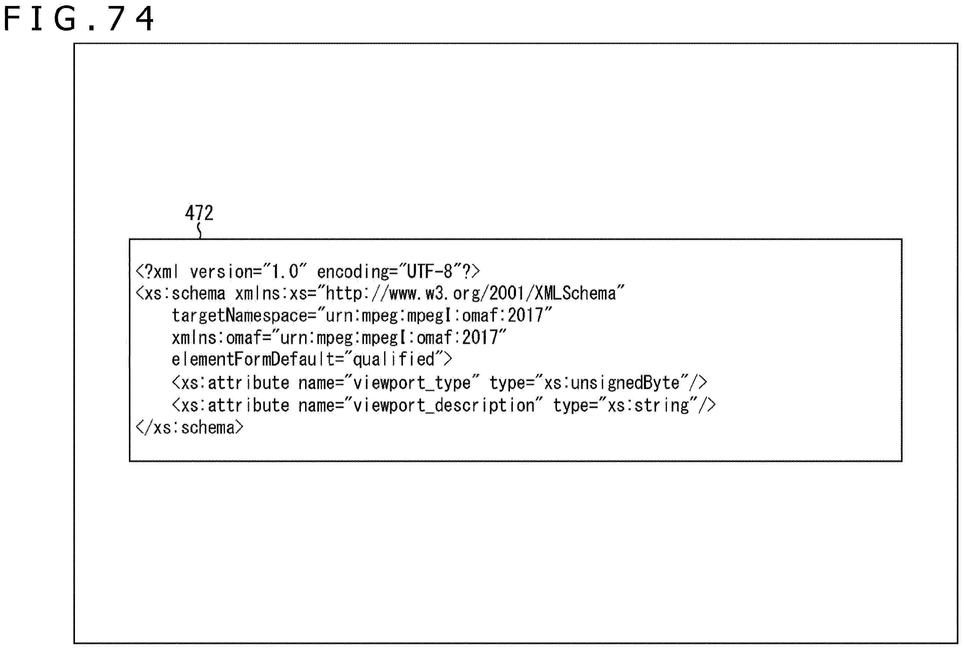

   FIG. 74 is a diagram depicting an example of an attribute value of a recommended viewport information descriptor.
[FIG. 75]

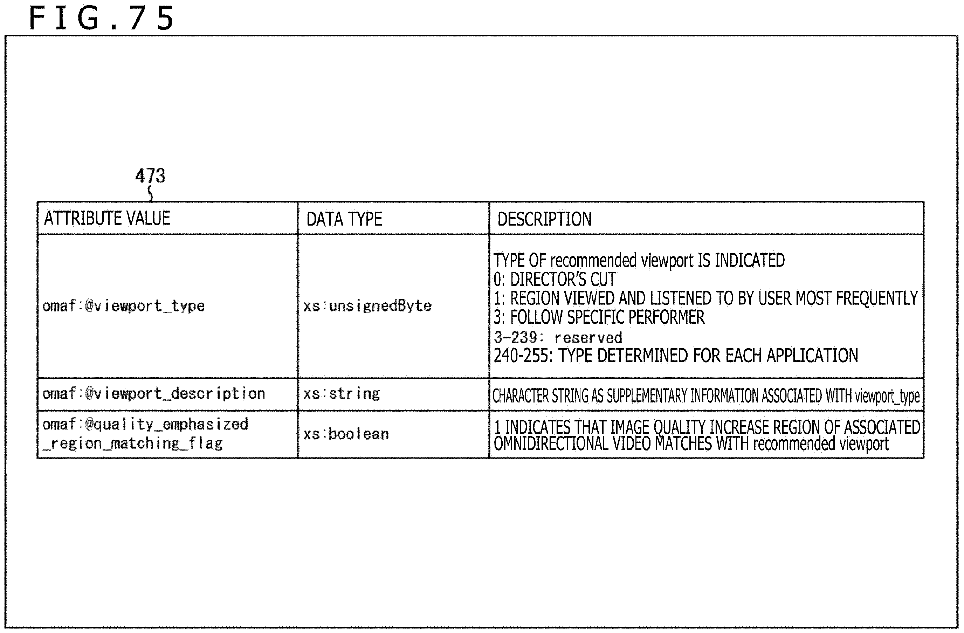

   FIG. 75 is a diagram depicting an example of a datatype.
[FIG. 76]

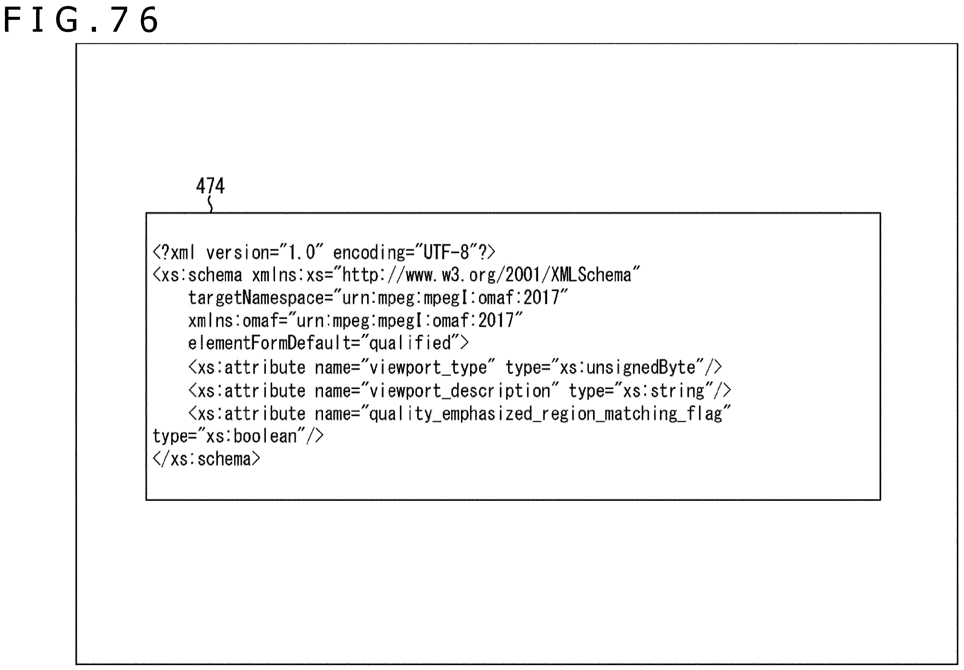

   FIG. 76 is a diagram depicting an example of a syntax of MPD.
[FIG. 77]

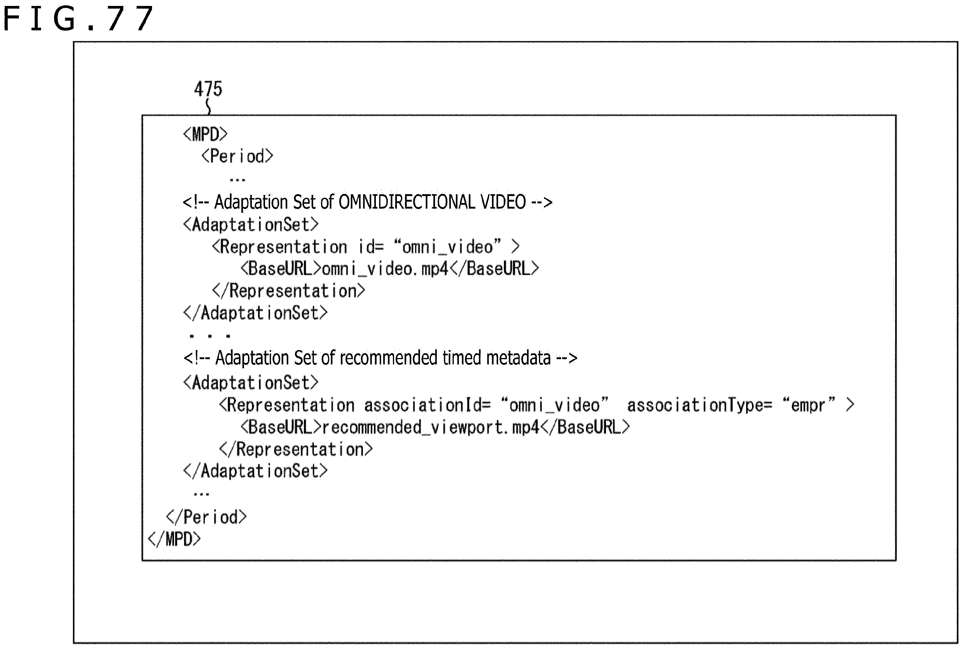

   FIG. 77 is a diagram depicting an example of a syntax of Projection Enhancement Box.
[FIG. 78]

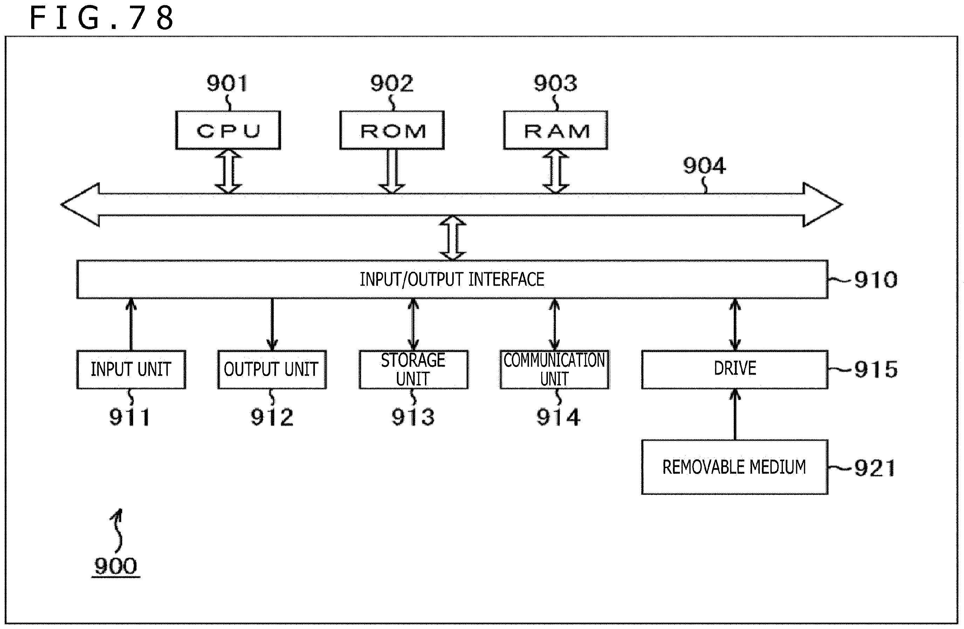

   FIG. 78 is a block diagram depicting a main configuration example of a computer.

### [Description of Embodiments]

Modes for carrying out the present disclosure (hereinafter referred to as embodiments) will be hereinafter described. Note that the description will be presented in a following order.
1. Signaling of information associated with projection extension
2. First embodiment (extension of ISOBMFF)
3. Second embodiment (extension of MPD)
4. Third embodiment (eccentric spherical mapping stream distribution)
5. Additional statement

### <1. Signaling of information associated with projection extension>

### <References and the like supporting technical contents and technical terms>

The range disclosed according to the present technology covers not only contents described in the embodiments but also contents described in the following non-patent literatures known at the time of filing of the present application.

NPL 1: (described above)
NPL 2: (described above)
NPL 3: (described above)

Accordingly, contents described in the above non-patent literatures are also considered as grounds for determining supporting requirements. For example, it is assumed that technical terms such as parsing, syntax, and semantics are also included in the range disclosed according to the present technology, and meet supporting requirements of the claims even in a case where direct description of the terms is not presented in the embodiments.

### <MPEG-DASH>

Conventionally, as described in NPL 1, for example, there has been MPEG-DASH (Moving Picture Experts Group - Dynamic Adaptive Streaming over HTTP (Hypertext Transfer Protocol)) as a standardized specification of an adaptive content distribution technology according to the HTTP protocol.

For example, such MPEG-DASH can achieve video reproduction at an optimal bitrate in accordance with a change of a network band by using HTTP which is a communication protocol similar to a protocol for downloading a webpage of the Internet from a website.

The standard specification further facilitates technology development for infrastructures for moving distribution services and for moving image reproduction clients. Particularly for business operators handling distribution services, the standard specification offers not only an advantage of increasing compatibility between moving image distribution services and moving image reproduction clients, but also an advantage of easily utilizing existing content assets, and therefore is expected to promote market growth.

MPEG-DASH chiefly includes two technical projects, i.e., a standard defining a manifest file specification called MPD (Media Presentation Description) where metadata for managing moving images and audio files is described, and an operation standard of a file format called a segment format for practically transmitting moving image content.

As described in NPL 2, an example of such type of file format is ISOBMFF (International Organization for Standardization Base Media File Format) corresponding to a file container specification of a moving image compression international standard technology "MPEG-4 (Moving Picture Experts Group - 4)." Function extension for meeting requirements of MPEG-DASH is added to ISOBMFF as an extension specification of ISO/IEC (International Organization for Standardization / International Electrotechnical Commission) 14496-12.

### <Distribution of omnidirectional video using MPEG-DASH>

Meanwhile, there is a three-dimensional structure image, such as what is called an omnidirectional video, which is an image 360-degree-surround in the horizontal direction and 180-degree-surround in the vertical direction and is projected on a three-dimensional structure. For example, by rendering a peripheral image as viewed from a viewpoint into a three-dimensional structure around the viewpoint to form a three-dimensional structure image, the peripheral image around the viewpoint can be expressed more naturally, or an image in a desired visual line direction from the three-dimensional structure image can be easily formed.

The use of MPEG-DASH for distribution of the three-dimensional structure image has been considered in recent years. For example, as described in NPL 3, MPEG-DASH is applicable to distribution of the three-dimensional structure image by mapping the three-dimensional structure image on a single plane, and distributing the three-dimensional structure image as a projection planar image produced by mapping the three-dimensional structure image on the plane.

As such projection system (also referred to as a projection format), two methods, i.e., ERP (Equirectangular projection) and CMP (Cubemap projection), have been adopted in MPEG-I Part 2 Omnidirectional Media Format (ISO/IEC 23090-2) FDIS (Final Draft International Standards) (hereinafter also referred to as OMAF) described in NPL 3.

In a case of ERP depicted in an upper part of FIG. 1, a three-dimensional structure image projected on a spherical three-dimensional structure depicted in a left part is mapped on a single plane depicted in a right part in such a manner that the latitude direction and the longitude direction of the three-dimensional structure cross each other at right angles.

In a case of CMP depicted in a lower part of FIG. 1, respective faces of a three-dimensional structure image projected on a cube depicted in a left part are developed, and mapped in a predetermined order on a single plane depicted in a right part.

A projection planar image produced by projecting and mapping an image 360-degree-surround in the horizontal direction and 180-degree-surround in the vertical direction in the above manner is also referred to as a projected picture. Accordingly, a projected picture is a two-dimensional image (two-dimensional picture) expressing an omnidirectional video and determined for each projection format.

### <Viewport dependent image quality increase in omnidirectional video distribution>

Each of ERP and CMP described above is widely supported in the market. However, each of the projection systems does not particularly have a mechanism for improving image quality, and therefore is not considered as an excellent projection format in view of image quality. For example, an image quality increase in a particular direction (also referred to as a viewport dependent image quality increase) in an omnidirectional video has been considered in recent omnidirectional video distribution to optimize a user experience by effective utilization of a bandwidth. However, the foregoing projection formats do not meet the viewport dependent image quality increase.

Accordingly, in a case where an image quality increase with reduction of a drop of encoding efficiency is attempted to optimize the user experience by effective utilization of the bandwidth, a new projection format having a viewport dependent characteristic described above needs to be adopted. However, adoption of such type of format may have a considerable effect on an authoring workflow or client implementation. Accordingly, such type of projection format may be difficult to introduce into the market, and thus difficult to practically use.

### <Provision of information associated with projection extension>

It is therefore attempted to signal (provide for the content reproduction side) information associated with projection extension as an extension method of a projection system for mapping, on a single plane, a three-dimensional structure image as an image projected on a three-dimensional structure.

In such a manner, each of the projection formats becomes capable of meeting the viewport dependent image quality increase without the necessity of changing a considerable authoring workflow or client implementation due to adoption of a new projection format or the like. Accordingly, a higher-quality image can be more easily provided while reducing a drop of encoding efficiency.

### <Projection extension type>

Described next will be type examples of projection extension which is an extension method of a projection system (projection format). Examples of the projection extension type include EAC (Equi-Angular Cubemap). As depicted in FIG. 2, EAC is a mapping method which equalizes angles of a pixel arrangement during projection to a cube surface. In such a manner, pixels are arranged at equal intervals on a spherical surface during display. Accordingly, EAC offers such an advantage that an image quality change at the time of switching visual fields becomes smoother than that change in CMP which equalizes intervals of pixel arrangement on a projection surface. EAC is projection extension applied to CMP.

Examples of the projection extension type further include eccentric spherical mapping. As depicted in FIG. 3, eccentric spherical mapping is a mapping method which produces a spherical surface by normalizing a projection structure and applies a non-uniform pixel arrangement that appears when pixels on a spherical surface are viewed from a shifted position. In such a manner, a viewport dependent image quality increase is achievable. Eccentric spherical mapping is applicable to both ERP and CMP. Moreover, eccentric spherical mapping is applicable to EAC, and also is applicable to other projection formats.

### <Information associated with projection extension>

Next described will be an example of information associated with projection extension to be signaled (included in a file and provided for a client). Information associated with the projection extension described above may be any information useful to a client for correctly processing a stream to which the projection extension is applied (hereinafter also referred to as a projection extension stream). For example, following information may be signaled as the information associated with projection extension.

(A) Whether or not projection extension is applied
(B) Which extension method is applied if projection extension is applied
(C) Information for correct rendering of the projection-extended stream by a client

By signaling information (A), whether or not projection extension is applied to a stream is easily recognizable on the basis of the signaled information (A) on the content reproduction side. Accordingly, selection of a stream in accordance with the capability associated with projection extension on the content reproduction side, i.e., selection of whether or not to apply projection extension, can be made on the content reproduction side.

Moreover, by signaling information (B), a projection extension type applied to a stream is easily recognizable on the basis of the signaled information (B) on the content reproduction side. Accordingly, selection of a stream in accordance with the capability associated with projection extension on the content reproduction side, i.e., selection of the projection extension type, can be made on the content reproduction side.

Furthermore, by signaling information (C), information necessary for rendering of an image of a stream to which projection extension is applied is easily recognizable on the basis of the signaled information (B) on the content reproduction side. Accordingly, selection of a stream in accordance with the capability associated with projection extension on the content reproduction side, i.e., selection of processing contents accompanied with projection extension, can be made on the content reproduction side. In addition, correct rendering of an image of a selected stream is achievable.

More specifically, for example, a client capable of processing a stream to which projection extension is applied can select a stream to which projection extension is applied, while a client incapable of processing such a stream can select a stream to which projection extension is not applied. Accordingly, compatibility between clients is securable.

### <File generation apparatus>

Next described will be a configuration of an apparatus performing signaling associated with projection extension. FIG. 4 is a block diagram depicting an example of a configuration of a file generation apparatus as one mode of an information processing apparatus to which the present technology is applied. A file generation apparatus 100 depicted in FIG. 4 is an apparatus generating ISOBMFF files (segment files) and MPD files. For example, the file generation apparatus 100 incorporating the technologies described in NPL 1 to NPL 3 generates ISOBMFF files including streams and MPD files as control files used for stream distribution control by a method in conformity with MPEG-DASH, and uploads (transmits) the files to a server distributing the files via a network.

Note that FIG. 4 depicts main processing units, data flows and the like, and does not necessarily depict all. More specifically, a processing unit not depicted as a block in FIG. 4, or processing or a data flow not depicted as an arrow or the like in FIG. 4 may exist in the file generation apparatus 100.

The file generation apparatus 100 includes a control unit 101, a memory 102, and a file generation unit 103 as depicted in FIG. 4.

The control unit 101 controls an entire operation of the file generation apparatus 100. For example, the control unit 101 generates ISOBMFF files and MPD files and uploads generated ISOBMFF files and MPD files by controlling the file generation unit 103. The control unit 101 performs processing associated with the control using the memory 102. For example, the control unit 101 performs the foregoing processing associated with control by loading a desired program or the like into the memory 102 and executing the loaded program or the like.

The file generation unit 103 performs processing associated with generation and uploading (transmission) of ISOBMFF files and MPD files under control of the control unit 101. As depicted in FIG. 4, the file generation unit 103 includes a data input unit 111, a data encoding and generation unit 112, an MPD file generation unit 113, a recording unit 114, and an upload unit 115.

The data input unit 111 performs processing associated with reception of data input. For example, the data input unit 111 receives input of data such as images necessary for generation of texture or mesh, metadata necessary for generation of MPD files, and others. In addition, the data input unit 111 supplies received data to the data encoding and generation unit 112 and the MPD file generation unit 113.

The data encoding and generation unit 112 performs processing associated with data encoding and file generation. For example, the data encoding and generation unit 112 generates streams such as texture and mesh on the basis of data such as images supplied from the data input unit 111. Moreover, the data encoding and generation unit 112 generates ISOBMFF files for storing generated streams. Furthermore, the data encoding and generation unit 112 supplies generated ISOBMFF files to the recording unit 114.

As depicted in FIG. 4, the data encoding and generation unit 112 includes a preprocessing unit 121, an encoding unit 122, and a segment file generation unit 123.

The preprocessing unit 121 performs processing for data such as images before encoding. For example, the preprocessing unit 121 generates streams such as texture and mesh on the basis of data such as images supplied from the data input unit 111. In addition, for example, the preprocessing unit 121 supplies the generated streams to the encoding unit 122.

The encoding unit 122 performs processing associated with encoding of streams. For example, the encoding unit 122 encodes streams supplied from the preprocessing unit 121. In addition, for example, the encoding unit 122 supplies encoded data obtained by the encoding to the segment file generation unit 123.

The data segment file generation unit 123 performs processing associated with generation of segment files. For example, the segment file generation unit 123 converts encoded data supplied from the encoding unit 122 into files in units of segment (generates segment files) on the basis of metadata or the like supplied from the data input unit 111. In addition, for example, the segment file generation unit 123 supplies ISOBMFF files generated in the manner described above to the recording unit 114 as processing associated with generation of segment files. For example, the segment file generation unit 123 generates ISOBMFF files as segment files, and supplies the generated ISOBMFF files to the recording unit 114.

The MPD file generation unit 113 performs processing associated with generation of MPD files. For example, the MPD file generation unit 113 generates MPD files on the basis of metadata or the like supplied from the data input unit 111. In addition, for example, the MPD file generation unit 113 supplies generated the MPD files to the recording unit 114. Note that the MPD file generation unit 113 may acquire metadata or the like necessary for generation of MPD files from the segment file generation unit 123.

For example, the recording unit 114 includes any type of recording medium such as a hard disk and a semiconductor memory, and performs processing associated with recording of data and the like. For example, the recording unit 114 records MPD files supplied from the MPD file generation unit 113. In addition, for example, the recording unit 114 records segment files (for example, ISOBMFF files) supplied from the segment file generation unit 123.

The upload unit 115 performs processing associated with uploading (transmission) of files. For example, the upload unit 115 reads out MPD files recorded in the recording unit 114. In addition, for example, the upload unit 115 uploads (transmits), via a network or the like, MPD files that is read out to a server (not depicted) which distributes the MPD files to a client or the like.

Moreover, for example, the upload unit 115 reads out segment files (for example, ISOBMFF files) recorded in the recording unit 114. In addition, for example, the upload unit 115 uploads (transmits), via a network or the like, the segment files that is read out to a server (not depicted) which distributes the segment files to a client or the like.

Accordingly, the upload unit 115 functions as a communication unit which transmits MPD files and segment files (for example, ISOBMFF files) to a server. Note that the destination of the MPD files and the destination of the segment files (for example, ISOBMFF files) each transmitted by the upload unit 115 may be either identical to or different from each other. In addition, described herein is an example where the file generation apparatus 100 functions as an apparatus which uploads MPD files and segment files (for example, ISOBMFF files) to a server for distributing the files to a client. However, the file generation apparatus 100 may function as the server. In such a case, it is sufficient that the upload unit 115 of the file generation apparatus 100 distributes MPD files and segment files (for example, ISOBMFF files) to a client via a network.

### <Client apparatus>

FIG. 5 is a block diagram depicting an example of a configuration of a client apparatus according to one mode of an information processing apparatus to which the present technology is applied. A client apparatus 200 depicted in FIG. 5 is an apparatus which acquires MPD files and segment files (for example, ISOBMFF files) and reproduces content on the basis of the files. For example, the client apparatus 200 incorporating the technologies described in NPL 1 to NPL 3 acquires a segment file from a server (or the file generation apparatus 100 described above) by a method in conformity with MPEG-DASH, and reproduces a stream (content) included in the segment file. At this time, the client apparatus 200 may acquire an MPD file from the server (or the file generation apparatus 100 described above), select a desired segment file using the MPD file, and acquire the selected segment file from the server.

Note that FIG. 5 depicts main processing units, data flows and the like, and does not necessarily depict all. More specifically, a processing unit not depicted as a block in FIG. 5, or processing or a data flow not depicted as an arrow or the like in FIG. 5 may exist in the client apparatus 200.

As depicted in FIG. 5, the client apparatus 200 includes a control unit 201, a memory 202, and a reproduction processing unit 203.

The control unit 201 controls an entire operation of the client apparatus 200. For example, the control unit 201 acquires MPD files and segment files (for example, an ISOBMFF files) from a server and reproduces streams (content) included in segment files by controlling the reproduction processing unit 203. The control unit 201 performs processing associated with the control using the memory 202. For example, the control unit 201 performs processing associated with the above control by loading a desired program or the like into the memory 202 and executing the loaded program or the like.

The reproduction processing unit 203 performs processing associated with reproduction of streams (content) included in segment files under control of the control unit 201. As depicted in FIG. 5, the reproduction processing unit 203 includes a measuring unit 211, an MPD file acquisition unit 212, an MPD file processing unit 213, a segment file acquisition unit 214, a display control unit 215, a data analysis and decoding unit 216, and a display unit 217.

The measuring unit 211 performs processing associated with measurement. For example, the measuring unit 211 measures a transmission band of a network between the client apparatus 200 and a server. In addition, for example, the measuring unit 211 supplies results obtained by the measurement to the MPD file processing unit 213.

For example, the MPD file acquisition unit 212 performs processing associated with acquisition of MPD files. For example, the MPD file acquisition unit 212 acquires an MPD file corresponding to desired content (content to be reproduced) from a server via a network. In addition, for example, the MPD file acquisition unit 212 supplies the acquired MPD file to the MPD file processing unit 213.

The MPD file processing unit 213 performs processing based on MPD files. For example, the MPD file processing unit 213 selects a stream to be acquired on the basis of an MPD file supplied from the MPD file acquisition unit 212. In addition, for example, the MPD file processing unit 213 supplies selection results to the segment file acquisition unit 214. Note that streams to be acquired are selected by also appropriately using measurement results supplied from the measuring unit 211, and information associated with a viewpoint position and a visual line direction of a user and supplied from the display control unit 215.

The segment file acquisition unit 214 performs processing associated with acquisition of segment files (for example, ISOBMFF files). For example, the segment file acquisition unit 214 acquires a segment file storing a stream necessary for reproduction of desired content from a server via a network. In addition, for example, the segment file acquisition unit 214 supplies an acquired segment file to the data analysis and decoding unit 216.

Note that the server from which the segment file acquisition unit 214 acquires segment files (for example, ISOBMFF files) may be either identical to or different from the server from which the MPD file acquisition unit 212 acquires MPD files. In addition, the segment file acquisition unit 214 may acquire segment files on the basis of selection results of streams supplied from the MPD file processing unit 213. More specifically, the segment file acquisition unit 214 may acquire, from a server, segment files storing streams selected on the basis of MPD files or the like.

The display control unit 215 performs processing associated with control of content reproduction (display). For example, the display control unit 215 acquires detection results concerning a viewpoint position or a visual line direction of a user viewing or listening to content. In addition, for example, the display control unit 215 supplies the acquired detection results (information associated with the viewpoint position or the visual line direction of the user) to the MPD file processing unit 213 or the data analysis and decoding unit 216.

The data analysis and decoding unit 216 performs processing associated with data analysis and decoding, and the like. For example, the data analysis and decoding unit 216 processes an ISOBMFF file supplied from the segment file acquisition unit 214, and generates a display image of content. In addition, the data analysis and decoding unit 216 supplies data indicating the display image to the display unit 217.

As depicted in FIG. 5, the data analysis and decoding unit 216 includes a segment file processing unit 221, a decoding unit 222, and a display information generation unit 223.

The segment file processing unit 221 performs processing for segment files (for example, ISOBMFF files). For example, the segment file processing unit 221 extracts encoded data of a desired stream from an ISOBMFF file supplied from the segment file acquisition unit 214. In addition, for example, the segment file processing unit 221 supplies the extracted encoded data to the decoding unit 222.

Note that the segment file processing unit 221 may select a stream on the basis of information associated with the viewpoint position or the visual line direction of the user and supplied from the display control unit 215, the transmission band measured by the measuring unit 211, and the like, and extract encoded data of the selected stream from a corresponding segment file.

The decoding unit 222 performs processing associated with decoding. For example, the decoding unit 222 decodes encoded data supplied from the segment file processing unit 221. In addition, for example, the decoding unit 222 supplies a stream obtained by the decoding to the display information generation unit 223.

The display information generation unit 223 performs processing associated with generation of data indicating display images. For example, the display information generation unit 223 generates data indicating a display image corresponding to the viewpoint position and the visual line direction of the user on the basis of information associated with the viewpoint position and the visual line direction of the user and supplied from the display control unit 215 and a stream supplied from the decoding unit 222. In addition, for example, the display information generation unit 223 supplies the data generated and indicating the display image to the display unit 217.

The display unit 217 includes any type of display device such as a display and a projector each having a liquid crystal display panel or the like, for example, and performs processing associated with image display using the display device. For example, the display unit 217 performs content reproduction such as image display on the basis of data supplied from the display information generation unit 223.

### <2. First embodiment>

### <Signaling of information associated with projection extension using ISOBMFF>

Signaling of information associated with projection extension as described above may be performed using ISOBMFF files which are segment files.

More specifically, such a file may be generated which includes information associated with projection extension as an extension method of a projection system for mapping, on a single plane, a three-dimensional structure image as an image projected on a three-dimensional structure.

For example, the segment file generation unit 123 of the file generation apparatus 100 as an information processing apparatus may function as a file generation unit which generates a file including information associated with projection extension as an extension method of a projection system for mapping, on a single plane, a three-dimensional structure image as an image projected on a three-dimensional structure. More specifically, the information processing apparatus (for example, the file generation apparatus 100) may include the file generation unit (for example, the segment file generation unit 123).

Note that streams in ISOBMFF files are managed as tracks. Accordingly, in a case of use of an ISOBMFF file, a stream is selected by selecting a track.

### <Flow of uploading process>

Described with reference to a flowchart in FIG. 6 will be an example of a flow of an uploading process executed in the foregoing case by the file generation apparatus 100 in FIG. 4.

In response to a start of the uploading process, the data input unit 111 of the file generation apparatus 100 acquires an image and metadata in step S101.

In step S102, the segment file generation unit 123 generates an ISOBMFF file including information associated with projection extension.

In step S103, the recording unit 114 records the ISOBMFF file generated by processing in step S102.

In step S104, the upload unit 115 reads out the ISOBMFF file recorded in step S103 from the recording unit 114 and uploads the ISOBMFF file to a server.

After completion of processing in step S104, the uploading process ends.

By performing the uploading process in the manner described above, the file generation apparatus 100 can generate ISOBMFF files including information associated with projection extension.

Accordingly, a client can appropriately acquire streams corresponding to its own capability and render the streams on the basis of the information associated with projection extension. More specifically, for example, a client capable of processing a stream to which projection extension is applied can select a stream to which projection extension is applied, while a client incapable of processing such a stream can select a stream to which projection extension is not applied. Accordingly, a projection format is capable of meeting a viewport dependent image quality increase while securing compatibility between clients. In other words, a higher-quality image can be more easily provided while reducing a drop of encoding efficiency.

### <Use of information associated with projection extension signaled in ISOBMFF>

In addition, selection and rendering of streams may be performed using information associated with projection extension and signaled in ISOBMFF files.

More specifically, it is allowed to acquire a file including information associated with projection extension as an extension method of a projection system for mapping, on a single plane, a three-dimensional structure image as an image projected on a three-dimensional structure, and image encoded data indicating encoded projection planar image produced by mapping the three-dimensional structure image on the plane by the projection system to which the projection extension is applied, and select a stream of the image encoded data on the basis of information associated with the projection extension included in the acquired file.

For example, the segment file acquisition unit 214 of the client apparatus 200 which is an information processing apparatus may function as a file acquisition unit which acquires a file including information associated with projection extension as an extension method of a projection system for mapping, on a single plane, a three-dimensional structure image as an image projected on a three-dimensional structure, and image encoded data indicating encoded projection planar image produced by mapping the three-dimensional structure image on the plane by the projection system to which the projection extension is applied. In addition, the data analysis and decoding unit 216 may function as an image processing unit which selects a stream of the image encoded data on the basis of information associated with the projection extension included in the file acquired by the file acquisition unit. Accordingly, the information processing apparatus (for example, the client apparatus 200) may include the file acquisition unit (for example, the segment file acquisition unit 214) and the image processing unit (for example, the data analysis and decoding unit 216).

### <Flow of content reproduction process>

Described with reference to a flowchart in FIG. 7 will be an example of a flow of a content reproduction process executed in the foregoing case by the client apparatus 200.

In response to a start of the content reproduction process, the segment file acquisition unit 214 of the client apparatus 200 acquires an ISOBMFF file including information associated with projection extension in step S121.

In step S122, the display control unit 215 acquires a measurement result of a viewpoint position (and a visual line direction) of a user.

In step S123, the measuring unit 211 measures a transmission bandwidth of a network between a server and the client apparatus 200.

In step S124, the segment file processing unit 221 designates tracks using a projection format handled by the client apparatus 200 as selection candidates.

In step S125, the segment file processing unit 221 determines whether or not the client apparatus 200 handles the extension projection. In a case where the client apparatus 200 is determined to handle the extension projection, the process proceeds to step S126.

In step S126, the segment file processing unit 221 selects a track corresponding to the viewpoint position and the visual line of the user, the transmission bandwidth of the network between the client and the server, and the like. At this time, the segment file processing unit 221 selects a desired track from tracks of the extension type handled by the client apparatus 200 and tracks to which the projection extension is not applied in the selection candidates set in step S124. After completion of processing in step S126, the process proceeds to step S128.

In addition, in a case where the client apparatus 200 is not determined to handle the extension projection in step S125, the process proceeds to step S127.

In step S127, the segment file processing unit 221 selects a track corresponding to the viewpoint position and the visual line of the user, the transmission bandwidth of the network between the client and the server, and the like. At this time, the segment file processing unit 221 selects a desired track from tracks to which the projection extension is not applied in the selection candidates set in step S124. After completion of processing in step S127, the process proceeds to step S128.

More specifically, the segment file processing unit 221 designates tracks corresponding to the function (capability) of the client apparatus 200 as candidates on the basis of information associated with the projection extension and included in the ISOBMFF file, and selects a desired track from the candidates.

In step S128, the segment file processing unit 221 extracts encoded data of a stream of the track selected in step S126 or step S127 from the ISOBMFF file acquired in step S121.

In step S129, the decoding unit 222 decodes encoded data of the stream extracted in step S128.

In step S130, the display information generation unit 223 reproduces the stream (content) acquired by the decoding in step S129. More specifically, the display information generation unit 223 generates data indicating a display image from the stream, and supplies the generated data to the display unit 217 to allow display of the data.

After completion of processing in step S130, the content reproduction process ends.

By performing the content reproduction process in the manner described above, the client apparatus 200 can reproduce streams (content corresponding to the streams) included in ISOBMFF files using information associated with projection extension and included in the ISOBMFF files.

Accordingly, the client apparatus 200 can appropriately acquire streams corresponding to its own capability and render the streams on the basis of the information associated with projection extension. More specifically, for example, a client capable of processing a stream to which projection extension is applied can select a stream to which projection extension is applied, while a client incapable of processing such a stream can select a stream to which projection extension is not applied. Accordingly, a projection format is capable of meeting a viewport dependent image quality increase while securing compatibility between clients. In other words, a higher-quality image can be more easily provided while reducing a drop of encoding efficiency.

### <Details of information associated with projection extension>

Note that information associated with projection extension may include information indicating whether projection extension is applied (information (A)). For example, the segment file generation unit 123 of the file generation apparatus 100 may provide ISOBMFF files with information associated with projection extension and including information which indicates whether projection extension is applied (information (A)). Moreover, for example, the data analysis and decoding unit 216 of the client apparatus 200 may identify whether projection extension is applied on the basis of information which indicates whether projection extension is applied (information (A)) in information associated with projection extension and included in ISOBMFF files, and select streams on the basis of a result of the identification.

In addition, information associated with projection extension may include information indicating a projection extension type to be applied (information (B)). For example, the segment file generation unit 123 of the file generation apparatus 100 may provide ISOBMFF files with information associated with projection extension and including information which indicates a projection extension type to be applied (information (B)). Moreover, for example, the data analysis and decoding unit 216 of the client apparatus 200 may identify a projection extension type to be applied on the basis of information which indicates the projection extension type to be applied (information (B)) in information associated with projection extension and included in ISOBMFF files, and select streams on the basis of a result of the identification.

Note that the projection extension type indicated by the information may include EAC described above. In addition, the projection extension type indicated by the information may include eccentric spherical mapping described above.

Furthermore, information associated with projection extension may include information necessary for rendering into a three-dimensional structure (information (C)). For example, the segment file generation unit 123 of the file generation apparatus 100 may provide ISOBMFF files with information associated with projection extension and including information necessary for rendering into a three-dimensional structure (information (C)). In addition, for example, the data analysis and decoding unit 216 of the client apparatus 200 may select a stream and render an image obtained from the selected stream into a three-dimensional structure using information necessary for rendering into a three-dimensional structure (information (C)) in information included in an ISOBMFF file and associated with projection extension.

A client can appropriately acquire and render projection extension streams by signaling information associated with projection extension described above. Accordingly, a projection format is capable of meeting a viewport dependent image quality increase while securing compatibility between clients. In other words, a higher-quality image can be more easily provided while reducing a drop of encoding efficiency.

### <Projection system>

Described next will be an example of a projection system for mapping, on a single plane, a three-dimensional structure image which is an image 360-degree-surround in the horizontal direction and 180-degree-surround in the vertical direction and is projected on a three-dimensional structure. Any method may be adopted for the projection system. For example, the projection system may include ERP described above. In addition, the projection system may include CMP described above.

### <File configuration>

In ISOBMFF files, streams are managed as tracks, while metadata is stored in boxes having a layered structure. FIG. 8 is a diagram depicting an example of a box layered structure of an ISOBMFF file. As depicted in FIG. 8, Track Box (trak) which stores metadata associated with a corresponding track is defined below Movie Box (moov). Metadata of respective tracks is stored in various boxes further provided in a layered structure included in the Track Box.

Information associated with projection extension as described above may be included in the file thus formed as information for each stream of image encoded data. For example, the file generation unit may generate a file which includes information associated with projection extension as information for each stream of image encoded data which indicates an encoded projection planar image produced by mapping a three-dimensional structure image on a plane by a projection system to which the projection extension is applied.

For example, in an ISOBMFF file of OMAF, information associated with projection extension may be stored in Projected Omnidirectional Video Box (povd) signaled below Scheme Information Box (schi) below Restricted Scheme Information Box (rinf) below Sample Entry.

For example, new Projection Enhancement Box may be defined in Projected Omnidirectional Video Box (povd) described above, and information associated with projection extension may be stored in the box.

A syntax 301 depicted in FIG. 9 indicates an example of a syntax of Projected Omnidirectional Video Box (povd). In a case where projection extension is applied, Projection Enhancement Box which stores information associated with applied projection extension is defined in Projected Omnidirectional Video Box (povd) as indicated in the syntax 301.

A syntax 302 depicted in FIG. 10 indicates an example of a syntax of Projection Enhancement Box. As indicated in the syntax 302, an enhancement_type field indicating an applied extension type is defined in Projection Enhancement Box.

Semantics 303 depicted in FIG. 11 indicates an example of semantics of the enhancement_type field. In such a case, enhancement_type==0 indicates that eccentric spherical mapping is applied. Moreover, enhancement_type==1 indicates that EAC is applied. Furthermore, enhancement_type==2 indicates that EAC and eccentric spherical mapping are applied. In a case where ERP is applied as a projection system in such an example, note that EAC is not allowed to be applied as a projection extension type. Accordingly, the enhancement_type is not allowed to have values 1 and 2.

Besides, as indicated in the syntax 302, information necessary for rendering is stored for each extension type (for each value of enhancementn_type) in "if" sentences in the third and following rows.

As described above, the presence of Projection Enhancement Box in a track (in Projected Omnidirectional Video Box (povd)) indicates that projection extension is applied to a stream of the track. Accordingly, the presence or absence of Projection Enhancement Box corresponds to information indicating whether or not projection extension is applied (information (A) described above).

In other words, information associated with projection extension may include Projection Enhancement Box which is stored in Projected Omnidirectional Video Box and indicates that the projection extension is applied by exhibiting the presence of the box.

In addition, the enhancement_type field defined in the Projection Enhancement Box is information indicating which projection extension is applied to a corresponding stream (information (B) described above). In other words, information associated with projection extension may include the enhancement_type stored in Projection_Enhancement_Box and indicating an applied projection extension type.

In addition, information defined for each value of the enhancement_type value in the Projection Enhancement Box is information necessary for rendering and signaled for each extension type (information (C) described above). In other words, information associated with projection extension may include information stored in Projection Enhancement Box and necessary for rendering into a three-dimensional structure for each projection extension type.

In such a manner, the client apparatus 200 can identify whether or not projection extension is applied, and identify an applied extension type on the basis of the presence or absence of Projection Enhancement Box and a value of enhancement_type. In addition, the client apparatus 200 can obtain information necessary for rendering on the basis of information defined for each enhancement_type. Accordingly, the client apparatus 200 can select a track in accordance with its own capability.

Accordingly, the client apparatus 200 therefore can appropriately acquire projection extension streams and render the streams. In other words, a projection format is capable of meeting a viewport dependent image quality increase while securing compatibility between clients. A higher-quality image thus can be more easily provided while reducing a drop of encoding efficiency.

Note that Projection Format Box is also defined in Projected Omnidirectional Video Box (povd) as indicated by the syntax 301 (FIG. 9). A syntax 304 depicted in FIG. 12 indicates an example of a syntax of Projection Format Box. As indicated in the syntax 304, Projection Format Struct is defined in Projection Enhancement Box.

A syntax 305 depicted in FIG. 13 indicates an example of a syntax of Projection Format Struct. As indicated in the syntax 305, a projection_type field indicating an applied projection system (projection format adopted for a corresponding stream) is defined in Projection Format Struct. For example, which of ERP and CMP is adopted or the like is signaled by the projection_type.

### <Other examples of Projection Enhancement Box>

Note that the position of Projection Enhancement Box is not limited to the position below Projected Omnidirectional Video Box. For example, Projection Enhancement Box may be signaled below another box such as Sample Entry.

Even in such a case, the client apparatus 200 can similarly identify whether or not projection extension is applied, and identify an applied extension type on the basis of the presence or absence of Projection Enhancement Box and a value of the enhancement_type. In addition, the client apparatus 200 can obtain information necessary for rendering on the basis of information defined for each enhancement_type. Accordingly, the client apparatus 200 can select a track in accordance with its own capability.

### <Other examples of projection_type and enhancement_type>

In addition, for example, a stream may be signaled as a projection extension stream in a projection_type field included in Projection Format Struct in Projection Format Box already specified in OMAF, while a projection format and an extension type may be signaled in an enhancement_type field of Projection Enhancement Box.

Semantics 306 in FIG. 14 indicates an example of semantics of the projection_type in such a case. As indicated in the semantics 306, projection_type==0 in such a case indicates that ERP is applied as a projection system (projection format). In addition, projection_type==1 indicates that CMP is applied as a projection system (projection format). Moreover, projection_type==2 indicates that projection extension is applied.

Semantics 307 in FIG. 15 indicates an example of semantics of the enhancement_type in such a case. As indicated in the semantics 307, enhancement_type==0 in such a case indicates that ERP is applied as a projection system (projection format), and that eccentric spherical mapping is applied as a projection extension type. Moreover, enhancement_type==1 in such a case indicates that CMP is applied as a projection system (projection format), and that eccentric spherical mapping is applied as a projection extension type. Furthermore, enhancement_type==2 indicates that EAC is applied as a projection extension type. Moreover, enhancement_type==3 indicates that EAC and eccentric spherical mapping are applied as a projection extension type (a combination of EAC and eccentric spherical mapping is applied).

In such a case, the client apparatus 200 can also identify whether or not projection extension is applied, and identify an applied type on the basis of the presence or absence of Projection Enhancement Box and a value of the enhancement_type. In addition, the client apparatus 200 can obtain information necessary for rendering on the basis of information defined for each enhancement_type. Accordingly, the client apparatus 200 can select a track in accordance with its own capability.

In a further modification, in a case where additional information other than an extension type is unnecessary for rendering, the type may be signaled in a projection_type field included in Projection Format Struct in Projection Format Box, and only types requiring additional information other than the extension type may be signaled in the enhancement_type of Projection Enhancement Box.

Semantics 308 in FIG. 16 indicates an example of semantics of projection_type in such a case. As indicated in the semantics 308, projection_type==0 in such a case indicates that ERP is applied as a projection system (projection format). In addition, projection_type==1 indicates that CMP is applied as a projection system (projection format). Moreover, projection_type==2 indicates that EAC not requiring additional information for rendering is applied as a projection extension type.

Semantics 309 in FIG. 17 indicates an example of semantics of the enhancement_type in such a case. As indicated in the semantics 309, enhancement_type==0 in such a case indicates that eccentric spherical mapping requiring additional information for rendering is applied as a projection extension type.

In such a case, the client apparatus 200 can similarly identify whether or not projection extension is applied, and identify an applied extension type on the basis of values of a projection_type field and an enhancement_type field. In addition, the client apparatus 200 can obtain information necessary for rendering on the basis of additional information defined for each enhancement_type. Accordingly, the client apparatus 200 can select a track in accordance with its own capability.

### <Box dedicated for projection extension type>

Instead of using Projection Enhancement Box described above, an individual box (a box dedicated for an applied extension type) may be signaled below Projected Omnidirectional Video Box (povd) for each extension type.

In other words, information associated with projection extension may include a box stored in an ISOBMFF file and dedicated for a projection extension type.

A syntax 310 depicted in FIG. 18 is an example of a syntax of Projected Omnidirectional Video Box in a case where an applied projection extension type is eccentric spherical mapping. In such a case, as indicated in the syntax 310, Offset Spherical Projection Box is newly defined below Projected Omnidirectional Video Box. The Offset Spherical Projection Box is a box dedicated for eccentric spherical mapping.

A syntax 311 depicted in FIG. 19 indicates an example of a syntax of the Offset Spherical Projection Box. As indicated in the syntax 311, information necessary for rendering is signaled in the Offset Spherical Projection Box.

In such a case, the client apparatus 200 can identify that projection extension is applied by the presence of Offset Spherical Projection Box defined below Projected Omnidirectional Video Box and that the applied projection extension type is eccentric spherical mapping. In addition, the client apparatus 200 can obtain information necessary for rendering on the basis of information defined in Offset Spherical Projection Box. Accordingly, the client apparatus 200 can select a track in accordance with its own capability.

In such a case, similarly to above, the enhancement_type indicating an extension type applied to a projection extension stream may be further signaled in Projection Format Struc stored in Projection Format Box. Semantics of the enhancement_type in such a case is similar to the semantics of FIG. 11.

In addition, in a case where additional information other than an extension type is unnecessary for rendering, only the enhancement_type may be signaled without signaling a box dedicated for an applied extension type (individual box for each extension type).

A syntax 312 depicted in FIG. 20 indicates an example of a syntax of Projection Format Struct in such a case. As indicated in the syntax 312, the enhancement_type is defined in such a case together with the projection_type in Projection Format Struct.

In such a case, the presence of Offset Spherical Projection Box in a track indicates that eccentric spherical mapping is applied to a stream of the corresponding track. In a case of other projection extension types, a box dedicated for each of the projection extension types is similarly set. In addition, the enhancement_type field indicates which projection extension type is applied to a corresponding stream.

The client apparatus 200 can select a track in accordance with the capability of the client apparatus 200 by identifying the presence of an individual box for each projection extension method and whether or not projection extension is applied with reference to a value of the enhancement_type, and identifying a projection extension type if projection extension is applied.

Note that a flow of an uploading process in such a case is also similar to the flow of the uploading process of the case described with reference to the flowchart of FIG. 6. In addition, a flow of a content reproduction process in such a case is also similar to the flow of the content reproduction process of the case described with reference to the flowchart of FIG. 7.

Note that the position of the individual box for each projection extension method, such as Offset Spherical Projection Box, is not limited to the position below Projected Omnidirectional Video Box. For example, the individual box for each projection extension method may be signaled below another box such as Sample Entry.

### <3. Second embodiment>

### <Signaling of information associated with projection extension using MPD file>

Information associated with projection extension as described above may be signaled in MPD files.

More specifically, it is allowed to generate a control file including information associated with projection extension as an extension method of a projection system for mapping, on a single plane, a three-dimensional structure image which is an image projected on a three-dimensional structure, as a control file used for distribution control of image encoded data indicating an encoded projection planar image produced by mapping, on the plane, the three-dimensional structure image by the projection system to which the projection extension is applied.

For example, the MPD file generation unit 113 of the file generation apparatus 100 as an information processing apparatus may function as a file generation unit which generates a control file including information associated with projection extension as an extension method of a projection system for mapping, on a single plane, a three-dimensional structure which is an image projected on a three-dimensional structure, as a control file used for distribution control of image encoded data indicating an encoded projection planar image produced by mapping, on the plane, the three-dimensional structure image by the projection system to which the projection extension is applied. In other words, the information processing apparatus (for example, the file generation apparatus 100) may include a file generation unit (for example, the MPD file generation unit 113).

Note that metadata for each stream in an MPD file is managed as an adaptation set or a representation. Accordingly, in a case of use of an MPD file, a stream is selected by selecting an adaptation set or a representation.

### <Flow of uploading process>

Described with reference to a flowchart in FIG. 21 will be an example of a flow of an uploading process executed in the foregoing case by the file generation apparatus 100 in FIG. 4.

In response to a start of the uploading process, the data input unit 111 of the file generation apparatus 100 acquires an image and metadata in step S151.

In step S152, the segment file generation unit 123 generates a segment file corresponding to the image.

In step S153, the MPD file generation unit 113 generates an MPD file including information associated with projection extension and corresponding to the image and the metadata acquired in step S151 (and the segment file generated in step S152).

In step S154, the recording unit 114 records the MPD file generated by processing in step S153 and the segment file generated by processing in step S152.

In step S155, the upload unit 115 reads out the MPD file and the segment file recorded in step S154 from the recording unit 114, and uploads the files to a server.

After completion of processing in step S155, the uploading process ends.

By performing the uploading process in the manner described above, the file generation apparatus 100 can generate MPD files including information associated with projection extension.

Accordingly, a client can appropriately acquire segment files (streams) corresponding to its own capability and render the segment files on the basis of the information associated with projection extension. In other words, a projection format is capable of meeting a viewport dependent image quality increase while securing compatibility between clients. A higher-quality image therefore can be more easily provided while reducing a drop of encoding efficiency.

### <Use of information associated with projection extension signaled in MPD file>

In addition, streams may be selected using information associated with projection extension and signaled in MPD files.

More specifically, it is allowed to acquire a control file including information associated with projection extension as an extension method of a projection system for mapping, on a single plane, a three-dimensional structure image as an image projected on a three-dimensional structure, as a control file used for distribution control of image encoded data indicating encoded projection planar image produced by mapping the three-dimensional structure image on the plane by the projection system to which the projection extension is applied, and select a stream of the image encoded data on the basis of information associated with the projection extension included in the acquired control file.

For example, the MPD file acquisition unit 212 of the client apparatus 200 which is an information processing apparatus may function as a file acquisition unit which acquires a control file including information associated with projection extension as an extension method of a projection system for mapping, on a single plane, a three-dimensional structure image as an image projected on a three-dimensional structure, as a control file used for distribution control of image encoded data indicating encoded projection planar image produced by mapping the three-dimensional structure image on the plane by the projection system to which the projection extension is applied. In addition, the MPD file processing unit 213 may function as an image processing unit which selects a stream of the image encoded data on the basis of information associated with the projection extension included in the control file acquired by the file acquisition unit. Accordingly, the information processing apparatus (for example, the client apparatus 200) may include the file acquisition unit (for example, the MPD file acquisition unit 212) and the image processing unit (for example, the MPD file processing unit 213).

### <Flow of content reproduction process>

Described with reference to a flowchart in FIG. 22 will be an example of a flow of a content reproduction process executed in the foregoing case by the client apparatus 200.

In response to a start of the content reproduction process, the MPD file acquisition unit 212 of the client apparatus 200 acquires an MPD file including information associated with projection extension in step S171.

In step S172, the display control unit 215 acquires a measurement result of a viewpoint position (and a visual line direction) of a user.

In step S173, the measuring unit 211 measures a transmission bandwidth of a network between a server and the client apparatus 200.

In step S174, the MPD file processing unit 213 designates adaptation sets using a projection format handled by the client apparatus 200 as selection candidates.

In step S175, the MPD file processing unit 213 determines whether or not the client apparatus 200 handles the extension projection. In a case where the client apparatus 200 is determined to handle the extension projection, the process proceeds to step S176.

In step S176, the MPD file processing unit 213 selects an adaptation set corresponding to the viewpoint position and the visual line of the user, the transmission bandwidth of the network between the client and the server, and the like. At this time, the MPD file processing unit 213 selects a desired adaptation set from adaptation sets of an extension type handled by the client apparatus 200 and from adaptation sets to which the projection extension is not applied in the selection candidates set in step S174. After completion of processing in step S176, the process proceeds to step S178.

In addition, in a case where the client apparatus 200 is not determined to handle the extension projection in step S175, the process proceeds to step S177.

In step S177, the MPD file processing unit 213 selects an adaptation set corresponding to the viewpoint position and the visual line of the user, the transmission bandwidth of the network between the client and the server, and the like. At this time, the MPD file processing unit 213 selects a desired adaptation set from adaptation sets to which the projection extension is not applied in the selection candidates set in step S174. After completion of processing in step S177, the process proceeds to step S178.

More specifically, the MPD file processing unit 213 designates adaptation sets corresponding to the function (capability) of the client apparatus 200 as candidates on the basis of information associated with the projection extension and included in the MPD file, and selects a desired adaptation set from the candidates.

In step S178, the MPD file processing unit 213 selects a representation corresponding to the viewpoint position and the visual line of the user, the transmission bandwidth of the network between the client and the server, and the like from the adaptation sets selected in step S176 or step S177.

In step S179, the segment file acquisition unit 214 acquires a segment file corresponding to the representation selected in step S178.

In step S180, the segment file processing unit 221 extracts encoded data from the segment file acquired in step S179.

In step S181, the decoding unit 222 decodes encoded data of a stream extracted in step S180.

In step S182, the display information generation unit 223 reproduces the stream (content) acquired by the decoding in step S181. More specifically, the display information generation unit 223 generates data indicating a display image from the stream, and supplies the generated data to the display unit 217 to allow display of the data.

After completion of processing in step S182, the content reproduction process ends.

By performing the content reproduction process in the manner described above, the client apparatus 200 can appropriately select streams and reproduce the streams (content corresponding to the streams) included in segment files using information associated with projection extension and included in MPD files.

Accordingly, the client apparatus 200 can appropriately acquire streams corresponding to its own capability and render the streams on the basis of the information associated with projection extension. In other words, a projection format is capable of meeting a viewport dependent image quality increase while securing compatibility between clients. A higher-quality image therefore can be more easily provided while reducing a drop of encoding efficiency.

### <Details of information associated with projection extension>

Note that information associated with projection extension may include information indicating whether projection extension is applied (information (A)), similarly to the case of the first embodiment. For example, the MPD file generation unit 113 of the file generation apparatus 100 may provide MPD files with information associated with projection extension and including information which indicates whether projection extension is applied (information (A)). Moreover, for example, the MPD file processing unit 213 of the client apparatus 200 may identify whether projection extension is applied on the basis of information which indicates whether projection extension is applied (information (A)) in information associated with projection extension and included in MPD files, and select streams on the basis of a result of the identification.

In addition, information associated with projection extension may include information indicating a projection extension type to be applied (information (B)), similarly to the case of the first embodiment. For example, the MPD file generation unit 113 of the file generation apparatus 100 may provide ISOBMFF files with information associated with projection extension and including information which indicates a projection extension type to be applied (information (B)). Moreover, for example, the MPD file processing unit 213 of the client apparatus 200 may identify a projection extension type to be applied on the basis of information which indicates the projection extension type to be applied (information (B)) in information associated with projection extension and included in MPD files, and select streams on the basis of a result of the identification.

Note that the projection extension type indicated by the information may include EAC described above, similarly to the case of the first embodiment. In addition, the projection extension type indicated by the information may include eccentric spherical mapping described above.

Furthermore, information associated with projection extension may include information necessary for rendering into a three-dimensional structure (information (C)), similarly to the first embodiment. For example, the MPD file generation unit 113 of the file generation apparatus 100 may provide MPD files with information associated with projection extension and including information necessary for rendering into a three-dimensional structure (information (C)). In addition, for example, the MPD file processing unit 213 of the client apparatus 200 may select streams using information necessary for rendering into a three-dimensional structure (information (C)) in information associated with projection extension and included in MPD files. Furthermore, the data analysis and decoding unit 216 may perform rendering using the information necessary for rendering into the three-dimensional structure (information (C)).

A client can appropriately acquire and render projection extension streams by signaling information associated with projection extension described above. In other words, a projection format is capable of meeting a viewport dependent image quality increase while securing compatibility between clients. A higher-quality image therefore can be more easily provided while reducing a drop of encoding efficiency.

### <Projection system>

Described next will be an example of a projection system for mapping, on a single plane, a three-dimensional structure image which is an image 360-degree-surround in the horizontal direction and 180-degree-surround in the vertical direction and is projected on a three-dimensional structure. Any method may be adopted for the projection system. For example, the projection system may include ERP described above. In addition, the projection system may include CMP described above.

### <Signaling by projection enhancement descriptor>

Similarly to the first embodiment, in a case where information associated with projection extension is signaled in MPD files, information associated with projection extension may be included as information for each stream of image encoded data. For example, the file generation unit may generate a control file which includes information associated with projection extension as information for each stream of image encoded data.

For example, in MPD files, an essential property (Essential Property) of @schemeIdUri="urn:mpeg:mpegI:omaf:2017:preh" is newly defined as a projection enhancement descriptor. Note that a supplemental property (Supplemental Property) of the same schemeIdUri may be used.

Note that a DASH client not handling schemeIdUri of Essential Property is required to ignore an adaptation set (or representation or the like) where the property is written. In addition, a DASH client not handling schemeIdUri of Supplemental Property may use an adaptation set (or representation or the like) while ignoring the property value.

Furthermore, the projection enhancement descriptor is allowed to exist at an MPD level, an adaptation set level, or a representation level, for example.

An attribute value 331 depicted in FIG. 23 is an attribute value of the projection enhancement descriptor. A value of 0 for the attribute value omaf;@enhancement_type indicates that eccentric spherical mapping is applied. In addition, a value of 1 for the attribute value indicates that EAC is applied.

A datatype 332 in FIG. 24 indicates an example of a datatype defined in the projection enhancement descriptor.

For example, in a case where an adaptation set is a stream of EAC obtained by applying projection extension to CMP in a state that eccentric spherical mapping is applied, a descriptor depicted in FIG. 25 is signaled in the adaptation set. A syntax 333 depicted in FIG. 25 indicates an example of a syntax of Essential Property.

More specifically, information associated with projection extension may include omaf:@enhancement_type which is an attribute value indicating an applied projection extension type and corresponding to a projection enhancement descriptor defined in an MPD file.

The presence of the descriptor in an adaptation set indicates that projection extension is applied to a video stream referred to by the adaptation set (information (A)), and exhibits an extension type applied by enhancement_type (information (B)).

The client apparatus 200 can identify whether or not projection extension is applied and an applied extension type on the basis of the presence or absence of the projection enhancement descriptor and a value of an enhancement_type, and select an adaptation set in accordance with the capability of the client apparatus 200.

In addition, a stream may be signaled as a projection extension stream in a projection type (projection_type) field of a projection format descriptor, while a projection format and an extension type may be signaled in the enhancement_type of a projection enhancement descriptor.

More specifically, information associated with projection extension may further include omaf:@projection_type which is an attribute value indicating whether or not projection extension is applied and included in a projection format descriptor defined in an MPD file.

A projection format descriptor is signaled in Essential Property of @schemeIdUri="urn:mpeg:mpegI:omaf:2017:pf." An attribute value 334 in FIG. 26 indicates an example of an extended attribute value of the descriptor.

For example, each of the projection systems may be indicated by any value. A value of 0 for the attribute value omaf:@projection_type may indicate that an applied projection system is ERP. Moreover, a value of 1 for the attribute value omaf:@projection_type may indicate that an applied projection system is CMP. Furthermore, a value 2 for the attribute value omaf:@projection_type may indicate that projection extension is applied.

In addition, FIG. 27 depicts an example of enhancement_type of a projection enhancement descriptor in such a case. An attribute value 335 depicted in FIG. 27 indicates an example of an attribute value of the descriptor.

Each of the types may be indicated by any value. For example, a value of 0 for the attribute value omaf:@enhancement_type may indicate that an applied projection extension type includes ERP and eccentric spherical mapping. Moreover, a value 1 for the attribute value omaf:@enhancement_type may indicate that an applied projection extension type includes CMP and eccentric spherical mapping. Furthermore, a value 2 for the attribute value omaf:@enhancement_type may indicate that an applied projection extension type is EAC. In addition, a value 3 for the attribute value omaf:@enhancement_type may indicate that an applied projection extension type includes EAC and eccentric spherical mapping.

Note that the example described above is a case where additional information necessary for rendering and other than an extension type (information (C)) is not signaled in consideration that the information is not essential at the time of selection of streams by a client during DASH distribution. However, signaling of additional information (information (C)) may be performed.

### <Descriptor dedicated for projection extension type>

Instead of using a projection enhancement descriptor described above, an individual descriptor (a descriptor dedicated for an applied extension type) may be signaled for each extension type.

For example, in a case of a projection extension stream to which eccentric spherical mapping is applied, Essential Property of @schemeIdUri="urn:mpeg:mpegI:omaf:2017:ofsp" is newly defined as an offset spherical projection descriptor. Similarly to the case of the projection enhancement descriptor described above, Supplemental Property of the same schemeIdUri may be used in such a case.

Note that the offset spherical projection descriptor is allowed to exist at an MPD level, an adaptation set level, or a representation level similarly to the case of the projection enhancement descriptor described above.

In addition, similarly to the case of the attribute value 336 depicted in FIG. 28, an enhancement type (enhancement_type) as an attribute value indicating an extension type applied to a projection extension stream may be signaled in a projection format descriptor defined in OMAF.

Each of the types may be indicated by any value. For example, a value of 0 for the attribute value omaf:@enhancement_type may indicate that an applied projection extension type is eccentric spherical mapping. Moreover, a value 1 for the attribute value omaf:@enhancement_type may indicate that an applied projection extension type is EAC.

In the manner described above, the client apparatus 200 can identify whether or not projection extension is applied and an applied extension type on the basis of the presence or absence of an individual descriptor for each of the projection extension methods and a value of enhancement_type, and select an adaptation set in accordance with the capability of the client apparatus 200.

Note that the example described above is a case where additional information necessary for rendering and other than an extension type (information (C)) is not signaled in consideration that the information is not essential at the time of selection of streams by a client during DASH distribution. However, signaling of additional information (information (C)) may be performed.

### <4. Third embodiment>

### <Eccentric spherical mapping stream distribution>

Described next will be an example of signaling for distributing a stream to which eccentric spherical mapping is applied as one of projection extension methods (also referred to as eccentric spherical mapping stream).

### <Signaling of information associated with rendering in ISOBMFF file>

In a case of ISOBMFF files including streams to which projection extension is applied, information associated with rendering corresponding to the projection extension may be also signaled. The information associated with rendering includes information used at the time of rendering images into a three-dimensional structure. For example, information associated with rendering may include information associated with an offset of projection of an image to a three-dimensional structure. For example, ISOBMFF files including eccentric spherical mapping streams may include information associated with an offset of the eccentric spherical mapping.

More specifically, such a file may be generated which includes information associated with an offset of projection of an image to a three-dimensional structure in correspondence with projection extension as an extension method of a projection system for mapping, on a single plane, a three-dimensional structure image produced by projecting the image on the three-dimensional structure.

For example, the segment file generation unit 123 of the file generation apparatus 100 which is an information processing apparatus may function as a file generation unit which generates a file including information associated with an offset of projection of an image to a three-dimensional structure in correspondence with projection extension as an extension method of a projection system for mapping, on a single plane, a three-dimensional structure image produced by projecting the image on the three-dimensional structure. Accordingly, the information processing apparatus (for example, the file generation apparatus 100) may include the file generation unit (for example, the segment file generation unit 123).

### <Flow of uploading process>

Described with reference to a flowchart in FIG. 29 will be an example of a flow of an uploading process executed in the foregoing case by the file generation apparatus 100 in FIG. 4.

In response to a start of the uploading process, the data input unit 111 of the file generation apparatus 100 acquires an image and metadata in step S201.

In step S202, the segment file generation unit 123 generates an ISOBMFF file which includes information associated with rendering corresponding to a projection extension method.

In step S203, the recording unit 114 records the ISOBMFF file generated in step S202.

In step S204, the upload unit 115 reads out the ISOBMFF file recorded in step S203 from the recording unit 114, and uploads the ISOBMFF file to a server.

After completion of processing in step S204, the uploading process ends.

By performing the uploading process described above, the file generation apparatus 100 can generate ISOBMFF files including information associated with rendering corresponding to a projection extension method.

Accordingly, a client can appropriately and easily render images of streams to which projection extension is applied into a three-dimensional structure by using information associated with the rendering. The projection format therefore is capable of meeting a viewport dependent image quality increase without the necessity of changing a considerable authoring workflow or client implementation due to adoption of a new projection format or the like. In other words, a higher-quality image can be more easily provided while reducing a drop of encoding efficiency.

### <Use of information associated with rendering signaled in ISOBMFF>

In addition, rendering may be performed using information associated with rendering and signaled in ISOBMFF files. For example, in a case of an ISOBMFF file including an eccentric spherical mapping stream, rendering may be performed using information associated with an offset of the eccentric spherical mapping and signaled in the ISOBMFF file.

More specifically, it is allowed to acquire a file including information associated with an offset of projection of an image to a three-dimensional structure in correspondence with projection extension as an extension method of a projection system for mapping, on a single plane, a three-dimensional structure image produced by projecting the image on the three-dimensional structure, and image encoded data indicating encoded projection planar image produced by mapping the three-dimensional structure image on the plane by the projection system to which the projection extension is applied, and render the projection planar image obtained by the image encoded data into a three-dimensional structure on the basis of the information associated with the offset and included in the acquired file.

For example, the segment file acquisition unit 214 of the file generation apparatus 100 as an information processing apparatus may function as a file acquisition unit which acquires a file including information associated with an offset of projection of an image to a three-dimensional structure in correspondence with projection extension as an extension method of a projection system for mapping, on a single plane, a three-dimensional structure image produced by projecting the image on the three-dimensional structure, and image encoded data indicating encoded projection planar image produced by mapping the three-dimensional structure image on the plane by the projection system to which the projection extension is applied. In addition, the data analysis and decoding unit 216 may function as an image processing unit which renders the projection planar image obtained by the image encoded data into a three-dimensional structure on the basis of the information associated with the offset and included in the acquired file. Accordingly, the information processing apparatus (for example, the client apparatus 200) may include the file acquisition unit (for example, the segment file acquisition unit 214) and the image processing unit (for example, the data analysis and decoding unit 216).

### <Flow of content reproduction process>

Described with reference to a flowchart in FIG. 30 will be an example of a flow of a content reproduction process executed in the foregoing case by the client apparatus 200.

In response to a start of the content reproduction process, the segment file acquisition unit 214 of the client apparatus 200 acquires an ISOBMFF file including information associated with rendering corresponding to a projection extension method in step S221.

In step S222, the display control unit 215 acquires a measurement result of a viewpoint position (and a visual line direction) of a user.

In step S223, the measuring unit 211 measures a transmission bandwidth of a network between a server and the client apparatus 200.

In step S224, the segment file processing unit 221 selects a track corresponding to the viewpoint position and the visual line of the user, the transmission bandwidth of the network between the client and the server, and the like.

In step S225, the segment file processing unit 221 extracts encoded data of a stream of the track selected in step S224 from the ISOBMFF file acquired in step S221.

In step S226, the decoding unit 222 decodes encoded data of the stream extracted in step S225.

In step S227, the display information generation unit 223 reproduces the stream (content) acquired by the decoding in step S226 using information associated with rendering and included in the ISOBMFF file. More specifically, the display information generation unit 223 generates data indicating a display image from the stream, and supplies the generated data to the display unit 217 to allow display of the data.

After completion of processing in step S227, the content reproduction process ends.

By performing the content reproduction process in the manner described above, the client apparatus 200 can reproduce streams (content corresponding to the streams) included in ISOBMFF files using information associated with rendering corresponding to a projection extension method and included in the ISOBMFF files.

Accordingly, the client apparatus 200 can appropriately and easily render images of streams to which projection extension is applied into a three-dimensional structure by using information associated with the rendering. The projection format therefore is capable of meeting a viewport dependent image quality increase without the necessity of changing a considerable authoring workflow or client implementation due to adoption of a new projection format or the like. In other words, a higher-quality image can be more easily provided while reducing a drop of encoding efficiency.

### <Details of information associated with rendering>

Information associated with an offset of projection and included in information associated with rendering may include information associated with an offset direction and information associated with an offset size. For example, the segment file generation unit 123 of the file generation apparatus 100 may provide ISOBMFF files with information associated with the offset direction and information associated with the offset size. In addition, for example, the data analysis and decoding unit 216 of the client apparatus 200 may perform rendering on the basis of information associated with the offset direction and information associated with the offset size each included in ISOBMFF files.

For example, in a case of an ISOBMFF file including an eccentric spherical mapping stream, the ISOBMFF file may include information associated with the offset direction and the offset size of the eccentric spherical mapping.

In addition, information associated with the offset direction described above may include information associated with an azimuth angle of the offset direction and information associated with an elevation angle of the offset direction. For example, information associated with an offset direction of eccentric spherical mapping may include information associated with an azimuth angle of the offset direction of the eccentric spherical mapping and information associated with an elevation angle of the offset direction of the eccentric spherical mapping.

Note that each value of the information associated with the offset may be fixed in a stream of image encoded data.

In such a case, information associated with an offset may be included in an ISOBMFF file as information for each stream of image encoded data.

For example, such items of information may be signaled in Projection Enhancement Box described in the first embodiment. A syntax 351 depicted in FIG. 31 indicates an example of a syntax of Projection Enhancement Box in such a case. As indicated in the syntax 351, fields such as offset_azimuth, offset_elevation, and offset_value are defined for each enhancement_type.

Semantics 352 in FIG. 32 indicates an example of semantics of the added fields.

As indicated in the semantics 352, offset_azimuth is information indicating an azimuth angle of an offset direction of eccentric spherical mapping. For example, a value of the information ranges from -180*2¹⁶ to 180*2¹⁶ -1. In addition, offset_elevation is information indicating an elevation angle of the offset direction. For example, a value of the information ranges from -90*2¹⁶ to 90*2¹⁶ -1. In addition, offset_value is information indicating a value of the offset. For example, the value is signaled in units of 2⁻³². In addition, the value ranges from 0 to 2⁻³² -1.

Accordingly, information associated with an offset may include offset_azimuth indicating an azimuth angle of an offset direction, offset_elevation indicating an elevation angle of the offset direction, and offset_value indicating an offset size, each stored in Projection Enhancement Box in Projected Omnidirectional Video Box of an ISOBMFF file.

The client apparatus 200 can appropriately render an eccentric spherical mapping stream by identifying an original projection format from Projection Format Box, and further referring to an offset direction and an offset value signaled in Projection Enhancement Box.

Note that similar fields can be also signaled in a case of Offset Spherical Projection Box unique to an eccentric spherical mapping stream described in the first embodiment.

In addition, while the example of signaling of one type of offset direction and offset value has been described herein, the number of directions and values may be any number. A plurality of offset directions and offset values may be signaled to indicate that a plurality of offsets is applied to one eccentric spherical mapping stream.

Signaling in Sample Entry of a track of an ISOBMFF file has been described up to here. According to the method, information necessary for rendering can be signaled for an eccentric spherical mapping stream where information associated with rendering in a stream, such as an offset direction and an offset value, is unchangeable, i.e., an image quality increase direction does not change. Accordingly, a client can appropriately perform rendering.

### <Dynamic change of information associated with rendering>

Note that information associated with rendering (offset direction, offset value and the like) may be dynamically changed in a stream. In such a case, it is difficult to handle the information using only information signaling in Sample Entry of a track. An example of added signaling for the handling will be described.

### <SEI (Supplemental Enhancement Information) message>

An SEI (Supplemental Enhancement Information) message used for HEVC (High Efficiency Video Coding) and AVC (Advanced Video Coding) may be extended to handle information associated with rendering which dynamically changes in a stream.

For example, a spherical offset projection SEI message may be newly defined, and information associated with rendering which dynamically changes in a stream (for example, offset direction and offset value) may be stored in the defined message. For example, information associated with rendering is signaled in units of access unit in a spherical offset projection SEI message.

A syntax 353 depicted in FIG. 33 indicates an example of a syntax of the spherical offset projection SEI message. In addition, semantics 354 in FIG. 34 indicates an example of semantics of the field.

In the figure, offset_projection_cancel_flag is a flag indicating whether to cancel information associated with an offset. Each of the states may be indicated by any value. For example, in a case where the flag has a value of 1, continuous application of preceding SEI in an output order may be canceled. In addition, in a case where the flag has a value of 0, offset information may be signaled.

In the figure, offset_projection_persistence_flag is a flag controlling an application range of SEI. Each of the states may be indicated by any value. For example, in a case where the flag has a value of 0, information associated with SEI may be applied to only pictures including SEI. In addition, in a case where the flag has a value of 1, application of SEI may continue until a start of a new coded video sequence or an arrival at an end of a stream.

In the figure, offset_projection_reserved_zero_6bits is filled with 0.

In the figure, offset_azimuth is information indicating an azimuth angle of an offset direction. For example, the value is signaled in units of 2⁻¹⁶ degrees. For example, the value ranges from -180*2¹⁶ to 180*2¹⁶ -1.

In the figure, offset_elevation is information indicating an elevation angle of an offset direction. For example, the value is signaled in units of 2⁻¹⁶ degrees. For example, the value ranges from -90*2¹⁶ to 90*2¹⁶ -1.

In the figure, offset_value is information indicating a value of an offset. For example, the value is signaled in units of 2⁻³². For example, the value ranges from 0 to 2⁻³² -1.

### <Timed metadata>

A mechanism of timed metadata, which is a stream storing metadata changeable in time series, may be used. For example, offset timed metadata may be newly defined, and information associated with rendering which dynamically changes in a stream (for example, offset direction and offset value) may be stored in the defined metadata. For example, information associated with rendering is signaled in units of sample in offset timed metadata. In such a manner, an offset direction and an offset value each dynamically changeable in an eccentric spherical mapping stream to be referred to can be signaled.

At this time, note that 'ofsp' may be used, for example, for a track reference type corresponding to a track which stores an eccentric spherical mapping stream associated with offset timed metadata.

By using timed metadata, a client can identify an image quality increase direction beforehand and designate the direction as a reference for selection of a stream without the necessity of acquiring and decoding an eccentric spherical mapping stream.

A syntax 355 depicted in FIG. 35 indicates an example of a syntax of Offset Sample Entry in such a case. A syntax 356 depicted in FIG. 36 indicates an example of a syntax of Offset Sample in such a case. Note that semantics of each field in Offset Sample is similar to the semantics of FIG. 32.

### <Sample group>

Respective pieces of information associated with rendering dynamically changeable in a stream (for example, offset direction and offset value) may be associated with each other in units of sample using a tool called Sample Group which is defined in an ISOBMFF file as a system for associating respective pieces of meta information in units of sample.

As depicted in FIG. 37, Sample Group where meta information is described is signaled in Sample Group Description Box of Sample Table Box as Group Entry, and associated with a sample via Sample To Group Box.

As depicted in FIG. 37, a grouping type (grouping_type) of Sample To Group Box indicates grouping_type of associated Sample Group Description Box. A sample count (sample_count) and a group description index (group_description_index) are signaled per one entry (1 entry). The group_description_index indicates an index of associated Group Entry, while sample_count indicates the number of samples belonging to the Group Entry.

For example, Offset Spherical Projection Sample Group Entry may be newly defined, and information associated with rendering which dynamically changes in a stream (for example, offset direction and offset value) may be stored in the defined entry.

A syntax 371 in FIG. 38 indicates an example of a syntax of the Offset Spherical Projection Sample Group Entry. In such a case, grouping_type is 'ofgp.' Semantics of each field in Offset Spherical Projection Sample Group Entry is similar to the semantics of FIG. 32.

In such a manner, an offset direction and an offset value each dynamically changeable in an eccentric spherical mapping stream to be referred to can be signaled.

Note that information for rendering of an eccentric spherical mapping stream signaled in Projection Enhancement Box is signaled for an initial picture, for example, in a case where the offset direction and offset value dynamically changeable as described above are signaled.

In addition, a flag indicating that the offset direction and the offset value are dynamically changeable in a stream may be signaled in Projection Enhancement Box or other boxes. In other words, information associated with an offset may include information indicating whether the information associated with offset dynamically changes in the stream. By referring to the information, the client apparatus 200 can easily identify a stream as an eccentric spherical mapping stream where the image quality increase direction dynamically changes.

### <Signaling of information associated with rendering in MPD file>

As described in the second embodiment, in a case where information associated with projection extension is signaled in MPD files, information associated with rendering corresponding to the projection extension may be similarly signaled. The information associated with rendering includes information used at the time of rendering images into a three-dimensional structure. For example, information associated with rendering may include information associated with an offset of projection of an image to a three-dimensional structure. For example, in a case of an MPD file for controlling distribution of an eccentric spherical mapping stream, information associated with an offset of the eccentric spherical mapping (for example, offset direction and offset value) may be included in the MPD file.

In addition, as the information associated with the offset, a flag indicating that information associated with the offset dynamically changes in a stream may be signaled. In such a case, it is sufficient that the flag is signaled in a projection enhancement descriptor or an offset spherical projection descriptor. In such a manner, effects similar to the effects of ISOBMFF files described above can be produced.

More specifically, it is allowed to generate a control file including information associated with an offset of projection of an image to a three-dimensional structure in correspondence with projection extension as an extension method of a projection system for mapping, on a single plane, a three-dimensional structure image produced by projecting the image on the three-dimensional structure, as the control file used for distribution control of image encoded data indicating an encoded projection planar image produced by mapping, on the plane, the three-dimensional structure image by a projection system to which the projection extension is applied.

For example, the MPD file generation unit 113 of the file generation apparatus 100 as an information processing apparatus may function as a file generation unit which generates a control file including information associated with an offset of projection of an image to a three-dimensional structure in correspondence with projection extension as an extension method of a projection system for mapping, on a single plane, the three-dimensional structure image produced by projecting an image on a three-dimensional structure, as a control file used for distribution control of image encoded data indicating an encoded projection planar image produced by mapping, on the plane, the three-dimensional structure image by a projection system to which the projection extension is applied. More specifically, the information processing apparatus (for example, the file generation apparatus 100) may include the file generation unit (for example, the MPD file generation unit 113).

### <Flow of uploading process>

Described with reference to a flowchart in FIG. 39 will be an example of a flow of an uploading process executed in the foregoing case by the file generation apparatus 100 in FIG. 4.

In response to a start of the uploading process, the data input unit 111 of the file generation apparatus 100 acquires an image and metadata in step S241.

In step S242, the segment file generation unit 123 generates a segment file of the image acquired in step S241.

In step S243, the MPD file generation unit 113 generates an MPD file which includes information associated with rendering corresponding to a projection extension method. For example, in a case of generation of an MPD file corresponding to an eccentric spherical mapping stream, the MPD file generation unit 113 generates an MPD file including information associated with rendering corresponding to eccentric spherical mapping.

In step S244, the recording unit 114 records the segment file generated by processing in step S242. In addition, the recording unit 114 records the MPD file generated by processing in step S243.

In step S245, the upload unit 115 reads out the MPD file recorded in step S244 from the recording unit 114, and uploads the MPD file to a server. In addition, the upload unit 115 reads out the segment file recorded in step S244 from the recording unit 114, and uploads the segment file to the server.

After completion of processing in step S245, the uploading process ends.

By performing the uploading process described above, the file generation apparatus 100 can generate MPD files including information associated with rendering corresponding to a projection extension method.

Accordingly, a client can easily select a reproducible stream and appropriately render images of streams to which projection extension is applied into a three-dimensional structure by using information associated with the rendering. The projection format therefore is capable of meeting a viewport dependent image quality increase without the necessity of changing a considerable authoring workflow or client implementation due to adoption of a new projection format or the like. In other words, a higher-quality image can be more easily provided while reducing a drop of encoding efficiency.

### <Use of information associated with rendering signaled in MPD file>

In addition, stream selection and rendering may be performed using information associated with rendering and signaled in MPD files. For example, in a case of an MPD file controlling distribution of an eccentric spherical mapping stream, selection of a distribution request stream and rendering may be performed using information associated with an offset of the eccentric spherical mapping and signaled in the MPD file.

More specifically, it is allowed to acquire a control file including information associated with an offset of projection of an image to a three-dimensional structure in correspondence with projection extension as an extension method of a projection system for mapping, on a single plane, a three-dimensional structure image as an image projected on the three-dimensional structure, as a control file used for distribution control of image encoded data indicating an encoded projection planar image produced by mapping the three-dimensional structure image on the plane by the projection system to which the projection extension is applied, and render the projection planar image obtained by the image encoded data into a three-dimensional structure on the basis of the information associated with the offset and included in the acquired file.

For example, the MPD file acquisition unit 212 of the file generation apparatus 100 which is an information processing apparatus may function as a file acquisition unit which acquires a file including information associated with an offset of projection of an image to a three-dimensional structure in correspondence with projection extension as an extension method of a projection system for mapping, on a single plane, a three-dimensional structure image produced by projecting the image on the three-dimensional structure, and image encoded data indicating an encoded projection planar image produced by mapping the three-dimensional structure image on the plane by the projection system to which the projection extension is applied. In addition, the data analysis and decoding unit 216 may function as an image processing unit which renders the projection planar image obtained by the image encoded data into a three-dimensional structure on the basis of the information associated with the offset and included in the acquired file. Accordingly, the information processing apparatus (for example, the client apparatus 200) may include the file acquisition unit (for example, the MPD file acquisition unit 212) and the image processing unit (for example, the data analysis and decoding unit 216).

### <Flow of content reproduction process>

Described with reference to a flowchart in FIG. 40 will be an example of a flow of a content reproduction process executed in the foregoing case by the client apparatus 200.

In response to a start of the content reproduction process, the MPD file acquisition unit 212 of the client apparatus 200 acquires an MPD file including information associated with rendering corresponding to a projection extension method in step S261.

In step S262, the display control unit 215 acquires a measurement result of a viewpoint position (and a visual line direction) of a user.

In step S263, the measuring unit 211 measures a transmission bandwidth of a network between a server and the client apparatus 200.

In step S264, the MPD file processing unit 213 selects an adaptation set or a representation on the basis of the MPD file acquired in step S261 (particularly on the basis of information included in the MPD file and associated with rendering corresponding to the projection extension method, for example).

In step S265, the segment file acquisition unit 214 acquires a segment file including the adaptation set or the representation selected in step S264.

In step S266, the segment file processing unit 221 extracts encoded data from the segment file acquired in step S265.

In step S267, the decoding unit 222 decodes encoded data of a stream extracted in step S266.

In step S268, the display information generation unit 223 reproduces the stream (content) acquired by the decoding in step S267 using information associated with rendering and included in the MPD file. More specifically, the display information generation unit 223 generates data indicating a display image from the stream, and supplies the generated data to the display unit 217 to allow display of the data.

After completion of processing in step S268, the content reproduction process ends.

By performing the content reproduction process in the manner described above, the client apparatus 200 can reproduce streams (content corresponding to the streams) distributed while controlled under MPD files using information included in the MPD files and associated with rendering corresponding to a projection extension method.

Accordingly, the client apparatus 200 can appropriately and easily render images of streams to which projection extension is applied into a three-dimensional structure by using information associated with the rendering. The projection format therefore is capable of meeting a viewport dependent image quality increase without the necessity of changing a considerable authoring workflow or client implementation due to adoption of a new projection format or the like. In other words, a higher-quality image can be more easily provided while reducing a drop of encoding efficiency.

### <Signaling of information associated with stream selection in ISOBMFF file>

While signaling of information associated with rendering has been described above, information associated with selection of streams corresponding to projection extension may be also signaled in a case of ISOBMFF files including streams to which the projection extension is applied. Information associated with selection of streams includes information used at the time of selection of streams of content to be reproduced. For example, the information associated with streams may include information associated with image quality of a projection planar image (projected picture) produced by mapping, on a single plane, a three-dimensional structure image as an image projected on a three-dimensional structure by a projection system to which the projection extension is applied. For example, in a case of an ISOBMFF file including an eccentric spherical mapping stream, information associated with image quality of a projection planar image (projected picture) mapped on a plane by the eccentric spherical mapping may be included in the ISOBMFF file.

More specifically, it is allowed to generate a file including information associated with image quality of a projection planar image produced by mapping, on a single plane, a three-dimensional structure image by a projection system to which projection extension is applied in correspondence with projection extension as an extension method of the projection system for mapping, on the plane, the three-dimensional structure image as an image projected on a three-dimensional structure.

For example, the MPD file generation unit 113 of the file generation apparatus 100 which is an information processing apparatus may function as a file generation unit which generates a file including information associated with image quality of a projection planar image produced by mapping, on a single plane, a three-dimensional structure image by a projection system to which projection extension is applied in correspondence with projection extension as an extension method of the projection system for mapping, on the plane, the three-dimensional structure image as an image projected on a three-dimensional structure. Accordingly, the information processing apparatus (for example, the file generation apparatus 100) may include the file generation unit (for example, the MPD file generation unit 113).

### <Flow of uploading process>

Described with reference to a flowchart in FIG. 41 will be an example of a flow of an uploading process executed in the foregoing case by the file generation apparatus 100 in FIG. 4.

In response to a start of the uploading process, the data input unit 111 of the file generation apparatus 100 acquires an image and metadata in step S281.

In step S282, the segment file generation unit 123 generates an ISOBMFF file which includes information associated with selection of a stream corresponding to a projection extension method.

In step S283, the recording unit 114 records the ISOBMFF file generated by processing in step S282.

In step S284, the upload unit 115 reads out the ISOBMFF file recorded in step S283 from the recording unit 114, and uploads the ISOBMFF file to a server.

After completion of processing in step S284, the uploading process ends.

By performing the uploading process in the manner described above, the file generation apparatus 100 can generate ISOBMFF files including information associated with selection of streams corresponding to a projection extension method.

Accordingly, a client can more easily select streams to which projection extension is applied by using the information associated with stream selection. For example, the client can more easily select and reproduce an image having high image quality for a user visual field.

The projection format therefore is capable of meeting a viewport dependent image quality increase without the necessity of changing a considerable authoring workflow or client implementation due to adoption of a new projection format or the like. In other words, a higher-quality image can be more easily provided while reducing a drop of encoding efficiency.

### <Use of information associated with selection of stream signaled in ISOBMFF>

In addition, streams may be selected using information associated with selection of streams signaled in ISOBMFF files. For example, in a case of an ISOBMFF file including an eccentric spherical mapping stream, rendering may be performed using information associated with image quality of a projection planar image (projected picture) produced by mapping a three-dimensional structure image on a plane by eccentric spherical mapping signaled in the ISOBMFF file.

More specifically, it is allowed to acquire a file including information associated with image quality of a projection planar image produced by mapping, on a single plane, a three-dimensional structure image by a projection system to which projection extension is applied in correspondence with projection extension as an extension method of the projection system for mapping, on the plane, the three-dimensional structure image as an image projected on a three-dimensional structure, and image encoded data indicating the encoded projection planar image, and select a stream of the image encoded data on the basis of the information associated with the image quality of the projection planar image included in the acquired file.

For example, the segment file acquisition unit 214 of the file generation apparatus 100 which is an information processing apparatus may function as a file acquisition unit which acquires a file including information associated with image quality of a projection planar image produced by mapping, on a single plane, a three-dimensional structure image by a projection system to which projection extension is applied in correspondence with projection extension as an extension method of the projection system for mapping, on the plane, the three-dimensional structure image as an image projected on a three-dimensional structure, and image encoded data indicating the encoded projection planar image. In addition, the data analysis and decoding unit 216 may function as an image processing unit which selects a stream of the image encoded data on the basis of the information associated with the image quality of the projection planar image included in the file acquired by the file acquisition unit. Accordingly, the information processing apparatus (for example, the client apparatus 200) may include the file acquisition unit (for example, the segment file acquisition unit 214) and the image processing unit (for example, the data analysis and decoding unit 216).

### <Flow of content reproduction process>

Described with reference to a flowchart in FIG. 42 will be an example of a flow of a content reproduction process executed in the foregoing case by the client apparatus 200.

In response to a start of the content reproduction process, the segment file acquisition unit 214 of the client apparatus 200 acquires an ISOBMFF file including information associated with selection of a stream corresponding to a projection extension method in step S301.

In step S302, the display control unit 215 acquires a measurement result of a viewpoint position (and a visual line direction) of a user.

In step S303, the measuring unit 211 measures a transmission bandwidth of a network between a server and the client apparatus 200.

In step S304, the segment file processing unit 221 selects a track having high image quality for a visual field of a client on the basis of the information associated with selection of the stream and included in the ISOBMFF file acquired in step S301, the viewpoint position and the visual line of the user, the transmission bandwidth of the network between the client and the server, and the like.

In step S305, the segment file processing unit 221 extracts encoded data of the stream of the track selected in step S304 from the ISOBMFF file acquired in step S301.

In step S306, the decoding unit 222 decodes encoded data of a stream extracted in step S305.

In step S307, the display information generation unit 223 reproduces the stream (content) acquired by the decoding in step S306. More specifically, the display information generation unit 223 generates data indicating a display image from the stream, and supplies the generated data to the display unit 217 to allow display of the data.

After completion of processing in step S307, the content reproduction process ends.

By performing the content reproduction process in the manner described above, the client apparatus 200 can more easily select more appropriate streams using information associated with selection of a stream corresponding to a projection extension method and included in an ISOBMFF file. For example, the client apparatus 200 can more easily select and reproduce an image having high image quality for a user visual field.

The projection format therefore is capable of meeting a viewport dependent image quality increase without the necessity of changing a considerable authoring workflow or client implementation due to adoption of a new projection format or the like. In other words, a higher-quality image can be more easily provided while reducing a drop of encoding efficiency.

### <Signaling of information associated with stream selection in MPD file>

As described in the second embodiment, in a case where information associated with projection extension is signaled in MPD files, information associated with selection of streams corresponding to the projection extension may be similarly signaled.

The information associated with selection of streams includes information used at the time of selection of streams of content to be reproduced. For example, the information associated with streams may include information associated with image quality of a projection planar image (projected picture) produced by mapping, on a single plane, a three-dimensional structure image as an image projected on a three-dimensional structure by a projection system to which the projection extension is applied. For example, in a case of an MPD file controlling distribution of an eccentric spherical mapping stream, information associated with image quality of a projection planar image (projected picture) mapped on a plane by the eccentric spherical mapping may be included in the MPD file.

More specifically, it is allowed to generate a control file which includes information associated with image quality of a projection planar image produced by mapping, on a single plane, a three-dimensional structure image by a projection system to which projection extension is applied in correspondence with projection extension as an extension method of the projection system for mapping, on the plane, the three-dimensional structure image as an image projected on a three-dimensional structure, as a control file used for distribution control of image encoded data indicating the encoded projection planar image.

For example, the MPD file generation unit 113 of the file generation apparatus 100 which is an information processing apparatus may function as a file generation unit which generates a control file which includes information associated with image quality of a projection planar image produced by mapping, on a single plane, a three-dimensional structure image by a projection system to which projection extension is applied in correspondence with the projection extension as an extension method of the projection system for mapping, on the plane, the three-dimensional structure image as an image projected on a three-dimensional structure, as a control file used for distribution control of image encoded data indicating the encoded projection planar image. Accordingly, the information processing apparatus (for example, the file generation apparatus 100) may include the file generation unit (for example, the MPD file generation unit 113).

### <Flow of uploading process>

Described with reference to a flowchart in FIG. 43 will be an example of a flow of an uploading process executed in the foregoing case by the file generation apparatus 100 in FIG. 4.

In response to a start of the uploading process, the data input unit 111 of the file generation apparatus 100 acquires an image and metadata in step S321.

In step S322, the segment file generation unit 123 generates a segment file of an image acquired in step S321.

In step S323, the MPD file generation unit 113 generates an MPD file which includes information associated with selection of a stream corresponding to a projection extension method. For example, in a case of generation of an MPD file corresponding to an eccentric spherical mapping stream, the MPD file generation unit 113 generates an MPD file including information associated with selection of a stream corresponding to eccentric spherical mapping.

In step S324, the recording unit 114 records the segment file generated by processing in step S322. In addition, the recording unit 114 records the MPD file generated by processing in step S323.

In step S325, the upload unit 115 reads out the MPD file recorded in step S324 from the recording unit 114, and uploads the MPD file to a server. In addition, the upload unit 115 reads out the segment file recorded in step S324 from the recording unit 114, and uploads the segment file to the server.

After completion of processing in step S325, the uploading process ends.

By performing the uploading process described above, the file generation apparatus 100 can generate MPD files including information associated with selection of streams corresponding to a projection extension method.

Accordingly, a client can more easily select more appropriate streams by using the information associated with stream selection. For example, the client can more easily select and reproduce an image having high image quality for a user visual field.

The projection format therefore is capable of meeting a viewport dependent image quality increase without the necessity of a considerable specification change due to adoption of a new projection format or the like. In other words, a higher-quality image can be more easily provided while reducing a drop of encoding efficiency.

### <Use of information associated with rendering signaled in MPD file>

In addition, streams may be selected using information associated with selection of streams signaled in MPD files. For example, in a case of an MPD file controlling distribution of an eccentric spherical mapping stream, a distribution request stream may be selected using information associated with image quality of a projection planar image (projected picture) mapped on a plane by eccentric spherical mapping signaled in the MPD file.

More specifically, it is allowed to acquire a control file which includes information associated with image quality of a projection planar image produced by mapping, on a single plane, a three-dimensional structure image by a projection system to which projection extension is applied in correspondence with projection extension as an extension method of the projection system for mapping, on the plane, the three-dimensional structure image as an image projected on a three-dimensional structure, as a control file used for controlling distribution of image encoded data indicating the encoded projection planar image, and select a stream of the image encoded data on the basis of information associated with the image quality of the projection planar image included in the acquired control file.

For example, the MPD file acquisition unit 212 of the file generation apparatus 100 which is an information processing apparatus may function as a file acquisition unit which acquires a control file which includes information associated with image quality of a projection planar image produced by mapping, on a single plane, a three-dimensional structure image by a projection system to which projection extension is applied in correspondence with projection extension as an extension method of the projection system for mapping, on the plane, the three-dimensional structure image as an image projected on a three-dimensional structure, as a control file used for controlling distribution of image encoded data indicating the encoded projection planar image. In addition, the MPD file processing unit 213 may function as an image processing unit which selects a stream of the image encoded data on the basis of information associated with the image quality of the projection planar image included in the control file acquired by the file acquisition unit. Accordingly, the information processing apparatus (for example, the client apparatus 200) may include the file acquisition unit (for example, the MPD file acquisition unit 212) and the image processing unit (for example, the MPD file processing unit 213).

### <Flow of content reproduction process>

Described with reference to a flowchart in FIG. 44 will be an example of a flow of a content reproduction process executed in the foregoing case by the client apparatus 200.

In response to a start of the content reproduction process, the MPD file acquisition unit 212 of the client apparatus 200 acquires an MPD file including information associated with selection of a stream corresponding to a projection extension method in step S341.

In step S342, the display control unit 215 acquires a measurement result of a viewpoint position (and a visual line direction) of a user.

In step S343, the measuring unit 211 measures a transmission bandwidth of a network between a server and the client apparatus 200.

In step S344, the MPD file processing unit 213 selects an adaptation set having high image quality for a visual field of a client on the basis of the information associated with selection of the stream included in the MPD file acquired in step S341, the viewpoint position and the visual line of the user, the transmission bandwidth of the network between the client and the server, and the like.

In step S345, the MPD file processing unit 213 further selects a desired representation from the adaptation set selected in step S344.

In step S346, the segment file acquisition unit 214 acquires a segment file including the adaptation set or the representation selected in step S344 and S345.

In step S347, the segment file processing unit 221 extracts encoded data from the segment file acquired in step S346.

In step S348, the decoding unit 222 decodes encoded data of a stream extracted in step S347.

In step S349, the display information generation unit 223 reproduces the stream (content) acquired by the decoding in step S348. More specifically, the display information generation unit 223 generates data indicating a display image from the stream, and supplies the generated data to the display unit 217 to allow display of the data.

After completion of processing in step S349, the content reproduction process ends.

By performing the content reproduction process in the manner described above, the client apparatus 200 can more easily select more appropriate streams using information associated with selection of streams corresponding to a projection extension method included in the MPD files. For example, the client apparatus 200 can more easily select and reproduce an image having high image quality for a user visual field.

The projection format therefore is capable of meeting a viewport dependent image quality increase without the necessity of changing a considerable authoring workflow or client implementation due to adoption of a new projection format or the like. In other words, a higher-quality image can be more easily provided while reducing a drop of encoding efficiency.

### <Eccentric spherical mapping stream>

There are two types of eccentric spherical mapping streams, i.e., a static eccentric spherical mapping stream where an image quality increase direction is unchangable in a stream and a dynamic eccentric spherical mapping stream where an image quality increase direction is changeable in a stream. Information necessary for selection of streams differs for each stream.

### <Static eccentric spherical mapping stream>

In a case of a static eccentric spherical mapping stream, a high image quality video can be constantly presented to a user (provided for a user) viewing and listening to the video by acquiring and rendering a stream having high image quality for a visual field direction after a change of a user visual field of a client. In such a case, stream switching in accordance with a change of a user visual field by a client is achievable by signaling quality ranking for each region of a stream, for example.

### <Dynamic eccentric spherical mapping stream>

In a case of a dynamic eccentric spherical mapping stream, a high image quality direction dynamically changes in accordance with a direction where viewing and listening are statistically most frequent or movement of a particular character, for example. In such a case, it is assumed that stream switching is not performed in accordance with a user visual field of a client. Accordingly, stream selection by the client is achievable in accordance with user preference at a reproduction start by signaling an attribute of an image quality increase region in a stream, for example. Examples of the attribute of the image quality increase region herein include a region statistically most frequently viewed by a user, a particular character, and a director's cut.

### <Signaling of quality ranking in ISOBMFF file>

In the foregoing two types of streams, the statistic eccentric spherical mapping stream will be initially described. A quality comparison between eccentric spherical mapping streams can be made in view of an offset direction and an offset value. Note that the method is not available for a quality comparison with streams other than the eccentric spherical mapping stream.

By using quality ranking defined in OMAF as a common image quality index, not only switching between eccentric spherical mapping streams, but also a quality comparison between streams to which another projection extension or a viewport dependent image quality increase process (for example, region-wise packing) is applied and stream switching based on the quality comparison are achievable.

Accordingly, the information associated with quality ranking may be included in information associated with image quality of a projection planar image produced by mapping, on a single plane, a three-dimensional structure image as an image projected on a three-dimensional structure by a projection system to which projection extension is applied in correspondence with the projection extension described above. For example, the segment file generation unit 123 of the file generation apparatus 100 may provide an ISOBMFF file with information associated with image quality of a projection planar image and including information associated with quality ranking. In addition, for example, the data analysis and decoding unit 216 of the client apparatus 200 may select a stream on the basis of information associated with quality ranking and included in information associated with image quality of a projection planar image and included in an ISOBMFF file.

By using information associated with quality ranking in the manner described above, a client can more easily select a higher-quality image, and provide the selected image for a user. In other words, a stream which has high image quality for a visual field region and to which eccentric spherical mapping is applied is selectable in accordance with a visual field of the client. In such a manner, the user visual field region of the client maintains high image quality constantly, wherefore a user experience can improve.

### <Flow of uploading process>

Described with reference to a flowchart in FIG. 45 will be an example of a flow of an uploading process executed in the foregoing case by the file generation apparatus 100 in FIG. 4.

In response to a start of the uploading process, the data input unit 111 of the file generation apparatus 100 acquires an image and metadata in step S361.

In step S362, the segment file generation unit 123 generates an ISOBMFF file including information associated with quality ranking.

In step S363, the recording unit 114 records the ISOBMFF file generated by processing in step S362.

In step S364, the upload unit 115 reads out the ISOBMFF file recorded in step S363 from the recording unit 114, and uploads the ISOBMFF file to a server.

After completion of processing in step S364, the uploading process ends.

By performing the uploading process in the manner described above, the file generation apparatus 100 can generate ISOBMFF files including information associated with quality ranking.

Accordingly, a client can more easily select streams of higher-quality images to which a projection extension method is applied, by using the information associated with quality ranking. In other words, higher-quality images can be more easily provided for a user. The projection format therefore is capable of meeting a viewport dependent image quality increase without the necessity of a considerable specification change due to adoption of a new projection format or the like. In other words, a higher-quality image can be more easily provided while reducing a drop of encoding efficiency.

### <Flow of content reproduction process>

Described next with reference to a flowchart in FIG. 46 will be an example of a flow of a content reproduction process executed by the client apparatus 200 in a case where content of an ISOBMFF file including information associated with quality ranking as described above is reproduced.

In response to a start of the content reproduction process, the segment file acquisition unit 214 of the client apparatus 200 acquires an ISOBMFF file including information associated with quality ranking corresponding to a projection extension method in step S381.

In step S382, the display control unit 215 acquires a measurement result of a viewpoint position (and a visual line direction) of a user.

In step S383, the measuring unit 211 measures a transmission bandwidth of a network between a server and the client apparatus 200.

In step S384, the segment file processing unit 221 selects a track having high image quality for a user visual field of the client apparatus 200 on the basis of the information associated with quality ranking and included in the ISOBMFF file acquired in step S381, the viewpoint position and the visual line of the user, the transmission bandwidth of the network between the client and the server, and the like.

In step S385, the segment file processing unit 221 extracts encoded data of the stream of the track selected in step S384 from the ISOBMFF file acquired in step S381.

In step S386, the decoding unit 222 decodes encoded data of a stream extracted in step S385.

In step S387, the display information generation unit 223 reproduces the stream (content) acquired by the decoding in step S386. More specifically, the display information generation unit 223 generates data indicating a display image from the stream, and supplies the generated data to the display unit 217 to allow display of the data.

After completion of processing in step S387, the content reproduction process ends.

By performing the content reproduction process in the manner described above, the client apparatus 200 can select and reproduce tracks of higher-quality images using information included in ISOBMFF files and associated with quality ranking corresponding to a projection extension method.

Accordingly, the client apparatus 200 can more easily select streams of higher-quality images to which a projection extension method is applied, by using the information associated with quality ranking, and provide images of the streams (higher-quality images) for the user.

In other words, a stream which has high image quality for a visual field region and to which eccentric spherical mapping is applied is selectable in accordance with the user visual field of the client apparatus 200. In such a manner, the user visual field region of the client apparatus 200 maintains high image quality constantly, wherefore a user experience can improve.

The projection format therefore is capable of meeting a viewport dependent image quality increase without the necessity of changing a considerable authoring workflow or client implementation due to adoption of a new projection format or the like. In other words, a higher-quality image can be more easily provided while reducing a drop of encoding efficiency.

### <Signaling of nested quality ranking region>

Eccentric spherical mapping has such a characteristic that image quality smoothly changes in a direction from the highest image quality to the lowest image quality. Accordingly, signaling of quality ranking of nested regions (regions having a nested structure) depicted in FIG. 47 is effective. Meanwhile, it is assumed that quality in each region where quality ranking is signaled (hereinafter also referred to as a quality ranking region) is substantially fixed, and that a smaller quality ranking value indicates higher image quality.

A quality ranking region 401 to a quality ranking region 403 are established in an image 400 depicted in FIG. 47. The quality ranking region 401 is contained in the quality ranking region 402, while the quality ranking region 402 is contained in the quality ranking region 403. Accordingly, the quality ranking regions 401 to 403 have a nested structure (nested regions).

In a case of the example of FIG. 47, a quality ranking value "1" is set for the quality ranking region 401. Moreover, a quality ranking value "2" is set for the quality ranking region 402. Furthermore, a quality ranking value "3" is set for the quality ranking region 403. Accordingly, in the regions, the image of the quality ranking region 401 has the highest image quality, while the image of the quality ranking region 403 has the lowest image quality. Note that a region 404 is a remaining region for which no quality ranking value is set.

The quality ranking value set as above for each nested region may be used as information associated with quality ranking described above. More specifically, information associated with quality ranking may include information associated with quality ranking for each region of the nested structure.

### <Box for signaling quality ranking>

As quality ranking, OMAF defines Sphere Region Quality Ranking Box which signals quality ranking of a region in a spherical surface and 2D Region Quality Ranking Box which signals quality ranking of a two-dimensional rectangular region.

A syntax 421 depicted in FIG. 48 indicates an example of a syntax of Sphere Region Quality Ranking Box. In addition, a syntax 422 depicted in FIG. 49 indicates an example of a syntax of 2D Region Quality Ranking Box.

The number of quality ranking regions included in each of Sphere Region quality Ranking Box and 2D Region quality Ranking Box is a number indicated by num_regions. In addition, quality_ranking is signaled in each of the regions. In Sphere Region Quality Ranking Box, a quality ranking region on a spherical surface is signaled in Sphere Region Struct. In 2D Region Quality Ranking Box, a two-dimensional rectangular quality ranking region is signaled in left_offset, top_offset, region_width, and region_height. In such a case, remaining_area_flag is used for signaling quality_ranking for an entire region other than signaled quality ranking regions.

Information associated with quality ranking for each region of the nested structure may be signaled in each of the boxes. In other words, information associated with quality ranking may include Sphere Region Quality Ranking Box. Moreover, information associated with quality ranking may include 2D Region Quality Ranking Box.

It is defined herein that quality ranking of a quality ranking region [i] is applied to regions remaining after all quality ranking regions [j] (i>j) overlapped with the quality ranking region [i] are removed from the quality ranking region [i]. The nested quality ranking regions are signaled in conformity with the definition. More specifically, in the case of the image 400 depicted in FIG. 47, the quality ranking regions 401 to 403 are defined as regions shaped as depicted in FIG. 50.

### <Information associated with overlap between quality ranking regions>

In addition, in a case where a client identifies a certain quality ranking region in the presence of overlap between quality ranking regions, it is necessary to perform processes of identifying the presence or absence of a region overlapped on the region, and removing the overlapped region if the overlapped region is present. On the other hand, in a case where an overlapped region is absent, the processes are unnecessary. More specifically, when the foregoing processes are always performed, a processing load imposed in the absence of the overlapped region may unnecessarily increase.

Accordingly, the presence or absence of an overlapped region between quality ranking regions may be clarified using a flag. More specifically, information associated with quality ranking described above may include information associated with overlap between quality ranking regions. For example, information indicating the presence or absence of overlap between quality ranking regions of an entire image may be included. In addition, for example, information indicating the presence or absence of overlap between a quality ranking region corresponding to the information and a different quality ranking region may be included. Use of such information eliminates the necessity of a process (allows omission of a process) performed by a client for removing an overlapped region from regions including no overlapped region. Accordingly, efficiency of processing performed by the client can improve.

A syntax 423 depicted in FIG. 51 indicates an example of a syntax of Sphere Region Quality Ranking Box in such a case. In addition, semantics 424 in FIG. 52 indicates an example of semantics of a field added to the box.

In such a case, overlapped_region_presence_flag is information indicating the presence or absence of overlap between quality ranking regions of an entire image. Each of the states may be indicated by any value. For example, a value of 0 for the field may indicate that no overlap region is present in all quality ranking regions. In addition, a value of 1 for the field may indicate that any overlap region is present between the quality ranking regions. Accordingly, in such a case, a process for removing an overlapped region is unnecessary for all the quality ranking regions within the image in a case where overlapped_region_presence_flag is 0. In other words, it is sufficient that the necessity of the process for removing the overlapped region is checked for each quality ranking region only in a case where overlapped_region_presence_flag is 1.

In addition, overlapped_region_flag is information indicating the presence or absence of overlap between a quality ranking region corresponding to the information and a different quality ranking region. For example, the overlapped_region_flag is set for each quality ranking region as depicted in FIG. 53.

Each of the states may be indicated by any value. For example, a value of 0 for the field may indicate that a different region (i=y, y<x) is not overlapped on a corresponding region (i=x). In addition, a value 1 for the field may indicate that a different region (i=y, y<x) is overlapped on a corresponding region (i=x). Accordingly, in such a case, a process for removing overlapped regions is unnecessary for a region where the overlapped_region_presence_flag is 0. In other words, it is sufficient that the process for removing the overlapped region is performed for only a region where the overlapped_region_presence_flag is 1.

In such a manner, the unnecessary increase in a processing load imposed on the client processing can be suppressed.

Moreover, when a different region is overlapped on a certain quality ranking region, which region is overlapped may be clarified. For example, the above information associated with quality ranking may include information indicating the number of different regions overlapped on the region corresponding to the information. In addition, for example, the above information associated with quality ranking may include information indicating the different regions overlapped with the region corresponding to the information. Use of such information can further facilitate processing performed by the client for identifying quality ranking regions other than the overlapped regions.

A syntax 425 depicted in FIG. 54 indicates an example of a syntax of Sphere Region Quality Ranking Box in such a case. In addition, semantics 426 in FIG. 55 indicates an example of semantics of a field added to the box.

In such a case, num_overlapped_regions is information set for each quality ranking region as depicted in FIG. 56. A value of the information indicates the number of different quality ranking regions overlapped on the quality ranking region for which the num_overlapped_regions is set.

In addition, overlapped_region_index is information set for each quality ranking region as depicted in FIG. 56. A value of the information indicates an index of a quality ranking region overlapped on the quality ranking region for which the overlapped_region_index is set (corresponding region). Accordingly, the value of the field indicates which quality ranking region is overlapped on the corresponding region. In the case of the absence of an overlapped region, the field may be omitted. In over words, omission of the field indicates that an overlapped region is absent.

The index of the region overlapped with the corresponding quality ranking region is identifiable with reference to the overlapped_region_index. In such a case, the necessity of checking all quality ranking regions is eliminated, wherefore a process performed by a client for identifying a quality ranking region other than an overlapped region can be further facilitated.

While the example of Sphere Region Quality Ranking Box has been described above, such extensions are also applicable to 2D Region Quality Ranking Box.

### <Signaling of only highest and lowest image quality ranking>

Eccentric spherical mapping has such a characteristic that image quality smoothly changes in a direction from the highest image quality to the lowest image quality. Accordingly, if quality ranking of the highest image quality or quality ranking of the lowest image quality is signaled, quality ranking of a region where no quality ranking is signaled can be estimated from the signaled quality ranking of the highest image quality and lowest image quality.

Therefore, only quality ranking of the highest image quality and quality ranking of the lowest image quality may be signaled, while signaling of quality ranking of other image quality may be omitted. More specifically, the information associated with quality ranking described above may include information associated with only quality ranking of the highest image quality and quality ranking of the lowest image quality. In such a case, a client may estimate other quality ranking on the basis of the information associated with only quality ranking of the highest image quality and quality ranking of the lowest image quality.

Moreover, at this time, a state that only quality ranking of the highest image quality and quality ranking of the lowest image quality are signaled may be clarified by a flag. More specifically, the information associated with quality ranking described above may further include information which indicates whether information associated with only quality ranking of the highest image quality and quality ranking of the lowest image quality is included.

For example, the state that only quality ranking of the highest image quality and quality ranking of the lowest image quality are signaled may be clarified by a flag with extension of Sphere Region Ranking Box. A syntax 427 depicted in FIG. 57 indicates an example of a syntax of Sphere Region Quality Ranking Box in such a case. In addition, semantics 428 in FIG. 58 indicates an example of semantics of a field added to the box.

In such a case, min_max_only_flag is information indicating whether information associated with only quality ranking of the highest image quality and quality ranking of the lowest image quality is included. A value of 1 for the field indicates that quality ranking signaled in the box is only quality ranking of the highest image quality and quality ranking of the lowest image quality. In addition, in such a case (the case of min_max_only_flag=1), the value of num_regions described above is 2.

While the example of Sphere Region Quality Ranking Box has been described above, such extension is also applicable to 2D Region Quality Ranking Box.

Moreover, instead of using the above two types of boxes, a box dedicated for signaling quality ranking of the highest image quality and quality ranking of the lowest image quality may be newly defined.

### <Signaling of only quality ranking of highest image quality>

Eccentric spherical mapping increases image quality in a specific one direction. In such a case, stream selection is achievable if the highest image quality region is only identifiable. Therefore, only quality ranking of the highest image quality may be signaled, while signaling of quality ranking of other image quality may be omitted.

For example, the information associated with quality ranking described above may include information associated with only quality ranking of the highest image quality. In addition, the information associated with quality ranking may further include quality ranking which has a value indicating that quality ranking of a corresponding region is not defined.

In such a manner, a client is not required to identify many quality ranking regions, wherefore processing can be simplified. Moreover, the content generation side is not required to calculate quality of many regions and perform signaling of many regions, wherefore processing can be simplified.

For example, signaling of only quality ranking of the highest image quality is achievable by defining that "a region having a specific value of quality_ranking is a region for which quality ranking is not defined and a region having the quality_ranking value has quality lower than image quality of any region having quality_ranking other than the corresponding quality_ranking value in semantics of Sphere Region Quality Ranking Box. For example, it is sufficient to define that a region of quality_ranking=0 is a region for which quality ranking is not defined, and has quality lower than image quality of any region having quality_ranking other than the value.

At this time, signaling of only quality ranking of the highest image quality is achievable by signaling quality ranking of the highest image quality region, and signaling other regions for which image quality is not defined (quality_ranking=0). Accordingly, a change of the syntax is unnecessary.

Needless to say, such extension of semantics is also applicable to 2D Region Quality Ranking Box.

Moreover, instead of using Sphere Region Quality Ranking Box and 2D Region Quality Ranking Box, a box dedicated for signaling only quality ranking of the highest image quality may be newly defined.

### <Signaling of quality ranking in MPD file>

In a case of signaling of information associated with projection extension in an MPD file as described in the second embodiment, not only switching between eccentric spherical mapping streams, but also a quality comparison between streams to which another projection extension or a viewport dependent image quality increase process (for example, region-wise packing) is applied, and stream switching based on the quality comparison are achievable by using quality ranking defined in OMAF similarly to the above case of the ISOBMFF file.

Accordingly, the information associated with quality ranking may be included in information associated with image quality of a projection planar image produced by mapping, on a single plane, a three-dimensional structure image as an image projected on a three-dimensional structure by a projection system to which projection extension corresponding to the projection extension described above is applied. For example, the MPD file generation unit 113 of the file generation apparatus 100 may provide an MPD file with information associated with image quality of a projection planar image and including quality ranking. In addition, for example, the MPD file processing unit 213 of the client apparatus 200 may select a stream on the basis of information associated with quality ranking and included in information associated with image quality of a projection planar image and included in an MPD file.

By using information associated with quality ranking in the manner described above, a client can more easily select a higher-quality image, and provide the selected image for a user.

### <Flow of uploading process>

Described with reference to a flowchart in FIG. 59 will be an example of a flow of an uploading process executed in such a case by the file generation apparatus 100 in FIG. 4.

In response to a start of the uploading process, the data input unit 111 of the file generation apparatus 100 acquires an image and metadata in step S401.

In step S402, the segment file generation unit 123 generates a segment file of the image.

In step S403, the MPD file generation unit 113 generates an MPD file including information associated with quality ranking.

In step S404, the recording unit 114 records the MPD file generated by processing in step S403. In addition, the recording unit 114 records the segment file generated by processing in step S402.

In step S405, the upload unit 115 reads out the MPD file recorded in step S404 from the recording unit 114, and uploads the MPD file to a server. In addition, the upload unit 115 reads out the MPD file recorded in step S404 from the recording unit 114, and uploads the MPD file to a server.

After completion of processing in step S405, the uploading process ends.

By performing the uploading process in the manner described above, the file generation apparatus 100 can generate MPD files including information associated with quality ranking.

Accordingly, a client can more easily select streams of higher-quality images to which a projection extension method is applied, by using the information associated with quality ranking. In other words, higher-quality images can be more easily provided for a user. The projection format therefore is capable of meeting a viewport dependent image quality increase without the necessity of changing a considerable authoring workflow or client implementation due to adoption of a new projection format or the like. In other words, a higher-quality image can be more easily provided while reducing a drop of encoding efficiency.

### <Flow of content reproduction process>

Described next with reference to a flowchart in FIG. 60 will be an example of a flow of a content reproduction process executed by the client apparatus 200 in a case where content of an MPD file including information associated with quality ranking as described above is reproduced.

In response to a start of the content reproduction process, the MPD file acquisition unit 212 of the client apparatus 200 acquires an MPD file including information associated with quality ranking corresponding to a projection extension method in step S421.

In step S422, the display control unit 215 acquires a measurement result of a viewpoint position (and a visual line direction) of a user.

In step S423, the measuring unit 211 measures a transmission bandwidth of a network between a server and the client apparatus 200.

In step S424, the MPD file processing unit 213 selects an adaptation set having high image quality for a user visual field of the client apparatus 200 on the basis of the information associated with quality ranking and included in the MPD file acquired in step S421, the viewpoint position and the visual line of the user, the transmission bandwidth of the network between the client and the server, and the like.

In step S425, the MPD file processing unit 213 selects a desired representation from the adaptation set selected in step S424.

In step S426, the segment file acquisition unit 214 acquires a segment file including the adaptation set and the representation selected in step S424 and S425.

In step S427, the segment file processing unit 221 extracts encoded data from the segment file acquired in step S426.

In step S428, the decoding unit 222 decodes encoded data of a stream extracted in step S427.

In step S429, the display information generation unit 223 reproduces the stream (content) acquired by the decoding in step S428. More specifically, the display information generation unit 223 generates data indicating a display image from the stream, and supplies the generated data to the display unit 217 to allow display of the data.

After completion of processing in step S429, the content reproduction process ends.

By performing the content reproduction process in the manner described above, the client apparatus 200 can select and reproduce an adaptation set of a higher-quality image using information associated with quality ranking corresponding to a projection extension method included in an MPD file.

Accordingly, the client apparatus 200 can more easily select streams of higher-quality images to which a projection extension method is applied, by using the information associated with quality ranking, and provide images of the streams (higher-quality images) for the user.

The projection format therefore is capable of meeting a viewport dependent image quality increase without the necessity of a considerable specification change due to adoption of a new projection format or the like. In other words, a higher-quality image can be more easily provided while reducing a drop of encoding efficiency.

### <Signaling of nested quality ranking region>

In a case where quality ranking is signaled in an MPD file, a quality ranking value set for each nested region may be used as information associated with quality ranking similarly to the case where quality ranking is signaled in the ISOBMFF file as described above. More specifically, information associated with quality ranking may include information associated with quality ranking for each region of the nested structure.

### <Descriptor signaling quality ranking>

OMAF also defines a spherical region-wise quality ranking descriptor and a 2D region-wise quality ranking descriptor as DASH MPD descriptors corresponding to Sphere Region Quality Ranking Box and 2D Region Quality Ranking Box, respectively.

Information associated with quality ranking for each region of the nested structure may be signaled in each of the descriptors. In other words, information associated with quality ranking may include the spherical region-wise quality ranking descriptor. Moreover, information associated with quality ranking may include the 2D region-wise quality ranking descriptor.

### <Information associated with overlap between quality ranking regions>

In a case where information associated with quality ranking is signaled in an MPD file, the presence or absence of an overlapped region between quality ranking regions may be clarified using a flag similarly to the case of the ISOBMFF file described above. More specifically, information associated with quality ranking described above may include information associated with overlap between quality ranking regions. For example, information indicating the presence or absence of overlap between quality ranking regions of an entire image may be included. In addition, for example, information indicating the presence or absence of overlap between a quality ranking region corresponding to the information and a different quality ranking region may be included. Use of such information eliminates the necessity of a process (allows omission of a process) performed by a client for removing an overlapped region from regions including no overlapped region. Accordingly, efficiency of processing performed by the client can improve.

Moreover, when a different region is overlapped on a certain quality ranking region, which region is overlapped may be clarified. For example, the above information associated with quality ranking may include information indicating the number of different regions overlapped on the region corresponding to the information. In addition, for example, the above information associated with quality ranking may include information indicating the different regions overlapped with the region corresponding to the information. Use of such information further facilitates processing performed by the client for identifying quality ranking regions other than the overlapped regions.

More specifically, for example, an overlapped_region_presence_flag attribute, an overlapped_region_flag attribute, a num_overlapped_regions attribute, an overlaped_region_index attribute, and the like may be added to the above descriptors.

The overlapped_region_presence_flag attribute is information indicating the presence or absence of overlap between quality ranking regions of an entire image similarly to the overlapped_region_presence_flag described above. Semantics in such a case is similar to the semantics of the overlapped_region_presence_flag.

The overlapped_region_flag attribute is information indicating the presence or absence of overlap between a quality ranking region corresponding to the information and a different quality ranking region similarly to the overlapped_region_flag described above. Semantics in such a case is similar to the semantics of the overlapped_region_flag.

The num_overlapped_regions attribute is information set for each quality ranking region similarly to the num_overlapped_regions described above. A value of the information indicates the number of different quality ranking regions overlapped on the quality ranking region for which the corresponding num_overlapped_regions attribute is set. Semantics in such a case is similar to the semantics of the num_overlapped_regions.

The overlapped_region_index attribute is information set for each quality ranking region similarly to the overlapped_region_index described above. A value of the information indicates an index of a quality ranking region overlapped on the quality ranking region for which the corresponding overlapped_region_index attribute is set (corresponding region). Accordingly, the value of the field indicates which quality ranking region is overlapped on the corresponding region. Semantics in such a case is similar to the semantics of the num_overlapped_regions.

Accordingly, advantageous effects similar to those of the case of the above-described case of the ISOBMFF file can be also produced at the time of selection of an adaptation set based on quality ranking information under DASH.

### <Signaling of only quality ranking of highest and lowest image quality>

In a case of an MPD file, only quality ranking of the highest image quality and quality ranking of the lowest image quality may be signaled, and signaling of quality ranking of other image quality may be omitted similarly to the above case of the ISOBMFF file. More specifically, the information associated with quality ranking described above may include information associated with only quality ranking of the highest image quality and quality ranking of the lowest image quality. In such a case, a client may estimate other quality ranking on the basis of information associated with only quality ranking of the highest image quality and quality ranking of the lowest image quality.

Moreover, at this time, a state that only quality ranking of the highest image quality and quality ranking of the lowest image quality are signaled may be clarified by a flag. More specifically, the information associated with quality ranking described above may further include information which indicates whether information associated with only quality ranking of the highest image quality and quality ranking of the lowest image quality is included.

For example, a min_max_only_flag attribute may be added to the spherical region-wise quality ranking descriptor and the 2D region-wise quality ranking descriptor described above. The min_max_only_flag attribute is information indicating whether information associated with only quality ranking of the highest image quality and quality ranking of the lowest image quality is included similarly to the min_max_only_flag described above. Semantics in such a case is similar to the semantics of the min_max_only_flag. The configuration is applicable because advantageous effects similar to those of the case of track selection are also produced at the time of selection of an adaptation set based on quality ranking information under DASH.

Note that a descriptor for signaling only quality ranking of the highest image quality and quality ranking of the lowest image quality may be newly defined.

### <Signaling of only quality ranking of highest image quality>

In a case of an MPD file, only quality ranking of the highest image quality may be signaled, and signaling of quality ranking of other image quality may be omitted similarly to the above case of the ISOBMFF file.

For example, the information associated with quality ranking described above may include information associated with only quality ranking of the highest image quality. In addition, the information associated with quality ranking may further include quality ranking which has a value indicating that quality ranking of a corresponding region is not defined.

In such a manner, a client is not required to identify many quality ranking regions, wherefore processing can be simplified. Moreover, the content generation side is not required to calculate quality and perform signaling for many regions, wherefore processing can be simplified.

Note that a descriptor for signaling only quality ranking of the highest image quality may be newly defined.

### <Attribute signaling of image quality increase region in ISOBMFF file>

Described next will be a dynamic eccentric spherical mapping stream where an image quality increase region dynamically changes in a stream. Subsequently, in a case where an image quality increase region dynamically changes in a stream, stream selection in accordance with user preference is achievable by signaling an attribute of the image quality increase region.

For example, information associated with an image quality increase region having higher image quality than image quality of other regions may be included in information included in an ISOBMFF file and associated with image quality of a projection planar image produced by mapping, on a single plane, a three-dimensional structure image as an image projected on a three-dimensional structure by a projection system to which projection extension corresponding to the projection extension described above is applied.

For example, the segment file generation unit 123 of the file generation apparatus 100 may provide an ISOBMFF file with information associated with image quality of a projection planar image and including information associated with an image quality increase region having higher image quality than image quality of other regions. In addition, for example, the data analysis and decoding unit 216 of the client apparatus 200 may select a stream on the basis of information associated with an image quality increase region having higher image quality than image quality of other regions in information associated with image quality of a projection planar image and included in an ISOBMFF file.

By using the information associated with an image quality increase region having higher image quality than image quality of other regions as described above, a stream to which eccentric spherical mapping providing high image quality for a desired region is applied is selectable in accordance with user preference. In such a manner, a user can view and listen to a stream having high image quality for a desired region, wherefore a user experience can improve.

### <Flow of uploading process>

Described with reference to a flowchart in FIG. 61 will be an example of a flow of an uploading process executed in such a case by the file generation apparatus 100 in FIG. 4.

In response to a start of the uploading process, the data input unit 111 of the file generation apparatus 100 acquires an image and metadata in step S441.

In step S442, the segment file generation unit 123 generates an ISOBMFF file including information associated with an attribute of an image quality increase region for each track.

In step S443, the recording unit 114 records the ISOBMFF file generated by processing in step S442.

In step S444, the upload unit 115 reads out the ISOBMFF file recorded in step S443 from the recording unit 114, and uploads the ISOBMFF file to a server.

After completion of processing in step S444, the uploading process ends.

By performing the uploading process in the manner described above, the file generation apparatus 100 can generate ISOBMFF files including information associated with an image quality increase region having higher image quality than image quality of other regions.

Accordingly, a client can more easily select streams of higher-quality images to which a projection extension method is applied, by using the "information associated with an image quality increase region having higher image quality than image quality of other regions." In other words, higher-quality images can be more easily provided for a user. The projection format therefore is capable of meeting a viewport dependent image quality increase without the necessity of a considerable specification change due to adoption of a new projection format or the like. In other words, a higher-quality image can be more easily provided while reducing a drop of encoding efficiency.

### <Flow of content reproduction process>

Described next with reference to a flowchart in FIG. 62 will be an example of a flow of a content reproduction process executed by the client apparatus 200 in a case where content of an ISOBMFF file including information associated with an image quality increase region having higher image quality than image quality of other regions as described above is reproduced.

In response to a start of the content reproduction process, the segment file acquisition unit 214 of the client apparatus 200 acquires an ISOBMFF file including information associated with an image quality increase region for each track in step S461.

In step S462, the display control unit 215 acquires a measurement result of a viewpoint position (and a visual line direction) of a user.

In step S463, the measuring unit 211 measures a transmission bandwidth of a network between a server and the client apparatus 200.

In step S464, the segment file processing unit 221 identifies and displays an attribute of an image quality increase region for each track on the basis of information associated with the attribute of the image quality increase region and included in the ISOBMFF file acquired in step S461, and selects a track in accordance with user preference input on the basis of the display.

In step S465, the segment file processing unit 221 extracts encoded data of the stream of the track selected in step S464 from the ISOBMFF file acquired in step S461.

In step S466, the decoding unit 222 decodes encoded data of a stream extracted in step S465.

In step S467, the display information generation unit 223 reproduces the stream (content) acquired by the decoding in step S466. More specifically, the display information generation unit 223 generates data indicating a display image from the stream, and supplies the generated data to the display unit 217 to allow display of the data.

After completion of processing in step S467, the content reproduction process ends.

By performing the content reproduction process in the manner described above, the client apparatus 200 can select and reproduce a track of a higher-quality image using information included in an ISOBMFF file and associated with an attribute of an image quality increase region corresponding to a projection extension method.

Accordingly, by using information associated with the attribute of the image quality increase region, the client apparatus 200 allows a user to more easily view and listen to a stream having high image quality for a desired region, wherefore a user experience can improve.

The projection format therefore is capable of meeting a viewport dependent image quality increase without the necessity of a considerable specification change due to adoption of a new projection format or the like. In other words, a higher-quality image can be more easily provided while reducing a drop of encoding efficiency.

### <Signal as information added to video stream>

For example, as the "information associated with an image quality increase region having higher image quality than image quality of other regions," Quality Emphasized Viewport Information Box may be newly defined in Projected Omnidirectional Video Box of an ISOBMFF file.

A syntax 441 depicted in FIG. 63 indicates an example of a syntax of Projected Omnidirectional Video Box. Quality Emphasized Viewport Information Box is defined in the third row from the top of the syntax 441 (syntax of Projected Omnidirectional Video Box).

A syntax 442 depicted in FIG. 64 indicates an example of a syntax of the Quality Emphasized Viewport Information Box. Semantics 443 in FIG. 65 indicates an example of semantics of a field added to the Quality Emphasized Viewport Information Box.

For example, viewport_type is information indicating an attribute of an image quality increase region. Each of the attributes may be indicated by any value. For example, a value of 0 for the field may indicate a director's cut. In addition, a value of 1 for the field may indicate a region most frequently viewed and listened to by a user. Moreover, a value of 2 for the field may indicate following of a specific performer. Furthermore, values of 240 to 255 for the field may each indicate a type determined for each application.

In addition, for example, viewport_description is information defining a character string as supplementary information associated with viewport_type.

For example, in a case of an omnidirectional video having high image quality for a director's cut as a video to be viewed and listened to by a user, it is sufficient that the client apparatus 200 selects and reproduces a track of viewport_type=0. In such a case, for example, a name of a movie director at the time of viewport_type=0 and a name of a performer at the time of viewport_type=2 are signaled in viewport_description, and used for display of a stream selection screen or the like.

As described above, the "information associated with an image quality increase region having higher image quality than image quality of other regions" may include viewport_type indicating an attribute of the image quality increase region and stored in Quality Emphasized Viewport Information Box in Projected Omnidirectional Video Box of an ISOBMFF file.

### <Extension of ProjectionEnhancementBox>

Note that information associated with an image quality increase region having higher image quality than image quality of other regions may be signaled with extension of Projection Enhancement Box of an ISOBMFF file described in the first embodiment.

A syntax 444 depicted in FIG. 66 indicates an example of a syntax of Projection Enhancement Box in such a case.

Note that the configuration is applicable not only to an eccentric spherical mapping stream, but also to a viewport dependent image quality increase dynamically changing in a different stream.

### <Signal as information added to timed metadata>

A flag indicating matching between an image quality increase region of an omnidirectional video and a recommended viewport may be added to recommended viewport timed metadata. By displaying a recommended viewport in accordance with recommended viewport timed metadata regardless of a visual field change of a client, display of an image quality increase region is constantly achievable. Note that a track of recommended viewport timed metadata and a track of an omnidirectional video are associated with each other by a reference relationship based on a track reference.

Note that the configuration is applicable not only to an eccentric spherical mapping stream, but also to a viewport dependent image quality increase dynamically changing in a different stream.

For signaling such a flag, Recommended viewport information Box (RcvpInfoBox) defined in OMAF may be extended. RvcpInfoBox is signaled in SampleEntry of recommended viewport timed metadata.

More specifically, the "information associated with an image quality increase region having higher image quality than image quality of other regions" may include flag information stored in RcvpInfoBox of recommended viewport timed metadata of an ISOBMFF file and indicating whether a corresponding high image quality increase region and a region corresponding to an recommended attribute match each other.

A syntax 445 depicted in FIG. 67 indicates an example of a syntax of the RcvpInfoBox. In addition, semantics 446 in FIG. 68 indicates an example of semantics of a field added to the RcvpInfoBox.

### In such a case,

quality_emphasized_region_matching_flag is a flag indicating whether an image quality increase region and a region corresponding to a recommended attribute match each other. A value of "1" for the field indicates matching between an image quality increase region of an associated omnidirectional video and a recommended viewport.

Note that matching between a recommended viewport signaled in timed metadata and an image quality increase region of an omnidirectional video may be indicated by a specific reference type in a track reference associating a track of recommended viewport timed metadata and a track of the omnidirectional video without signaling quality_emphasized_region_matching_flag as depicted in FIG. 69. For example, matching between a recommended viewport and a high image quality increase region of an omnidirectional video is indicated in a case of reference to reference_type="empr."

In addition, it is allowed to signal a flag indicating whether or not a recommended viewport signaled in recommended viewport timed metadata associated with a track storing an omnidirectional video matches with an image quality increase region of the omnidirectional video. A syntax 461 depicted in FIG. 70 indicates an example of a syntax of Projection Enhancement Box. As indicated by the syntax 461, it is allowed to set, for Projection Enhancement Box, recommended_viewport_matching_flag which is a flag indicating whether or not a recommended viewport signaled in recommended viewport timed metadata associated with a track storing an omnidirectional video matches with an image quality increase region of the omnidirectional video. A value of "1" for such recommended_viewport_matching_flag indicates matching between the recommended viewport and the image quality increase region of the omnidirectional video.

### <Attribute signaling in image quality increase region in MPD file>

In a case where information associated with projection extension is signaled in an MPD file as described in the second embodiment, a stream corresponding to user preference is selectable from streams where an image quality increase region dynamically changes by signaling an attribute of the image quality increase region similarly to the ISOBMFF file described above.

For example, information associated with an image quality increase region having higher image quality than image quality of other regions may be included in information included in an MPD file and associated with image quality of a projection planar image produced by mapping, on a single plane, a three-dimensional structure image as an image projected on a three-dimensional structure by a projection system to which projection extension corresponding to the projection extension described above is applied.

For example, the MPD file generation unit 113 of the file generation apparatus 100 may provide an MPD file with information associated with image quality of a projection planar image and including information associated with an image quality increase region having higher image quality than image quality of other regions. In addition, for example, the MPD file processing unit 213 of the client apparatus 200 may select a stream on the basis of information associated with an image quality increase region having higher image quality than image quality of other regions in information associated with image quality of a projection planar image and included in an MPD file.

By using the information associated with an image quality increase region having higher image quality than image quality of other regions as described above, a stream which has high image quality for a desired region and to which eccentric spherical mapping is applied is selectable in accordance with user preference. In such a manner, a user can view and listen to a stream having high image quality for a desired region, wherefore a user experience can improve.

### <Flow of uploading process>

Described with reference to a flowchart in FIG. 71 will be an example of a flow of an uploading process executed in such a case by the file generation apparatus 100 in FIG. 4.

In response to a start of the uploading process, the data input unit 111 of the file generation apparatus 100 acquires an image and metadata in step S481.

In step S482, the segment file generation unit 123 generates a segment file of the image.

In step S483, the MPD file generation unit 113 generates an MPD file including information associated with an attribute of an image quality increase region for each adaptation set.

In step S484, the recording unit 114 records the MPD file generated by processing in step S483. In addition, the recording unit 114 records the segment file generated by processing in step S482.

In step S485, the upload unit 115 reads out the MPD file recorded in step S484 from the recording unit 114, and uploads the MPD file to a server. In addition, the upload unit 115 reads out the segment file recorded in step S484 from the recording unit 114, and uploads the segment file to the server.

After completion of processing in step S485, the uploading process ends.

By performing the uploading process in the manner described above, the file generation apparatus 100 can generate MPD files including information associated with an image quality increase region having higher image quality than image quality of other regions.

Accordingly, a client can more easily select streams of higher-quality images to which a projection extension method is applied, by using the "information associated with an image quality increase region having higher image quality than image quality of other regions." In other words, higher-quality images can be more easily provided for a user. The projection format therefore is capable of meeting a viewport dependent image quality increase without the necessity of a considerable specification change due to adoption of a new projection format or the like. In other words, a higher-quality image can be more easily provided while reducing a drop of encoding efficiency.

### <Flow of content reproduction process>

Described next with reference to a flowchart in FIG. 72 will be an example of a flow of a content reproduction process executed by the client apparatus 200 in a case where content of an MPD file including information associated with an image quality increase region having higher image quality than image quality of other regions as described above is reproduced.

In response to a start of the content reproduction process, the MPD file acquisition unit 212 of the client apparatus 200 acquires an MPD file including information associated with an image quality increase region for each adaptation set in step S501.

In step S502, the display control unit 215 acquires a measurement result of a viewpoint position (and a visual line direction) of a user.

In step S503, the measuring unit 211 measures a transmission bandwidth of a network between a server and the client apparatus 200.

In step S504, the MPD file processing unit 213 identifies and displays an attribute of an image quality increase region for each adaptation set on the basis of information associated with the attribute of the image quality increase region and included in the MPD file acquired in step S501, and selects an adaptation set in accordance with user preference input on the basis of the display.

In step S505, the MPD file processing unit 213 selects a desired representation from the adaptation set selected in step S504.

In step S506, the segment file acquisition unit 214 acquires a segment file including the adaptation set and the representation selected in step S504 and S505.

In step S507, the segment file processing unit 221 extracts encoded data from the segment file acquired in step S506.

In step S508, the decoding unit 222 decodes encoded data of a stream extracted in step S507.

In step S509, the display information generation unit 223 reproduces the stream (content) acquired by the decoding in step S508. More specifically, the display information generation unit 223 generates data indicating a display image from the stream, and supplies the generated data to the display unit 217 to allow display of the data.

After completion of processing in step S509, the content reproduction process ends.

By performing the content reproduction process in the manner described above, the client apparatus 200 can select and reproduce an adaptation set of a higher-quality image using information included in an MPD file and associated with an attribute of an image quality increase region corresponding to a projection extension method.

Accordingly, by using information associated with the attribute of the image quality increase region, the client apparatus 200 allows a user to more easily view and listen to a stream having high image quality for a desired region, wherefore a user experience can improve.

The projection format therefore is capable of meeting a viewport dependent image quality increase without the necessity of a considerable specification change due to adoption of a new projection format or the like. In other words, a higher-quality image can be more easily provided while reducing a drop of encoding efficiency.

### <Signal as information added to video stream>

For example, as the "information associated with an image quality increase region having higher image quality than image quality of other regions" in a case of signaling in an MPD file, a quality emphasized viewport info descriptor may be newly defined in the MPD file.

For example, Supplemental Property of @schemeIdUri="urn:mpeg:mpegI:omaf:2017:qevi" may be defined as the quality emphasized viewport info descriptor. In addition, Essential Property of the same schemeIdUri may be used. Note that the quality emphasized viewport info descriptor is not limited to the example described above, but may be also present at an adaptation set level or a representation level, for example.

An attribute value 471 in FIG. 73 indicates an example of an attribute value of the quality emphasized viewport info descriptor. In such a case, omaf:@viewport_type indicated in the attribute value 471 has a datatype of xs:unsignedByte, and indicates an attribute of an image quality increase region.

Each of the attributes may be indicated by any value. For example, an attribute value of 0 for the attribute value may indicate a director's cut. In addition, a value of 1 for the attribute value may indicate a region most frequently viewed and listened to by a user. Moreover, a value of 2 for the attribute value may indicate following of a specific performer. Furthermore, for example, values of 240 to 255 for the attribute value may each indicate a type determined for each application.

In addition, omaf:@viewport_description indicated by the attribute value 471 has a datatype of xs:string, and indicates a character string as supplementary information for viewport_type.

A datatype 472 in FIG. 74 indicates an example of a definition of a datatype in such a case.

More specifically, the information associated with an image quality increase region having higher image quality than image quality of other regions may include omaf:@viewport_type as an attribute value indicating an attribute of the image quality increase region and described in the quality emphasized viewport info descriptor defined in an MPD file.

### <Extension of ProjectionEnhancementBox>

Note that the information associated with an image quality increase region having higher image quality than image quality of other regions may be signaled with extension of the projection enhancement descriptor.

Note that the configuration is applicable not only to an eccentric spherical mapping stream, but also to a viewport dependent image quality increase dynamically changing in a different stream.

### <Signal as information added to timed metadata>

In addition, it is allowed to newly define a recommended viewport information descriptor, and signal a flag indicating matching or mismatching between an attribute of an image quality increase region of an omnidirectional video and a recommended viewport and between an image quality increase region and the recommended viewport.

In such a case, Supplemental Property of @schemeIdUri="urn:mpeg:mpegI:omaf:2017:rvif" is defined as a projection enhancement descriptor. In addition, Essential Property of the same schemeIdUri may be used. Note that the descriptor is not limited to the example described above, but may be also present at an adaptation set level or a representation level.

Moreover, a representation of recommended viewport timed metadata and a representation of an omnidirectional video are associated with each other by @associationId and @associationType.

An attribute value 473 depicted in FIG. 75 indicates an example of the attribute value of the recommended viewport information descriptor. In such a case, omaf:@viewport_type has a datatype of xs:unsignedByte, and corresponds to an attribute value indicating a recommended viewport type.

Each of the types may be indicated by any value. For example, a value of 0 for the attribute value may indicate a director's cut. In addition, a value of 1 for the attribute value may indicate a region most frequently viewed and listened to by a user. Moreover, a value of 3 for the attribute value may indicate following of a specific performer. Furthermore, values of 240 to 255 for the attribute value may each indicate a type determined for each application.

In addition, omaf:@viewport_description has a datatype of xs:string, and corresponds to an attribute value indicating a character string as supplementary information for viewport_type.

Furthermore, omaf:@quality_emphasized_region_matching_flag has a datatype of xs:boolean, and corresponds to an attribute value indicating matching between an image quality increase region of an omnidirectional video and a recommended viewport. For example, a value of 1 for the attribute value may indicate matching between an associated image quality increase region of an omnidirectional video and a recommended viewport.

More specifically, the information associated with an image quality increase region having higher image quality than image quality of other regions may include omaf:@quality_emphasized_region_matching_flag that is an attribute value described in the recommended viewport information descriptor defined in an MPD file and indicating whether the image quality increase region and a region corresponding to a recommended attribute match each other.

Note that a datatype 474 in FIG. 76 indicates an example of a definition of a datatype in such a case.

A client can identify an attribute of an image quality increase region of an associated stream from the descriptor to select a stream.

Note that specific @associationType may indicate matching between a recommended viewport signaled in timed metadata and an image quality increase region of an omnidirectional video at the time of association between a representation of recommended viewport timed metadata and a representation of an omnidirectional video by @associationId and @associationType without signaling omaf:@quality_emphasized_region_matching_flag. For example, it is assumed that matching between a recommended viewport and a high image quality increase region of an omnidirectional video is indicated in a case of association by @associationType="empr." An MPD 475 in FIG. 77 indicates an example of an MPD in such a case.

Note that it is allowed to set recommended_viewport_matching_flag that is a flag indicating whether or not a recommended viewport signaled in recommended viewport timed metadata associated with a track storing an omnidirectional video matches an image quality increase region of the omnidirectional video with extension of the projection enhancement descriptor.

While described up to here has been the example where determination of an image quality increase region is made on the content reproduction side, the client apparatus 200 may transmit preference information (for example, particular character) to a server distributing a stream to allow the server to dynamically encode and distribute a stream having high image quality for a target desired by a client.

### <5. Additional statement>

### <Computer>

A series of processes described above may be executed either by hardware or software. In a case where the series of processes are executed by software, a program included in the software is installed in a computer. Examples of the computer herein include a computer incorporated in dedicated hardware, and a general-purpose personal computer or the like capable of executing various functions under various programs installed in the computer.

FIG. 78 is a block diagram depicting a configuration example of hardware of a computer which executes the series of processes described above under a program.

In a computer 900 depicted in FIG. 78, a CPU (Central Processing Unit) 901, a ROM (Read Only Memory) 902, and a RAM (Random Access Memory) 903 are connected to each other via a bus 904.

An input/output interface 910 is also connected to the bus 904. An input unit 911, an output unit 912, a storage unit 913, a communication unit 914, and a drive 915 are connected to the input/output interface 910.

For example, the input unit 911 includes a keyboard, a mouse, a microphone, a touch panel, an input terminal, and the like. For example, the output unit 912 includes a display, a speaker, an output terminal, and the like. For example, the storage unit 913 includes a hard disk, a RAM disk, a non-volatile memory, and the like. For example, the communication unit 914 includes a network interface. The drive 915 drives a removable medium 921 such as a magnetic disk, an optical disk, a magneto-optical disk, and a semiconductor memory.

According to the computer configured as above, the CPU 901 loads a program stored in the storage unit 913 into the RAM 903 via the input/output interface 910 and the bus 904 and executes the program, for example, to perform the series of processes described above. The RAM 903 also appropriately stores data and the like necessary for the CPU 901 to execute various processes.

For example, a program executed by the computer (CPU 901) is allowed to be recorded in the removable medium 921 as a package medium or the like to be applied. In such a case, the program is allowed to be installed into the storage unit 913 via the input/output interface 910 from the removable medium 921 attached to the drive 915.

Moreover, the program is allowed to be provided via a wired or wireless transmission medium such as a local area network, the Internet, and digital satellite broadcasting. In such a case, the program is allowed to be received by the communication unit 914, and installed into the storage unit 913.

Alternatively, the program is allowed to be installed beforehand in the ROM 902 and the storage unit 913.

### <Application items of present technology>

While the case where the present technology is applied to ISOBMFF files or MPD files has been described above, application examples of the present technology are not limited to the examples. The present technology is applicable to files of any specifications for distributing a stream of a projection planar image produced by mapping a three-dimensional structure image on a single plane with application of projection extension. In other words, any specifications of distribution control, file format, and various processes such as an encoding and decoding system may be adopted insofar as consistent with the present technology described above. In addition, a part of the processes and specifications described above may be omitted insofar as consistent with the present technology described above.

Moreover, while the file generation apparatus 100 and the client apparatus 200 have been described above as an application example of the present technology, the present technology is applicable to any configuration.

For example, the present technology is applicable to various kinds of electronic equipment, for example, transmitters and receivers (for example, television receivers and cellar phones) of satellite broadcasting, wired broadcasting such as cable TV, distribution via the Internet, distribution to terminals by cellular communication, and the like, or apparatuses (for example, hard disk recorders and cameras) for recording images in media such as optical disks, magnetic disks, and flash memories and for reproducing images from the storage media.

Furthermore, for example, the present technology is also allowed to be practiced as a part included in an apparatus such as a processor (for example, a video processor) as a system LSI (Large Scale Integration) or the like, a module (for example, a video module) including a plurality of processors or the like, a unit (for example, a video unit) including a plurality of modules or the like, and a set (for example, a video set) including other functions added to a unit.

In addition, for example, the present technology is applicable to a network system including a plurality of apparatuses. For example, the present technology may be practiced as cloud computing where processes are shared by a plurality of apparatuses via a network and performed by the apparatuses in cooperation with each other. For example, the present technology may be practiced in a cloud service which provides services associated with images (moving images) for any terminals such as computers, AV (Audio Visual) equipment, portable information processing terminals, and IoT (Internet of Things) devices.

Note that the system in the present description refers to an assembly of a plurality of constituent elements (apparatuses, modules (parts), and the like). It does not matter whether or not all constituent elements are accommodated in an identical housing. Accordingly, a plurality of apparatuses stored in different housings and connected to each other via a network, and one apparatus which stores a plurality of modules in one housing are both systems.

### <Fields and intended uses to which present technology is applicable>

A system, an apparatus, a processing unit, and the like to which the present technology is applied is available in any field such as traffic, medical treatment, crime prevention, agriculture, livestock industries, mining, beauty, factories, home appliances, meteorology, and nature monitoring. Moreover, intended uses of the applications may be any uses.

For example, the present technology is applicable to systems and devices for providing appreciation content and the like. Moreover, for example, the present technology is applicable to systems and devices provided for traffic uses such as monitoring of traffic situations and autonomous driving control. Furthermore, for example, the present technology is applicable to systems and devices for providing security. In addition, for example, the present technology is applicable to systems and devices for achieving automatic control of machines and the like. Moreover, for example, the present technology is applicable to systems and devices used for agriculture and livestock industries. Furthermore, the present technology is applicable to systems and devices for monitoring states of nature such as volcanos, forests, and oceans, and wildlife. In addition, for example, the present technology is applicable to systems and devices used for sports.

### <Others>

Note that the "flag" in the present description is information for identifying a plurality of states, and includes not only information for identifying two states including true (1) and false (0) states, but also information for identifying three or more states. Accordingly, values of the "flag" may be two values of 1 and 0, or three or more values. In other words, the "flag" may include any number of bits, i.e., 1 bit or a plurality of bits. Furthermore, it is assumed that identification information (including flag) is not only included in a bit stream, but also configured such that information indicating a difference between the identification information and certain information as a reference is included in a bit stream. Accordingly, the "flag" and "identification information" in the present description not only each refer to the information itself, but also contain information indicating a difference from reference information.

In addition, various information (metadata and the like) associated with encoded data (bit stream) may be transmitted or recorded in any forms as long as association with encoded data is made. The term "association" herein refers to usability (linkage) of the other data at the time of processing of one data, for example. In other words, respective pieces of data associated with each other may be either assembled into one data, or handled as individual pieces of data. For example, information associated with encoded data (images) may be transmitted in a transmission path different from a transmission path of the encoded data (images). Moreover, for example, information associated with encoded data (images) may be recorded in a recording medium different from the encoded data (images) (or a different recording area of the same recording medium). Note that the "association" may be made for a part of data rather than entire data. For example, images and information corresponding to the images may be associated with each other in any units, such as a plurality of frames, one frame, and a part of a frame.

Note that terms such as "synthesize," "multiplex," "add," "integrate," "include," "store," "incorporate," "put into," and "insert" in the present description each refer to combining a plurality of things into one, such as combining encoded data and metadata into one data, and indicate one method of the "association" described above.

Furthermore, embodiments of the present technology are not limited to the embodiments described above, and may be modified in various manners without departing from the subject matters of the present technology.

For example, a configuration including one apparatus (or processing unit) described herein may be divided into a plurality of apparatuses (or processing units). Conversely, a configuration including a plurality of apparatuses (or processing units) described above may be assembled into one apparatus (or processing unit). Moreover, needless to say, configurations other than those described above may be added to configurations of respective apparatuses (or processing units). Furthermore, a part of a configuration of a certain apparatus (or processing unit) may be included in a configuration of another apparatus (or another processing unit) as long as configurations and operations as entire systems of the apparatuses are substantially the same.

In addition, for example, the program described above may be executed by any apparatus. In such a case, it is sufficient that the apparatus has a necessary function (function block or the like), and acquires necessary information.

Moreover, for example, respective steps of one flowchart may be executed by one apparatus, or shared and executed by a plurality of apparatuses. Furthermore, in a case where one step includes a plurality of processes, the plurality of processes may be executed by one apparatus, or shared and executed by a plurality of apparatuses. In other words, a plurality of processes included in one step may be executed as processes of a plurality of steps. Conversely, processes described as a plurality of steps may be combined and executed as one step.

In addition, for example, the program executed by the computer may be performed such that processes of steps describing the program are executed in time series in an order described in the present description, or may be executed in parallel or individually at necessary timing such as an occasion of a call. In other words, the processes of the respective steps may be executed in an order different from the order described above insofar as no inconsistency is produced. Moreover, the processes of the steps describing the program may be executed in parallel with processes of other programs, or may be executed in combination with processes of other programs.

Furthermore, for example, each of the plurality of technologies associated with the present technology may be independently executed as a unit insofar as no inconsistency is produced. Needless to say, any number of the present technologies more than one may be used in combination with each other. For example, a part or all of the present technology described in any one of the embodiments may be combined with a part or all of the present technology described in any of the other embodiments. In addition, a part or all of any of the present technology described above may be used in combination with a different technology not described above.

Note that the present technology is allowed to have following configurations.
(1) An information processing apparatus including:
   a file generation unit that generates a file that includes information associated with projection extension as an extension method of a projection system for mapping, on a single plane, a three-dimensional structure image as an image projected on a three-dimensional structure, and includes image encoded data indicating an encoded projection planar image produced by mapping, on the plane, the three-dimensional structure image by the projection system to which the projection extension is applied.
(2) The information processing apparatus according to (1), in which the information associated with the projection extension includes information indicating whether the projection extension is applied.
(3) The information processing apparatus according to (1) or (2), in which the information associated with the projection extension includes information indicating a type of the applied projection extension.
(4) The information processing apparatus according to (3), in which the type of the projection extension includes EAC (Equi-Angular Cubemap).
(5) The information processing apparatus according to (3) or (4), in which the type of the projection extension includes eccentric spherical mapping.
(6) The information processing apparatus according to any one of (1) to (5), in which the information associated with the projection extension includes information necessary for rendering into the three-dimensional structure.
(7) The information processing apparatus according to any one of (1) to (6), in which the projection system includes ERP (Equirectangular projection).
(8) The information processing apparatus according to any one of (1) to (7), in which the projection system includes CMP (Cubemap projection).
(9) The information processing apparatus according to any one of (1) to (8), in which the file generation unit generates the file that includes information associated with the projection extension as information for each stream of the image encoded data.
(10) The information processing apparatus according to (9), in which
   the file is an ISOBMFF (International Organization for Standardization Base Media File Format) file, and
   the information associated with the projection extension is stored in Projected Omnidirectional Video Box of the ISOBMFF file.
(11) The information processing apparatus according to (10), in which the information associated with projection extension includes Projection_Enhancement_Box which is stored in the Projected Omnidirectional Video Box and indicates that the projection extension is applied by exhibiting the presence of Projection Enhancement Box.
(12) The information processing apparatus according to (11), in which the information associated with the projection extension includes enhancement_type stored in the Projection_Enhancement_Box and indicating a type of the applied projection extension.
(13) The information processing apparatus according to (12), in which the information associated with the projection extension includes information stored in the Projection_Enhancement_Box and necessary for rendering into the three-dimensional structure for each type of the projection extension.
(14) The information processing apparatus according to any one of (9) to (13), in which
   the file is an ISOBMFF (International Organization for Standardization Base Media File Format) file, and
   the information associated with the projection extension includes a box stored in the ISOBMFF file and dedicated for a type of the projection extension.
(15) An information processing method including:
   generating a file that includes information associated with projection extension as an extension method of a projection system for mapping, on a single plane, a three-dimensional structure image as an image projected on a three-dimensional structure, and includes image encoded data indicating an encoded projection planar image produced by mapping, on the plane, the three-dimensional structure image by the projection system to which the projection extension is applied.
(21) An information processing apparatus including:
   a file acquisition unit that acquires a file including information associated with projection extension as an extension method of a projection system for mapping, on a single plane, a three-dimensional structure image as an image projected on a three-dimensional structure, and image encoded data indicating an encoded projection planar image produced by mapping the three-dimensional structure image on the plane by the projection system to which the projection extension is applied; and
   an image processing unit that selects a stream of the image encoded data on the basis of the information associated with the projection extension and included in the file acquired by the file acquisition unit.
(22) The information processing apparatus according to (21), in which
   the information associated with the projection extension includes information indicating whether the projection extension is applied, and
   the image processing unit is configured to identify whether the projection extension is applied on the basis of the information indicating whether the projection extension is applied, and select the stream on the basis of a result of the identification.
(23) The information processing apparatus according to (21) or (22), in which
   the information associated with the projection extension includes information indicating a type of the applied projection extension, and
   the image processing unit is configured to identify the type of the applied projection extension on the basis of the information indicating the type of the projection extension, and select the stream on the basis of a result of the identification.
(24) The information processing apparatus according to (23), in which the type of the projection extension includes EAC (Equi-Angular Cubemap).
(25) The information processing apparatus according to (23) or (24), in which the type of the projection extension includes eccentric spherical mapping.
(26) The information processing apparatus according to any one of (21) to (25), in which
   the information associated with the projection extension includes information necessary for rendering into the three-dimensional structure, and
   the image processing unit renders an image obtained from the selected stream into the three-dimensional structure using the information necessary for rendering into the three-dimensional structure.
(27) The information processing apparatus according to any one of (21) to (26), in which the projection system includes ERP (Equirectangular projection).
(28) The information processing apparatus according to any one of (21) to (27), in which the projection system includes CMP (Cubemap projection).
(29) The information processing apparatus according to any one of (21) to (28), in which the file includes information associated with the projection extension as information for each stream of the image encoded data.
(30) The information processing apparatus according to (29), in which
   the file is an ISOBMFF (International Organization for Standardization Base Media File Format) file, and
   the information associated with the projection extension is stored in Projected Omnidirectional Video Box of the ISOBMFF file.
(31) The information processing apparatus according to (30), in which the information associated with projection extension includes Projection_Enhancement_Box which is stored in the Projected Omnidirectional Video Box and indicates that the projection extension is applied by exhibiting the presence of the Projection Enhancement Box.
(32) The information processing apparatus according to (31), in which the information associated with the projection extension includes enhancement_type stored in the Projection_Enhancement_Box and indicating a type of the applied projection extension.
(33) The information processing apparatus according to (32), in which the information associated with the projection extension includes information stored in the Projection_Enhancement_Box and necessary for rendering into the three-dimensional structure for each type of the projection extension.
(34) The information processing apparatus according to any one of (29) to (33), in which
   the file is an ISOBMFF (International Organization for Standardization Base Media File Format) file, and
   the information associated with the projection extension includes a box stored in the ISOBMFF file and dedicated for a type of the projection extension.
(35) An information processing method including:
   acquiring a file that includes information associated with projection extension as an extension method of a projection system for mapping, on a single plane, a three-dimensional structure image as an image projected on a three-dimensional structure, and includes image encoded data indicating an encoded projection planar image produced by mapping, on the plane, the three-dimensional structure image by the projection system to which the projection extension is applied; and
   selecting a stream of the image encoded data on the basis of the information associated with the projection extension and included in the acquired file.
(41) An information processing apparatus including:
   a file generation unit that generates a file that includes information associated with image quality of a projection planar image produced by mapping, on a single plane, a three-dimensional structure image by a projection system to which projection extension is applied, the projection extension corresponding to projection extension as an extension method of a projection system for mapping, on the plane, the three-dimensional structure image as an image projected on a three-dimensional structure, and includes image encoded data indicating the encoded projection planar image.
(42) The information processing apparatus according to (41), in which the information associated with the image quality includes information associated with quality ranking.
(43) The information processing apparatus according to (42), in which the information associated with the Quality ranking includes information associated with Quality ranking for each region of a nested structure.
(44) The information processing apparatus according to (43), in which
   the file is an ISOBMFF (International Organization for Standardization Base Media File Format) file, and
   the information associated with the Quality ranking includes Sphere_Region_Quality_Ranking_Box.
(45) The information processing apparatus according to (43) or (44), in which
   the file is an ISOBMFF (International Organization for Standardization Base Media File Format) file, and
   the information associated with the Quality ranking includes 2D_Region_Quality_Ranking_Box.
(46) The information processing apparatus according to any one of (43) to (45), in which the information associated with the Quality ranking includes information associated with overlap between the regions.
(47) The information processing apparatus according to (46), in which the information associated with the overlap between the regions includes information indicating the presence or absence of overlap between the regions of an entire image.
(48) The information processing apparatus according to (46) or (47), in which the information associated with the overlap between the regions includes information indicating the presence or absence of overlap between a region corresponding to the information and a different region.
(49) The information processing apparatus according to any one of (46) to (48), in which the information associated with the overlap between the regions includes information indicating the number of different regions overlapped with a region corresponding to the information.
(50) The information processing apparatus according to any one of (46) to (49), in which the information associated with the overlap between the regions includes information indicating a different region overlapped with a region corresponding to the information.
(51) The information processing apparatus according to (42), in which the information associated with the Quality ranking includes information associated with only Quality ranking of highest image quality and Quality ranking of lowest image quality.
(52) The information processing apparatus according to (51), in which the information associated with the Quality ranking further includes information indicating whether information associated with only the Quality ranking of the highest image quality and the Quality ranking of the lowest image quality is included.
(53) The information processing apparatus according to (42), in which
   the information associated with the Quality ranking includes
   information associated with only Quality ranking of highest image quality, and
   Quality ranking that has a value indicating that Quality ranking of a corresponding region is not defined.
(54) The information processing apparatus according to any one of (41) to (53), in which the information associated with the image quality includes information associated with an image quality increase region having higher image quality than image quality of a different region.
(55) The information processing apparatus according to (54), in which
   the file is an ISOBMFF (International Organization for Standardization Base Media File Format) file, and
   the information associated with the image quality increase region includes viewport_type that indicates an attribute of the image quality increase region and stored in Quality Emphasized Viewport Information Box in Projected Omnidirectional Video Box of the ISOBMFF file.
(56) The information processing apparatus according to (54) or (55), in which
   the file is an ISOBMFF (International Organization for Standardization Base Media File Format) file, and
   the information associated with the image quality increase region includes flag information that is stored in RcvpInfoBox of recommended viewport timed metadata of the ISOBMFF file, and indicates whether the image quality increase region and a region corresponding to a recommended attribute match each other.
(57) The information processing apparatus according to any one of (54) to (56), in which
   the file is an ISOBMFF (International Organization for Standardization Base Media File Format) file, and
   the information associated with the image quality increase region includes reference_type that is included in a track reference associating a track of recommended viewport timed metadata and a track of an omnidirectional video, and has a predetermined value indicating matching between a recommended viewport signaled in timed metadata and an image quality increase region of the omnidirectional video.
(58) The information processing apparatus according to any one of (41) to (57), in which a type of the projection extension is eccentric spherical mapping.
(59) An information processing method including:
   generating a file that includes information associated with image quality of a projection planar image produced by mapping, on a single plane, a three-dimensional structure image by a projection system to which projection extension is applied, the projection extension corresponding to projection extension as an extension method of a projection system for mapping, on the plane, the three-dimensional structure image as an image projected on a three-dimensional structure, and includes image encoded data indicating the encoded projection planar image.
(61) An information processing apparatus including:
   a file acquisition unit that acquires a file that includes information associated with image quality of a projection planar image produced by mapping, on a single plane, a three-dimensional structure image by a projection system to which projection extension is applied, the projection extension corresponding to projection extension as an extension method of a projection system for mapping, on the plane, the three-dimensional structure image as an image projected on a three-dimensional structure, and includes image encoded data indicating the encoded projection planar image; and
   an image processing unit that selects a stream of the image encoded data on the basis of the information associated with the image quality of the projection planar image and included in the file acquired by the file acquisition unit.
(62) The information processing apparatus according to (61), in which
   information associated with the image quality includes information associated with Quality ranking, and
   the image processing unit is configured to select the stream on the basis of the information associated with the Quality ranking.
(63) The information processing apparatus according to (62), in which the information associated with the Quality ranking includes information associated with Quality ranking for each region of a nested structure.
(64) The information processing apparatus according to (63), in which
   the file is an ISOBMFF (International Organization for Standardization Base Media File Format) file, and
   the information associated with the Quality ranking includes Sphere_Region_Quality_Ranking_Box.
(65) The information processing apparatus according to (63) or (64), in which
   the file is an ISOBMFF (International Organization for Standardization Base Media File Format) file, and
   the information associated with the Quality ranking includes 2D_Region_Quality_Ranking_Box.
(66) The information processing apparatus according to any one of (63) to (65), in which
   the information associated with the Quality ranking includes information associated with overlap between the regions, and
   the image processing unit selects the stream on the basis of the information associated with the overlap of the regions.
(67) The information processing apparatus according to (66), in which the information associated with the overlap between the regions includes information indicating the presence or absence of overlap between the regions of an entire image.
(68) The information processing apparatus according to (66) or (67), in which the information associated with the overlap between the regions includes information indicating the presence or absence of overlap between a region corresponding to the information and a different region.
(69) The information processing apparatus according to any one of (66) to (68), in which the information associated with the overlap between the regions includes information indicating the number of different regions overlapped with a region corresponding to the information.
(70) The information processing apparatus according to any one of (66) to (69), in which the information associated with the overlap between the regions includes information indicating a different region overlapped with a region corresponding to the information.
(71) The information processing apparatus according to any one of (62), in which the information associated with the Quality ranking includes information associated with only Quality ranking of highest image quality and Quality ranking of lowest image quality.
(72) The information processing apparatus according to (71), in which the information associated with the Quality ranking further includes information indicating whether information associated with only the Quality ranking of the highest image quality and the Quality ranking of the lowest image quality is included.
(73) The information processing apparatus according to (62), in which
   the information associated with the Quality ranking includes
   information associated with Quality ranking of highest image quality, and
   Quality ranking that has a value indicating that Quality ranking of a corresponding region is not defined.
(74) The information processing apparatus according to any one of (61) to (73), in which
   the information associated with the image quality includes information associated with an image quality increase region having higher image quality than image quality of a different region, and
   the image processing unit is configured to select the stream on the basis of the information associated with the image quality increase region.
(75) The information processing apparatus according to (74), in which
   the file is an ISOBMFF (International Organization for Standardization Base Media File Format) file, and
   the information associated with the image quality increase region includes viewport_type indicating an attribute of the image quality increase region and stored in Quality Emphasized Viewport Information Box in Projected Omnidirectional Video Box of the ISOBMFF file.
(76) The information processing apparatus according to (74) or (75), in which
   the file is an ISOBMFF (International Organization for Standardization Base Media File Format) file, and
   the information associated with the image quality increase region includes a flag information that is stored in RcvpInfoBox of recommended viewport timed metadata of the ISOBMFF file, and indicates whether the image quality increase region and a region corresponding to a recommended attribute match each other.
(77) The information processing apparatus according to any one of (74) to (76), in which
   the file is an ISOBMFF (International Organization for Standardization Base Media File Format) file, and
   the information associated with the image quality increase region includes reference_type that is included in a track reference associating a track of recommended viewport timed metadata and a track of an omnidirectional video, and has a predetermined value indicating matching between a recommended viewport signaled in timed metadata and an image quality increase region of the omnidirectional video.
(78) The information processing apparatus according to any one of (61) to (77), in which a type of the projection extension is eccentric spherical mapping.
(79) An information processing method including:
   acquiring a file that includes information associated with image quality of a projection planar image produced by mapping, on a single plane, a three-dimensional structure image by a projection system to which projection extension is applied, the projection extension corresponding to projection extension as an extension method of a projection system for mapping, on the plane, the three-dimensional structure image as an image projected on a three-dimensional structure, and includes image encoded data indicating the encoded projection planar image; and
   selecting a stream of the image encoded data on the basis of the information associated with the image quality of the projection planar image and included in the acquired file.
(81) An information processing apparatus including:
   a file generation unit that generates a file that includes information associated with an offset of projection of an image to a three-dimensional structure in correspondence with projection extension as an extension method of a projection system for mapping, on a single plane, a three-dimensional structure image as an image projected on the three-dimensional structure, and includes image encoded data indicating an encoded projection planar image produced by mapping the three-dimensional structure image on the plane by a projection system to which the projection extension is applied.
(82) The information processing apparatus according to (81), in which the information associated with the offset includes information associated with a direction of the offset and a size of the offset.
(83) The information processing apparatus according to (82), in which the information associated with the direction of the offset includes information associated with an azimuth angle of the direction of the offset and information associated with an elevation angle of the direction of the offset.
(84) The information processing apparatus according to any one of (81) to (83), in which the information associated with the offset is fixed in a stream of the image encoded data.
(85) The information processing apparatus according to (84), in which the file generation unit generates the file that includes information associated with the offset as information for each stream of the image encoded data.
(86) The information processing apparatus according to (85), in which
   the file is an ISOBMFF (International Organization for Standardization Base Media File Format) file, and
   the information associated with the offset includes offset_azimuth indicating the azimuth angle of the direction of the offset, offset_elevation indicating the elevation angle of the direction of the offset, and offset_value indicating the size of the offset, each stored in Projection Enhancement Box in Projected Omnidirectional Video Box of the ISOBMFF file.
(87) The information processing apparatus according to any one of (81) to (83), in which the information associated with the offset dynamically changes in a stream of the image encoded data.
(88) The information processing apparatus according to (87), in which
   the file is an ISOBMFF (International Organization for Standardization Base Media File Format) file, and
   the information associated with the offset is stored in Supplemental Enhancement information message.
(89) The information processing apparatus according to (87) or (88), in which
   the file is an ISOBMFF (International Organization for Standardization Base Media File Format) file, and
   the information associated with the offset is stored in timed metadata.
(90) The information processing apparatus according to any one of (87) to (89), in which
   the file is an ISOBMFF (International Organization for Standardization Base Media File Format) file, and
   the information associated with the offset is stored in Sample Group Entry.
(91) The information processing apparatus according to any one of (87) to (90), in which the information associated with the offset includes information indicating whether the information associated with the offset dynamically changes in the stream.
(92) The information processing apparatus according to any one of (81) to (91), in which a type of the projection extension is eccentric spherical mapping.
(93) An information processing method including: generating a file that includes information associated with an offset of projection of an image to a three-dimensional structure in correspondence with projection extension as an extension method of a projection system for mapping, on a single plane, a three-dimensional structure image as an image projected on the three-dimensional structure, and includes image encoded data indicating an encoded projection planar image produced by mapping the three-dimensional structure image on the plane by a projection system to which the projection extension is applied.
(101) An information processing apparatus including:
   a file acquisition unit that acquires a file that includes information associated with an offset of projection of an image to a three-dimensional structure in correspondence with projection extension as an extension method of a projection system for mapping, on a single plane, a three-dimensional structure image as an image projected on the three-dimensional structure, and includes image encoded data indicating an encoded projection planar image produced by mapping the three-dimensional structure image on the plane by a projection system to which the projection extension is applied; and
   an image processing unit that renders the projection planar image acquired from the image encoded data into a three-dimensional structure on the basis of the information associated with the offset included in the file acquired by the file acquisition unit.
(102) The information processing apparatus according to (101), in which
   the information associated with the offset includes information associated with a direction of the offset and information associated with a size of the offset, and
   the image processing unit performs the rendering on the basis of the information associated with the direction of the offset and the information associated with the size of the offset.
(103) The information processing apparatus according to (102), in which the information associated with the direction of the offset includes information associated with an azimuth angle of the direction of the offset and information associated with an elevation angle of the direction of the offset.
(104) The information processing apparatus according to any one of (101) to (103), in which the information associated with the offset is fixed in a stream of the image encoded data.
(105) The information processing apparatus according to (104), in which the file includes information associated with the offset as information for each stream of the image encoded data.
(106) The information processing apparatus according to (105), in which
   the file is an ISOBMFF (International Organization for Standardization Base Media File Format) file, and
   the information associated with the offset includes offset_azimuth indicating the azimuth angle of the direction of the offset, offset_elevation indicating the elevation angle of the direction of the offset, and offset_value indicating the size of the offset, each stored in Projection Enhancement Box in Projected Omnidirectional Video Box of the ISOBMFF file.
(107) The information processing apparatus according to any one of (101) to (103), in which the information associated with the offset dynamically changes in a stream of the image encoded data.
(108) The information processing apparatus according to (107), in which
   the file is an ISOBMFF (International Organization for Standardization Base Media File Format) file, and
   the information associated with the offset is stored in Supplemental Enhancement information message.
(109) The information processing apparatus according to (107) or (108), in which
   the file is an ISOBMFF (International Organization for Standardization Base Media File Format) file, and
   the information associated with the offset is stored in timed metadata.
(110) The information processing apparatus according to any one of (107) to (109), in which
   the file is an ISOBMFF (International Organization for Standardization Base Media File Format) file, and
   the information associated with the offset is stored in Sample Group Entry.
(111) The information processing apparatus according to any one of (107) to (110), in which the information associated with the offset includes information indicating whether the information associated with the offset dynamically changes in the stream.
(112) The information processing apparatus according to any one of (101) to (111), in which a type of the projection extension is eccentric spherical mapping.
(113) An information processing method including:
   acquiring a file that includes information associated with an offset of projection of an image to a three-dimensional structure in correspondence with projection extension as an extension method of a projection system for mapping, on a single plane, a three-dimensional structure image as an image projected on the three-dimensional structure, and includes image encoded data indicating an encoded projection planar image produced by mapping the three-dimensional structure image on the plane by a projection system to which the projection extension is applied; and
   rendering the projection planar image acquired from the image encoded data into a three-dimensional structure on the basis of the information associated with the offset included in the acquired file.
(121) An information processing apparatus including:
   a file generation unit that generates a control file that includes information associated with projection extension as an extension method of a projection system for mapping, on a single plane, a three-dimensional structure image as an image projected on a three-dimensional structure, the control file being used for distribution control of image encoded data indicating an encoded projection planar image produced by mapping, on the plane, the three-dimensional structure image by a projection system to which the projection extension is applied.
(122) The information processing apparatus according to (121), in which the information associated with the projection extension includes information indicating whether the projection extension is applied.
(123) The information processing apparatus according to (121) or (122), in which the information associated with the projection extension includes information indicating a type of the applied projection extension.
(124) The information processing apparatus according to (123), in which the type of the projection extension includes EAC (Equi-Angular Cubemap).
(125) The information processing apparatus according to (123) or (124), in which the type of the projection extension is eccentric spherical mapping.
(126) The information processing apparatus according to any one of (121) to (125), in which the information associated with the projection extension includes information necessary for rendering into the three-dimensional structure.
(127) The information processing apparatus according to any one of (121) to (126), in which the projection system includes ERP (Equirectangular projection).
(128) The information processing apparatus according to any one of (121) to (127), in which the projection system includes CMP (Cubemap projection).
(129) The information processing apparatus according to any one of (121) to (128), in which the file generation unit generates the control file that includes information associated with the projection extension as information for each stream of the image encoded data.
(130) The information processing apparatus according to claim (129), in which
   the control file is an MPD (Media Presentation Description) file, and
   the information associated with the projection extension includes omaf:@enhancement_type that is an attribute value indicating a type of the applied projection extension type and included in a Projection enhancement descriptor defined in the MPD file.
(131) The information processing apparatus according to (130), in which the information associated with the projection extension further includes omaf:@projection_type that is an attribute value indicating whether or not projection extension is applied and included in a Projection format descriptor defined in the MPD file.
(132) An information processing method including:
   generating a control file that includes information associated with projection extension as an extension method of a projection system for mapping, on a single plane, a three-dimensional structure image as an image projected on a three-dimensional structure, the control file being used for distribution control of image encoded data indicating an encoded projection planar image produced by mapping, on the plane, the three-dimensional structure image by a projection system to which the projection extension is applied.
(141) An information processing apparatus including:
   a file acquisition unit that acquires a control file that includes information associated with projection extension as an extension method of a projection system for mapping, on a single plane, a three-dimensional structure image as an image projected on a three-dimensional structure, the control file being used for distribution control of image encoded data indicating an encoded projection planar image produced by mapping, on the plane, the three-dimensional structure image by a projection system to which the projection extension is applied; and
   an image processing unit that selects a stream of the image encoded data on the basis of the information associated with the projection extension and included in the control file acquired by the file acquisition unit.
(142) The information processing apparatus according to (141), in which
   the information associated with the projection extension includes information indicating whether the projection extension is applied, and
   the image processing unit is configured to identify whether the projection extension is applied on the basis of the information indicating whether the projection extension is applied, and select the stream on the basis of a result of the identification.
(143) The information processing apparatus according to (141) or (142), in which
   the information associated with the projection extension includes information indicating a type of the applied projection extension, and
   the image processing unit is configured to identify the type of the projection extension on the basis of the information indicating the type of the projection extension, and select the stream on the basis of a result of the identification.
(144) The information processing apparatus according to (143), in which the type of the projection extension includes EAC (Equi-Angular Cubemap).
(145) The information processing apparatus according to (143) or (144), in which the type of the projection extension is eccentric spherical mapping.
(146) The information processing apparatus according to any one of (141) to (145), in which
   the information associated with the projection extension includes information necessary for rendering into the three-dimensional structure, and
   the image processing unit renders an image obtained from the selected stream into the three-dimensional structure using the information necessary for rendering into the three-dimensional structure.
(147) The information processing apparatus according to any one of (141) to (146), in which the projection system includes ERP (Equirectangular projection).
(148) The information processing apparatus according to any one of (141) to (147), in which the projection system includes CMP (Cubemap projection).
(149) The information processing apparatus according to any one of (141) to (148), in which the control file includes information associated with the projection extension as information for each stream of the image encoded data.
(150) The information processing apparatus according to claim (149), in which
   the control file is an MPD (Media Presentation Description) file, and
   the information associated with the projection extension includes omaf:@enhancement_type that is an attribute value indicating a type of the applied projection extension type and included in a Projection enhancement descriptor defined in the MPD file.
(151) The information processing apparatus according to (150), in which the information associated with the projection extension includes
   omaf:@projection_type that is an attribute value indicating whether or not the projection extension is applied and included in a Projection format descriptor defined in the MPD file.
(152) An information processing method including:
   acquiring a control file that includes information associated with projection extension as an extension method of a projection system for mapping, on a single plane, a three-dimensional structure image as an image projected on a three-dimensional structure, the control file being used for distribution control of image encoded data indicating an encoded projection planar image produced by mapping, on the plane, the three-dimensional structure image by a projection system to which the projection extension is applied; and
   selecting a stream of the image encoded data on the basis of the information associated with the projection extension and included in the acquired control file.
(161) An information processing apparatus including:
   a file generation unit that generates a control file that includes information associated with image quality of a projection planar image produced by mapping, on a single plane, a three-dimensional structure image by a projection system to which projection extension is applied, the projection extension corresponding to projection extension as an extension method of a projection system for mapping, on the plane, the three-dimensional structure image as an image projected on a three-dimensional structure, the control file being used for distribution control of image encoded data indicating the encoded projection planar image.
(162) The information processing apparatus according to (161), in which the information associated with the image quality includes information associated with Quality ranking.
(163) The information processing apparatus according to (162), in which the information associated with the Quality ranking includes information associated with Quality ranking for each region of a nested structure.
(164) The information processing apparatus according to (163), in which
   the control file is an MPD (Media Presentation Description) file, and
   the information associated with the Quality ranking includes a spherical region-wise quality ranking descriptor.
(165) The information processing apparatus according to (163) or (164), in which
   the control file is an MPD (Media Presentation Description) file, and
   the information associated with the Quality ranking includes a 2D region-wise quality ranking descriptor.
(166) The information processing apparatus according to any one of (163) to (165), in which the information associated with the Quality ranking includes information associated with overlap between the regions.
(167) The information processing apparatus according to (166), in which the information associated with the overlap between the regions includes information indicating the presence or absence of overlap between the regions of an entire image.
(168) The information processing apparatus according to (166) or (167), in which the information associated with the overlap between the regions includes information indicating the presence or absence of overlap between a region corresponding to the information and a different region.
(169) The information processing apparatus according to any one of (166) to (168), in which the information associated with the overlap between the regions includes information indicating the number of different regions overlapped with a region corresponding to the information.
(170) The information processing apparatus according to any one of (166) to (169), in which the information associated with the overlap between the regions includes information indicating a different region overlapped with a region corresponding to the information.
(171) The information processing apparatus according to (162), in which the information associated with the Quality ranking includes information associated with only Quality ranking of highest image quality and Quality ranking of lowest image quality.
(172) The information processing apparatus according to (171), in which the information associated with the Quality ranking further includes information that indicates whether information associated with only the Quality ranking of the highest image quality and the Quality ranking of the lowest image quality is included.
(173) The information processing apparatus according to (162), in which
   the information associated with the Quality ranking includes
   information associated with only Quality ranking of highest image quality, and
   Quality ranking that has a value indicating that Quality ranking of a corresponding region is not defined.
(174) The information processing apparatus according to any one of (161) to (173), in which the information associated with the image quality includes information associated with an image quality increase region having higher image quality than image quality of a different region.
(175) The information processing apparatus according to (174), in which
   the control file is an MPD (Media Presentation Description) file, and
   the information associated with the image quality increase region includes omaf:@viewport_type that is an attribute value indicating an attribute of the image quality increase region and included in a Quality emphasized viewport info descriptor defined in the MPD file.
(176) The information processing apparatus according to (174) or (175), in which
   the control file is an MPD (Media Presentation Description) file, and
   the information associated with the image quality increase region includes
   omaf:@quality_emphasized_region_matching_flag that is an attribute value indicating whether the image quality increase region and a region corresponding to a recommended attribute match each other, and included in a Recommended viewport information descriptor defined in the MPD file.
(177) The information processing apparatus according to any one of (174) to (176), in which
   the control file is an MPD (Media Presentation Description) file, and
   the information associated with the image quality increase region includes @associationType that has a predetermined value indicating matching between a recommended viewport signaled in timed metadata and an image quality increase region of an omnidirectional video at the time of association between a Representation of recommended viewport timed metadata and a Representation of an omnidirectional video by @associationId and the @associationType.
(178) The information processing apparatus according to any one of (161) to (177), in which a type of the projection extension is eccentric spherical mapping.
(179) An information processing method including:
   generating a control file that includes information associated with image quality of a projection planar image produced by mapping, on a single plane, a three-dimensional structure image by a projection system to which projection extension is applied, the projection extension corresponding to projection extension as an extension method of the projection system for mapping, on the plane, the three-dimensional structure image as an image projected on a three-dimensional structure, the control file being used for distribution control of image encoded data indicating the encoded projection planar image.
(181) An information processing apparatus including:
   a file acquisition unit that acquires a control file that includes information associated with image quality of a projection planar image produced by mapping, on a single plane, a three-dimensional structure image by a projection system to which projection extension is applied, the projection extension corresponding to projection extension as an extension method of the projection system for mapping, on the plane, the three-dimensional structure image as an image projected on a three-dimensional structure, the control file being used for distribution control of image encoded data indicating the encoded projection planar image; and
   an image processing unit that selects a stream of the image encoded data on the basis of the information associated with the image quality of the projection planar image and included in the control file acquired by the file acquisition unit.
(182) The information processing apparatus according to (181), in which
   information associated with the image quality includes information associated with Quality ranking, and
   the image processing unit selects the stream on the basis of the information associated with the Quality ranking.
(183) The information processing apparatus according to (182), in which the information associated with the Quality ranking includes information associated with Quality ranking for each region of a nested structure.
(184) The information processing apparatus according to (183), in which
   the control file is an MPD (Media Presentation Description) file, and
   the information associated with the Quality ranking includes a spherical region-wise quality ranking descriptor.
(185) The information processing apparatus according to (183) or (184), in which
   the control file is an MPD (Media Presentation Description) file, and
   the information associated with the Quality ranking includes a 2D region-wise quality ranking descriptor.
(186) The information processing apparatus according to any one of (183) to (185), in which the information associated with the Quality ranking includes information associated with overlap between the regions.
(187) The information processing apparatus according to (186), in which the information associated with the overlap between the regions includes information indicating the presence or absence of overlap between the regions of an entire image.
(188) The information processing apparatus according to (186) or (187), in which the information associated with the overlap between the regions includes information indicating the presence or absence of overlap between a region corresponding to the information and a different region.
(189) The information processing apparatus according to any one of (186) to (188), in which the information associated with the overlap between the regions includes information indicating the number of different regions overlapped with a region corresponding to the information.
(190) The information processing apparatus according to any one of (186) to (189), in which the information associated with the overlap between the regions includes information indicating a different region overlapped with a region corresponding to the information.
(191) The information processing apparatus according to (182), in which the information associated with the Quality ranking includes information associated with only Quality ranking of highest image quality and Quality ranking of lowest image quality.
(192) The information processing apparatus according to (191), in which the information associated with the Quality ranking further includes information that indicates whether information associated with only the Quality ranking of the highest image quality and the Quality ranking of the lowest image quality is included.
(193) The information processing apparatus according to (182), in which
   the information associated with the Quality ranking includes
   information associated with only Quality ranking of highest image quality, and
   Quality ranking that has a value indicating that Quality ranking of a corresponding region is not defined.
(194) The information processing apparatus according to any one of (181) to (193), in which
   information associated with the image quality includes information associated with an image quality increase region having higher image quality than image quality of a different region, and
   the image processing unit selects the stream on the basis of the information associated with the image quality increase region.
(195) The information processing apparatus according to (194), in which
   the control file is an MPD (Media Presentation Description) file, and
   the information associated with the image quality increase region includes omaf:@viewport_type that is an attribute value indicating an attribute of the image quality increase region and included in a Quality emphasized viewport info descriptor defined in the MPD file.
(196) The information processing apparatus according to (194) or (195), in which
   the control file is an MPD (Media Presentation Description) file, and
   the information associated with the image quality increase region includes
   omaf:@quality_emphasized_region_matching_flag that is an attribute value indicating whether the image quality increase region and a region corresponding to a recommended attribute match each other, and included in a Recommended viewport information descriptor defined in the MPD file.
(197) The information processing apparatus according to any one of (194) to (196), in which
   the control file is an MPD (Media Presentation Description) file, and
   the information associated with the image quality increase region includes @associationType that has a predetermined value indicating matching between a recommended viewport signaled in timed metadata and an image quality increase region of an omnidirectional video at the time of association between a Representation of recommended viewport timed metadata and a Representation of an omnidirectional video by @associationId and the @associationType.
(198) The information processing apparatus according to any one of (181) to (196), in which a type of the projection extension is eccentric spherical mapping.
(199) An information processing method including:
   acquiring a control file that includes information associated with image quality of a projection planar image produced by mapping, on a single plane, a three-dimensional structure image by a projection system to which projection extension is applied, the projection extension corresponding to projection extension as an extension method of a projection system for mapping, on the plane, the three-dimensional structure image as an image projected on a three-dimensional structure, the control file being used for distribution control of image encoded data indicating the encoded projection planar image; and
   selecting a stream of the image encoded data on the basis of the information associated with the image quality of the projection planar image and included in the acquired control file.

### [Reference Signs List]

100 File generation apparatus, 101 Control unit, 102 Memory, 103 File generation unit, 111 Data input unit, 112 Data encoding and generation unit, 113 MPD file generation unit, 114 Recording unit, 115 Upload unit, 121 Preprocessing unit, 122 Encoding unit, 123 Segment file generation unit, 200 Client apparatus, 201 Control unit, 202 Memory, 203 Reproduction processing unit, 211 Measuring unit, 212 MPD file acquisition unit, 213 MPD file processing unit, 214 Segment file acquisition unit, 215 Display control unit, 216 Data analysis and decoding unit, 217 Display unit, 221 Segment file processing unit, 222 Decoding unit, 223 Display information generation unit, 900 Computer.

## Claims

1. An information processing apparatus comprising:
a file generation unit that generates a file that includes information associated with projection extension as an extension method of a projection system for mapping, on a single plane, a three-dimensional structure image as an image projected on a three-dimensional structure.

2. The information processing apparatus according to claim 1, wherein the information associated with the projection extension includes one or more of information that indicates whether the projection extension is applied, information that indicates a type of the applied projection extension, and information necessary for rendering into the three-dimensional structure.

3. The information processing apparatus according to claim 1 or 2, wherein the file generation unit generates the file that includes the information associated with the projection extension as information for each stream of image encoded data that indicates an encoded projection planar image produced by mapping the three-dimensional structure image on the plane by a projection system to which the projection extension is applied.

4. The information processing apparatus according to claim 3, wherein
the file includes an ISOBMFF (International Organization for Standardization Base Media File Format) file, and
the information associated with the projection extension is stored in Projected Omnidirectional Video Box of the ISOBMFF file.

5. An information processing method comprising:
generating a file that includes information associated with projection extension as an extension method of a projection system for mapping, on a single plane, a three-dimensional structure image as an image projected on a three-dimensional structure.

6. An information processing apparatus comprising:
a file generation unit that generates a file that includes information associated with image quality of a projection planar image produced by mapping, on a single plane, a three-dimensional structure image using a projection system to which projection extension is applied, the projection extension corresponding to projection extension as an extension method of a projection system for mapping, on the plane, the three-dimensional structure image as an image projected on a three-dimensional structure.

7. The information processing apparatus according to claim 6, wherein the information associated with the image quality includes information associated with an image quality increase region having higher image quality than image quality of a different region.

8. The information processing apparatus according to claim 7, wherein
the file includes an ISOBMFF (International Organization for Standardization Base Media File Format) file, and
the information associated with the image quality increase region includes one or more of
viewport_type indicating an attribute of the image quality increase region and stored in Quality Emphasized Viewport Information Box in Projected Omnidirectional Video Box of the ISOBMFF file,
flag information stored in RcvpInfoBox of recommended viewport timed metadata of the ISOBMFF file, and indicating whether the image quality increase region and a region corresponding to a recommended attribute match each other, and
reference_type that is included in a track reference associating a track of recommended viewport timed metadata and a track of an omnidirectional video, and has a predetermined value indicating matching between a recommended viewport signaled in timed metadata and an image quality increase region of the omnidirectional video.

9. An information processing method comprising:
generating a file that includes information associated with image quality of a projection planar image produced by mapping, on a single plane, a three-dimensional structure image using a projection system to which projection extension is applied, the projection extension corresponding to projection extension as an extension method of a projection system for mapping, on the plane, the three-dimensional structure image as an image projected on a three-dimensional structure.

10. An information processing apparatus comprising:
a file generation unit that generates a file that includes information associated with an offset of projection of an image to a three-dimensional structure in correspondence with projection extension as an extension method of a projection system for mapping, on a single plane, a three-dimensional structure image as an image projected on the three-dimensional structure.

11. An information processing method comprising:
generating a file that includes information associated with an offset of projection of an image to a three-dimensional structure in correspondence with projection extension as an extension method of a projection system for mapping, on a single plane, a three-dimensional structure image as an image projected on the three-dimensional structure.

12. An information processing apparatus comprising:
a file generation unit that generates a control file that includes information associated with projection extension as an extension method of a projection system for mapping, on a single plane, a three-dimensional structure image as an image projected on a three-dimensional structure, the control file being used for distribution control of image encoded data indicating an encoded projection planar image produced by mapping, on the plane, the three-dimensional structure image by a projection system to which the projection extension is applied.

13. The information processing apparatus according to claim 12, wherein the information associated with the projection extension includes one or more of information that indicates whether the projection extension is applied, information that indicates a type of the applied projection extension, and information necessary for rendering into the three-dimensional structure.

14. The information processing apparatus according to claim 12 or 13, wherein the file generation unit generates the control file that includes information associated with the projection extension as information for each stream of the image encoded data.

15. The information processing apparatus according to claim 14, wherein
the control file is an MPD (Media Presentation Description) file, and
the information associated with the projection extension includes omaf:@enhancement_type that is an attribute value indicating a type of the applied projection extension type and included in a Projection enhancement descriptor defined in the MPD file.

16. An information processing method comprising:
generating a control file that includes information associated with projection extension as an extension method of a projection system for mapping, on a single plane, a three-dimensional structure image as an image projected on a three-dimensional structure, the control file being used for distribution control of image encoded data indicating an encoded projection planar image produced by mapping, on the plane, the three-dimensional structure image by a projection system to which the projection extension is applied.

17. An information processing apparatus comprising:
a file generation unit that generates a control file that includes information associated with image quality of a projection planar image produced by mapping, on a single plane, a three-dimensional structure image using a projection system to which projection extension is applied, the projection extension corresponding to projection extension as an extension method of a projection system for mapping, on the plane, the three-dimensional structure image as an image projected on a three-dimensional structure, the control file being used for distribution control of image encoded data indicating the encoded projection planar image.

18. The information processing apparatus according to claim 17, wherein the information associated with the image quality includes at least either information associated with Quality ranking, or information associated with an image quality increase region having higher image quality than image quality of a different region.

19. The information processing apparatus according to claim 18, wherein
the control file is an MPD (Media Presentation Description) file,
the information associated with the Quality ranking includes at least either one of
information that indicates presence or absence of overlap between regions of an entire image, or
information indicating presence or absence of overlap between a region corresponding to the information and a different region, and
the information associated with the image quality increase region includes one or more of
omaf:@viewport_type that is an attribute value indicating an attribute of the image quality increase region and included in a Quality emphasized viewport info descriptor defined in the MPD file,
omaf:@quality_emphasized_region_matching_flag that is an attribute value indicating whether the image quality increase region and a region corresponding to a recommended attribute match each other, and included in a Recommended viewport information descriptor defined in the MPD file, and
@associationType that has a predetermined value indicating matching between a recommended viewport signaled in timed metadata and an image quality increase region of an omnidirectional video at the time of association between a Representation of recommended viewport timed metadata and a Representation of the omnidirectional video by @associationId and the @associationType.

20. An information processing method comprising:
generating a control file that includes information associated with image quality of a projection planar image produced by mapping, on a single plane, a three-dimensional structure image using a projection system to which projection extension is applied, the projection extension corresponding to projection extension as an extension method of a projection system for mapping, on the plane, the three-dimensional structure image as an image projected on a three-dimensional structure, the control file being used for distribution control of image encoded data indicating the encoded projection planar image.
